# EUROPEAN PATENT APPLICATION

(11) **EP 4 818 928 A1**
(43) Date of publication of application: **07.10.2026**
(21) Application number: 25193119.2
(22) Date of filing: 31.07.2025
(51) Int. Cl.: G06F 16/3329, G06N 20/00

(54) **MEMORY FOR COMPUTER-BASED AGENTS**

(30) Priority: 03.04.2025 US 202563782846 P; 07.04.2025 US 202563784508 P; 16.05.2025 US 202563807465 P; 16.05.2025 US 202563807372 P; 19.05.2025 US 202563808538 P; 30.06.2025 US 202519255449; 30.06.2025 US 202519255637; 30.06.2025 US 202519255565; 30.06.2025 US 202519255408; 30.06.2025 US 202519255603
(71) Applicant: Palantir Technologies Inc., Aventura, Florida 33180 (US)
(72) Inventor: ABDULMAHMOOD, Mazin, Denver, 80202 (US); SANDER, Palvinder, Denver, 80202 (US)
(74) Representative: Sayer, Robert David

(57) **Abstract**

Computer-implemented methods and systems including an agent service and a long-term memory store service that communicates with a long-term memory store comprising a knowledge graph, and that services long-term memory storage and retrieval requests from the agent service. Long-term memory retrieval requests include a query and memory types, and are serviced through determining a resulting set of nodes from the knowledge graph and aggregating associated memory content. Long-term memory storage requests include memory content and memory types, and are serviced through determining related nodes and relationships, and adding a new node with the memory content and new edges to the related nodes based on the determined relationships.

## Description

### TECHNICAL FIELD

The present disclosure relates to memory for computer-based agents, for example relating to systems and techniques for managing computational resources which may involve utilizing computer-based models. More specifically, the present disclosure relates to computerized systems and techniques for managing computational resources of artificial intelligence powered agents.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, computer-based agents (e.g., artificial intelligence ("AI") powered agents) can be deployed by computing systems to solve various problems.

### SUMMARY

The systems, methods, and devices described herein each have several aspects, no single one of which is solely responsible for its desirable attributes. Without limiting the scope of this disclosure, several non-limiting features will now be described briefly.

Software-based workflows or applications can facilitate systematic organization and automation of tasks and processes on computing systems and may streamline operations and enhance efficiency in the execution of tasks and processes. Once created or deployed, a workflow or a software application may be operated and/or updated to accomplish certain user objectives. Computer-based agents can be deployed as part of the workflow or software applications to build the workflow or software application and/or interact with the datasets used to build the workflow or software application. These agents, which may be enabled by and/or comprise large language models ("LLMs"), may be configured, programmed, or trained to perform a range of computations to solve tasks or problems or execute tools to solve the tasks or problems. An LLM-based agent can be a computer-based agent that incorporates and/or has access to one or more LLMs. The use of agents, and tools by agents, can provide substantial programmatic and processing efficiencies, and can perform intensive reviews and complex analyses. For example, the agent can use these tools to build or update an ontology, query datasets, process datasets, write to datasets, implement workflows or applications, communicate with external application programming interfaces ("APIs"), and the like. These agents can perform these operations and computations in response to user queries.

However, although there may be a plethora of information that an agent accesses and processes during a run, this information may not be accessible for future runs. Thus, learnings are not retained for future similar tasks and can cause wasted processing resources, memory, and time. More commonly, an agent may be unable to recall or have limited recall for its prior sessions or for prior sessions by other agents. An agent is typically limited to information related to an immediate or ongoing task. Furthermore, if too much information is provided to the agent, it can provide hallucinations in its results when it accesses too much information stored in the memory, as it would be using non-useful information that would affect its training. A regular LLM model operates through interpolation in a continuous latent space and generates responses based on the nearest training example in latent space. Accordingly, consistently increasing the amount of information saved to the memory with each session can have drawbacks because the accuracy also depends on the density of training samples near the input point. Furthermore, as new information is stored, older information in the memory may be given less weight by the training model, even if that older information is more relevant for a particular task. Hallucinations can occur when inputs are far from any training example, even if there are some that are relevant, which can lead to erroneous interpolation. Thus, the performance of an agent can be affected by either having too much low quality training data or by having too little training data.

The present disclosure describes systems and methods (generally collectively referred to herein as an "agentic compounding memory system" or simply a "system") that can advantageously overcome various of the technical challenges mentioned above and herein, among other technical challenges. In various implementations, the system of the present disclosure can advantageously utilize and/or implement memory for agents to maintain context and knowledge across sessions and also achieve processing and/or memory efficiencies. The system can function as discrete sets of components that can provide for combinatorial searching so that memory files function as serialized learning from prior runs. Accordingly, components can be combined, rather than finding the nearest neighbor, to solve novel tasks. The system can utilize an LLM to not just be a purely statistical pattern-matching system, but for more symbolic, component-based reasoning that builds from prior runs.

The memory of the system can include both short-term memory and long-term memory, and can include memory compounding. Compounding describes the accumulation and/or consolidation of knowledge and insights as learnings across multiple tasks and can be enabled by storing of such knowledge and insights in one or more shared memory files, and reading such knowledge and insights from the one or more memory files. This can advantageously minimize repetitive information that can slow down model training and/or operation of agents. The memory of the system can further include memory compaction of the long-term memory that can be set for different levels of details for memory storage, such as verbose, progressive, and maximal. This can generate higher quality data associated with problem-solutions, rather than statistical patterns, which would have less long-term use.

The memory of the system can be used to capture, for example, surprising learnings and regret-based information, similar to human memory. An agent may determine the knowledge and/or insights to store based on a measure of "surprise" associated with the knowledge and/or insights an agent encounters along its operation and/or task implementation path. For example, the more "surprising" an error/code generation point, the more emphasis that memory point should hold in the output synthesis (e.g., a synthesis of learnings that may be generated by the agent and committed to memory). Feedback, including user/human feedback, can also provide a measure of "surprise." The measure of surprise may be a function of the difference between information already known to the model underlying the agent and information determined during performance of a task/project (e.g., to enable performance of the task/project). Advantageously, the learnings of one agent can be shared with all other agents by compounding the learnings into memory files in a shared long-term memory.

As mentioned above, the memory of the system can also include multiple types of memory. For example, the system can include more frequently updated short-term memory (which can be contextual to a current project), and less frequently updates long-term memory (which can be the agent's understanding of novel architectures and system patterns across projects). The more frequently updated memory, which can usually be associated with a particular project, task, or computational task, may be referred to as "project specific memory" ("PSM") or short-term memory. The less frequently updated memory, which can be used, accessed, updated, and/or the like, by multiple agents and across projects, tasks, or computational tasks, may be referred to as "shared based memory" ("SBM") or long-term memory. Short-term memory may generally be associated with performance of a particular project or task, while long-term memory may generally be associated with multiple projects or tasks. Or in other words, knowledge and/or insights that may generally be useful across multiple projects or tasks may be stored in long-term memory. These multiple types of memory can enable adaptively loading relevant memories to the start of context for a task and capture the one or more task intuition paths through usage. The organization between short-term memory and long-term memory can be adjusted based on the expected reuse of context and knowledge in the future.

An agent may read from both short-term memory files and long-term memory files during performance of a project or computational task. Because long-term memory may be substantially more voluminous than short-term, the agent may only read relevant parts of long-term memory during performance of a project or task. Relevant parts of long-term memory may be determined using LLM-based analysis, semantic search, and/or the like. Furthermore, a selected mode associated with the computational task can be provided to determine the relevant long-term memory to read, and in some instances, which short-term memory should be initialized.

In various implementations, the system can include a long-term memory service which may service requests from one or more agents and/or agent services to retrieve long-term memory and/or store long-term memory. Further, the system can include a long-term memory store which may include a knowledge graph. The knowledge graph can include nodes and edges, where the nodes may store memory content, and the edges may indicate relationships among the memory content of the associated/linked nodes. Advantageously, long-term memory service may enable concurrent requests from a plurality of agents and/or agent services for storing and retrieving long-term memory. Additionally, the knowledge graph may advantageously avoid memory decay that may result from other types of memory architectures.

Advantageously, the memory can boost performance on long-form and valid inter-dependent tasks. For example, the system can include a prompting technique for memory, including for writing learnings to memory and/or for accessing learning from memory. Such memory features may be used, for example, with coding agents that are configured to write and/or generate computer programming code. The memory features can advantageously boost performance on long-form and valid inter-dependent code generation. The agent can thus advantageously take advantage of previous learnings and can thereby operate more efficiently. Such learnings can include not only that a previous task was successful, but why it was successful and how it was accomplished, thus providing reasoning-based retrieval of information, rather than only knowledge-based retrieval. Memory features and functionality of the system, as described herein, may be used for any other type of agent.

Additionally, the system may provide user interfaces that allow users to track or monitor problem-solving processes performed by agents to evaluate the soundness of steps taken, or decisions made by agents, throughout the process, or further allow users to configure agents based on various user objectives to enhance scalability and reusability of the system.

Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology.

According to various implementations, large amounts of data are automatically and dynamically calculated interactively in response to user input, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions. For example, user interaction with the interactive user interface via the inputs described herein may provide an optimized interaction with models and model-related data.

Further, the interactive and dynamic user interfaces, and computer-based interfaces, described herein are enabled by innovations in efficient interactions between the user interfaces and underlying systems and components. For example, disclosed herein are improved methods for employing agents to automatically solve complex computational tasks or problems through coordination among the agents. Advantageously, the system enables agents to coordinate (e.g., handoff a task from one agent to another) with each other to effectively solve computational tasks or problems in both time and resource efficient manners. Furthermore, information useful for processing computational tasks or solving problems can be effectively and reliably shared among agents through the system while respecting security and/or permissions defined by the system and/or users. Additionally, the system may provide user interface(s) that allow users to interact with problem solving processes performed by agents to evaluate the soundness of steps taken or decisions made by agents or further allow users to configure agents based on various user objectives to enhance scalability and reusability of the system.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on the operation of technical computer systems and electronic data stores, automatic processing of electronic data, and the like. Such features and others (e.g., processing and analysis of large amounts of electronic data, management of data migrations and integrations, and/or the like) are intimately tied to, and enabled by, computer technology, and would not exist except for computer technology. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise one or more computer-readable storage mediums or devices comprising, configured to store, and/or storing program instructions, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising one or more computer-readable storage mediums or devices, and/or one or more computer-readable storage mediums or devices, are disclosed, wherein the computer-readable storage mediums comprise, are configured to store, and/or store program instructions, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1A is a block diagram illustrating an example agent system in an example computing environment, according to various implementations of the present disclosure.
FIG. 1B is a block diagram of an example of the agent system, where the agent system can be utilized to automatically solve complex problems received from users, according to various implementations of the present disclosure.
FIG. 1C is a block diagram of an example of the agent system, where the memory settings can be used to establish the memory bank, according to various implementations of the present disclosure.
FIG. 2A illustrates an object-centric conceptual data model, according to various implementations of the present disclosure.
FIG. 2B is a block diagram illustrating an example data object, according to various implementations of the present disclosure.
FIGS. 3A-D are flowcharts depicting example methods for establishing and updating a memory bank of the agent system, according to various implementations of the present disclosure.
FIGS. 4A-C are flowcharts depicting example methods for updating long-term memory stores based on the processing of a computational task of the agent system, according to various implementations of the present disclosure.
FIGS. 5A-B are flowcharts depicting example methods for establishing the memory bank based on a memory mode of the agent system, according to various implementations of the present disclosure.
FIGS. 6, 7, 8A, 8B, 9, and 10 are illustrations of example user interfaces of the agent system, according to various implementations of the present disclosure.
FIG. 11 is a block diagram illustrating an example operation of the system, according to various implementations of the present disclosure.
FIGS. 12 is an illustration of an example user interfaces depicting a graphical user interface for memory settings of the agent system, according to various implementations of the present disclosure.
FIGS. 13A-F are illustrations of example user interfaces depicting a graphical user interface for inputting computational requests, file editing, and displaying processes and outputs of the agent system, according to various implementations of the present disclosure.
FIG. 14 is a block diagram of an example computer system consistent with various implementations of the present disclosure.
FIG. 15 is a block diagram of the agent system including a long-term memory store service, according to various implementations of the present disclosure.
FIG. 16 is a flowchart illustrating example operations of the agent system related to long-term memory retrieval, according to various implementations of the present disclosure.
FIG. 17 is a diagram illustrating an example long-term memory retrieval request of the agent system, according to various implementations of the present disclosure.
FIG. 18 is a flowchart illustrating example operations of the agent system related to long-term memory storage, according to various implementations of the present disclosure.
FIG. 19 is a diagram illustrating an example long-term memory storage request of the agent system, according to various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be conducted in a manner that achieves or optimizes one advantage or group of advantages as taught herein without necessarily achieving other aspects or advantages as may also be taught or suggested herein.

### Overview

To facilitate an understanding of the systems and methods discussed herein, several terms are described below and throughout this specification. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "computer-based agent" (or "agent," "LLM-based agent," "AI-based agent," and/or "AI agent"), as used in the present disclosure, can refer to a computational decision-making computer-based entity that is designed to be specialized at solving data analysis tasks, such as analytical and/or computational tasks or problems, and/or a computer-based entity that can execute certain tools to solve various tasks or problems. The data analysis tasks or problems that a particular agent can solve can include simple (e.g., sending a single request to a large language model ("LLM") service) or more complex tasks (e.g., chaining a set of tools behind each other in a dynamic fashion to solve a complex problem). For example, a complex data analysis task or problem can include generating a software program as requested by a user query. According to various implementations, a computer-based agent can include a system (e.g., one or more computer-based and/or software systems) in which one or more LLMs dynamically and/or iteratively direct the processes, tasks, tool usage, and/or the like, of the agent and/or one or more LLMs. A computer-based agent can include a system (e.g., one or more computer-based and/or software systems) in which one or more LLMs and/or the agent maintains control over how the agent accomplishes one or more tasks. An agent that involves and/or includes an LLM can be referred to herein as a "LLM-based agent," and an agent that involves and/or includes a computer-based model and/or AI model (e.g., including LLMs) can be referred to herein as an "AI-based agent." In various implementations, an agent can be defined and/or configured by a combination of building blocks including one or more of: (1) agent logic: a core programmatic definition on how this specific agent should interact with the available tools, configurations, and the user; (2) tools: a defined set of tools available for the specific agent; (3) guardrails: a security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs. Further details on computer-based agents are described in U.S. Pat. App. Pub. No. 2025/0110786, published April 3, 2025, and titled "AGENT OPS FRAMEWORK," the entire contents of which is hereby incorporated herein by reference in its entirety.

A "software application" (or "application") can be any computer-executable program or group of programs, scripts, routines, and/or the like, designed to perform specific tasks for users. The tasks performed can range from productivity functions, such as document processing, email management, and spreadsheet management, to entertainment, such as gaming and media playback, or other types of tasks. A software application may be built to run on various platforms, including desktop computers, mobile devices, servers, web browsers and/or the like, and they can interact with the underlying operating system to utilize hardware resources and provide a user interface for interaction. A software application may be developed using programming languages and frameworks that are suited to the target platform. A software application can be used to perform various actions (e.g., send or unsend an email, edit or update a document, or the like) on various data objects of data object types (e.g., a document data object, a log data object, an email data object, or the like).

The term "configuration" (or "settings"), as used in the present disclosure, can refer to a version-controlled specification of pointers to the building blocks of an agent and/or versions of the building blocks. For example, an agent can be configured to a specific configuration of settings that associates the agent with a specific ontology, an LLM, one or more tools, one or more accessories, or the like.

The term "coordinator" (or "agent coordinator"), as used in the present disclosure, can refer to an entity that manages interactions among other entities. For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks.

The term "tool," as used in the present disclosure, can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology, and/or a user.

"Tool information" can include information associated with a tool that is available to an agent and/or provided to an LLM, and is descriptive of and/or usable to implement the tool functionality. Tool information can indicate how data is structured, such as in an ontology. Tool information can indicate properties associated with a particular data object type, such as a data object type associated with a selected tool. Tool information can include instructions for implementing a tool. Tool information can include instructions for generating a tool call to use the tool, including instructions for formatting a tool call. In some implementations, tool information can comprise tool implementation examples for executing one or more tool operations which can include pre-defined examples, user-selected examples, user-generated examples, and/or examples that are automatically dynamically configured based on context. In various implementations, tool information can include tool definitions, which may describe the function(s) of the tool and how to execute the tool. For example, the tool definition can indicate inputs (e.g., datasets) required to call the tool. In various implementations, tool information can include tool parameters (e.g., tool settings) that dictate tool behavior. For example, this can include whether the system (e.g., an agent) can auto-execute a tool call, or whether the agent requires user authorization to execute a tool call.

The term "run," (or "task run") as used in the present disclosure, can refer to a set of operations of an agent system in performance of a task, such as one or more invocations and/or interactions with an LLM and/or data source (and/or the like). An individual run can refer to a full interaction of the user with the agent system, or a user session operated by the user. Information associated with a run can be stored by an agent system, for example as a data object defined by an ontology, to facilitate automation orientation and/or co-pilot orientation. Information associated with a run can include the initial prompt provided by the agent to an LLM, subsequent prompts received from a user and/or generated by the agent, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "accessory," as used in the present disclosure, can refer to any information, for example computer-readable information, which may be useful or necessary for agents to process tasks. An accessory may be known to be correct to an agent system. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. Example accessories may include: (a) the calculated sum of items in an inventory, (b) an identification (ID) of a document containing needed information, (c) a result of a system operation, such as creation of a new user. Accessories may be stored as Objects in an ontology or in other data formats. Accessories may be multi-modal. Accessories can be of simple types, such as string, double, integer, or the like, and can also be of more complex types, such as images, data frames, sound files, or the like. Accessories can be created by agents and/or by users of an agent system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory. In various implementations, an accessory may be a tool that is accessible by the system (e.g., accessible by an agent) in response to a tool call, or include a tool. In various implementations, an accessory can include context.

The term "model," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A "language model" is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, and/or the like). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("LLM") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, a diffusion-based LLM/model, any combination of the foregoing or the like, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, diffusion-based model, other algorithmic processes, and/or any combination of the foregoing or the like. Similarly, while certain aspects and implementations are discussed herein with reference to use of a ML model, language model, or LLM, those aspects and implementations may be performed by any other AI model, generative AI model, generative model, NN, multimodal model, diffusion-based model, other algorithmic processes, and/or any combination of the foregoing or the like.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), Claude, Gemini, LLaMA (Large Language Model Meta AI), and BigScience Large Open-science Open-access Multilingual Language Model (BLOOM).

"User input" (or "natural language input," "user query", "user operation," and/or the like) can be any operations performed by one or more users to user interface(s) and/or other user input devices associated with a system. Such user inputs can include a term, phrase, question, query, and/or statement written in a human language (e.g., English, Chinese, Spanish, and/or the like) that is provided by a user, such as via a keyboard, mouse, touchscreen, voice recognition, and/or other input device. User input can include a task to be performed, such as by an agent and/or LLM, in whole or in part. User input can include a request for data, such as data accessed and/or processed by one or more services. User input can indicate one or more tools associated with the user request or task which may facilitate performing the task. User input can indicate one or more data object types associated with a tool. User input can indicate one or more actions associated with a tool. User input can include a user selection of a format for a response from an agent and/or LLM. User input can include a user-defined variable to which a response may be saved.

A "data processing service" (or "service" or "plug-in") can be any software and/or computer-based service that receives and/or responds to requests for data and/or data processing. Such a service may be accessible via an API that is exposed to an Agent System (and/or other remote systems) and allows data processing requests to be received via API calls from those systems (e.g., an agent). Such a service may be implemented as a plug-in. A few examples of services or plug-ins include a table search service, a filter service, an object search service, a text search service, or any other appropriate search service, indexing services, services for formatting text or visual graphics, services for generating, creating, embedding and/or managing interactive objects in a graphical user interface, services for caching data, services for writing to databases, or any other data retrieval, processing, and/or analysis function.

A "prompt" (or "natural language prompt," "model input," and/or the like) can be, for example, a term, phrase, question, and/or statement written in a human language (e.g., English, Chinese, Spanish, and/or the like), and/or other text string, that may serve as a starting point for a language model and/or other language processing. A prompt may include only a user query or may be generated based on a user query, such as by a prompt generation module (e.g., of a document search system) that supplements a user query with instructions, examples, and/or information that may improve the effectiveness (e.g., accuracy and/or relevance) of an output from the language model. The supplement to the user query can include the files stored in the memory bank. When operating in OSDK mode, the files in the memory bank can include ontology documentation, which can be based on documentation template and information indicative of an ontology. A prompt may be provided to an agent (which can include an LLM), which the agent can use to generate a response (or "model output"). The agent can generate the response by causing generation and execution of one or more search queries.

A "search query" can be, for example, an input recognizable by an agent to determine how to interact with tools. The agent can generate the response by causing generation of the search query, which can include portions of the prompt provided to the agent, and causing execution of the search query to access data objects of the data object types defined by the ontology documentation. The search query can act as an action plan, and/or be used to determine an action plan, that provides steps on how the agent can solve the computational tasks, data analysis tasks, or problems provided in the prompt. The agent can generate one or more search queries to solve the computational tasks, data analysis tasks, or problems. If the output of the search query does not result in solving the computational tasks, data analysis tasks, or problems or if there is an unexpected error result (such as a result differing from the action plan), then the result can be used in causing generation of another search query. The result and computational process caused by the agent can be displayed to the user, such as for troubleshooting. In some instances, the system can adjust what is displayed to the user to be a term, phrase, question, and/or statement written in a human language (e.g., English, Chinese, Spanish, and/or the like), and/or other text string.

"Context" (or "Context Items") can be any information associated with user inputs, prompts, responses, and/or the like that are generated and/or communicated to/from the user, the agent system, an agent, the LLM, the data processing services, and/or any other device or system. For example, context may include a conversation history of all of the user inputs, prompts, and responses of a user session. Context may be provided to an LLM to help an LLM understand the meaning of and/or to process a prompt, such as a specific piece of text within a prompt. Context can include information associated with a user, user session, or some other characteristic, which may be stored and/or managed by a context module. Context may include all or part of a conversation history from one or more sessions with the user (e.g., a sequence of user prompts and orchestrator selector responses or results, and/or user selections (e.g., via a point and click interface or other graphical user interface). Thus, context may include one or more of: previous analyses performed by the user, previous prompts provided by the user, previous conversation of the user with the language model, schema of data being analyzed, a role of the user, a context of the data processing system (e.g., the field), and/or other contextual information.

A context module may provide all or only a relevant portion of context to a selection module for use in selecting one or more plug-ins and/or service orchestrators (e.g., configured to generate requests to plug-ins) for use in generating a properly formatted service request. Context can include tool information. Context can include tool implementation examples. In various implementations, context may include identification of services and parameters of prior operations, but not underlying data that was accessed or retrieved by the service (e.g., use of graph visualization service and graph parameters without indicating the data illustrated in the graph). In various implementations, context may include some or all of the underlying data accessed or retrieved by the service.

An "ontology" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An organization may use an ontology to model a view on what objects exist in the world, what their properties are, and how they are related to each other. An ontology may be user-defined, computer-defined, or some combination of the two. An ontology may include hierarchical relationships among data object types. An organization may use an ontology to model a view of, or provide a template for, what objects exist in the world, what their properties are, and how they are related to each other.

A "data object" (or "object" or "data object instance") can be a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The object's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A "data object type" (or "object type") can be a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

"Ontology documentation" can be, for example, instructions, examples, and/or information that may improve the effectiveness (e.g., accuracy and/or relevance) of the agent, and that can supplement the user query to generate a prompt. The ontology documentation can be included as a part of the files in either of the short-term memory or long-term memory when operating in an OSDK mode. Ontology documentation can be based on documentation template and information indicative of an ontology. This information indicative of the ontology can include indications of definitions of data object types of the ontology. The documentation template may not be tied to any particular ontology. The ontology documentation can be formed using the documentation template to be specific to a particular ontology by specifying the documentation template with the information indicative of the ontology.

For example, the documentation template can include instructions on how to access properties of a data object type, such as but not limited to, property names, property objects, and property types for each property associated with the data object type. This documentation template for properties of a data object type can also access these property values in particular formats, such as a markdown format. The information indicative of the ontology can be used to specify a desired ontology that the documentation template can be used to focus onto. For example, the information indicative of the ontology can include the list of data object types defined by an ontology. Accordingly, the ontology documentation for properties can be specific to the data object types defined by the ontology and provide instructions on how to access properties associated with each of those specific data object types. The documentation template can include, but is not limited to, information on how to access search around methods on an ontology, example values for data object types and properties, and/or the like. The ontology documentation can include some or all of the information provided by the documentation template, but specified to be particular to a desired ontology.

The ontology documentation can thus be used to return data objects, properties, relationships, and/or the like that are associated with the ontology documentation. The documentation template and information indicative of the ontology can be generated, in some instances automatically, using an ontology software development kit ("OSDK"). The documentation template, and the ontology documentation, can be in different languages, such as TypeScript, Java, cURL, Python, and/or the like. This allows for an agent to select a preferred language to communicate with and access the data objects. The selected language can be determined either manually or automatically. The information on how to access data object types can differ depending on the language, including how the data object are returned. For example, the selected language can be based on a preferred platform used to retrieve the data objects. The ontology documentation can include definitions, functions, example API-calls, and/or the like, for interacting with (e.g., accessing, writing to, modifying, deleting, and/or the like) the ontology, data that is related to and/or defined by the ontology, and/or the like. The ontology documentation can provide examples of how particular types of data objects can be accessed or adjusted. For example, the ontology documentation can include, but is not limited to, describing how to read properties of a data object type, how to read the relationship between two data object types, how to input a property for a data object of a data object type, how to store a data object of a data object type, how to generate a new data object type to the ontology, how to compare properties of data objects of the same data object type, how to compare similar properties of data objects of different data object types, and/or the like. These examples can be used for an agent to determine how it can run a task.

An ontology software development kit ("OSDK") can be, for example, a plug-in, a library, code, documentation, and/or the like, which can provide and/or enable, within software development environments, applications, systems, and/or the like, connections to and/or communications with an ontology and/or ontology-related data. The OSDK can include documentation on how to use an API, and/or may be used to define an API, for interacting with (e.g., accessing, writing to, modifying, deleting, and/or the like) the ontology, data that is related to and/or defined by the ontology, and/or the like. The OSDK can include information that is usable by an agent or human agent to interact with the ontology or data in a software development environment. Accordingly, the OSDK can provide information that an agent can use for enabling an application to have such functionality. Ontology documentation may be based on (including may be generated based on) documentation templates that are part of the OSDK to be specific to a particular ontology based on the information indicative of the ontology. The information indicative of the ontology can be included as part of the OSDK, or separate from the OSDK. The ontology documentation can provide supplemental information that provides the agent with an understanding of the ontology and the data objects in relation with the prompt and search query. Furthermore, the OSDK can provide the agent with information on how to interact and adjust databases storing data objects or updating ontology. Agents may operate using a design-specific language ("DSL"). However, a DSL may reduce the expressivity of agents (and thereby the agency of the agent). The OSDK can advantageously enable the agent to write and operate in any language it prefers, such as any programming language (e.g., Python) and to fully wield and use the ontology. The OSDK can become a universal orchestration language that can let the entire agent life cycle access, in a read and write way, the entirety of the ontology. Further details on OSDK are described in U.S. Pat. App. No. 19/189,816, filed April 25, 2025, and titled "ONTOLOGY BUILD AUTOMATION TOOL," which is incorporated by reference in its entirety.

A "data store" can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A "database" can be any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

"Memory" can be information stored in a database, data store, and/or the like, based on current and/or prior runs by an agent. An agent may read from memory files during performance of a project or computational task. For example, the system can include more frequently updated short-term memory (which can be contextual to a current project), and less frequently updates long-term memory (which can be the agent's understanding of novel architectures and system patterns across projects). The more frequently updated memory, which can usually be associated with a particular project, task, or computational task, may be referred to as "project specific memory" ("PSM") or short-term memory. The less frequently updated memory, which can be used, accessed, updated, and/or the like, by multiple agents and across projects, tasks, or computational tasks, may be referred to as "shared based memory" ("SBM") or long-term memory. Short-term memory may generally be associated with performance of a particular project or task, while long-term memory may generally be associated with multiple projects or tasks. Or in other words, knowledge and/or insights that may generally be useful across multiple projects or tasks may be stored in long-term memory. Based on a particular task, the files within the memory initialized and added to a directory by the agent can differ. Because long-term memory may be substantially more voluminous than short-term memory, the agent may only read relevant parts of long-term memory during performance of a project or task. Relevant parts of long-term memory may be determined using LLM-based analysis, semantic search, and/or the like. The memory of the system can include compounding. Compounding describes the accumulation and/or consolidation of knowledge and insights as learnings across multiple tasks, and can be enabled by storing of such knowledge and insights in one or more shared memory files, and reading such knowledge and insights from the one or more memory files. Advantageously, the learnings of one agent can be shared with all other agents by compounding the learnings into memory files in a shared long-term memory.

As mentioned above, the present disclosure describes systems and methods (generally collectively referred to herein as an "agentic compounding memory system" or simply a "system") that can advantageously overcome various of the technical challenges mentioned above and herein, among other technical challenges. In various implementations, the system of the present disclosure can advantageously utilize and/or implement memory for agents to maintain context and knowledge across sessions and also achieve processing and/or memory efficiencies. The memory of the system can include both short-term memory and long-term memory, and can include memory compounding. Compounding describes the accumulation and/or consolidation of knowledge and insights as learnings across multiple tasks, and can be enabled by storing of such knowledge and insights in one or more shared memory files, and reading such knowledge and insights from the one or more memory files. This can advantageously minimize repetitive information that can slow down model training and/or operation of agents. The memory of the system can further include memory compaction of the long-term memory that can be set for different levels of details for memory storage, such as verbose, progressive, and maximal. This can generate higher quality data associated with problem-solutions, rather than statistical patterns, which would have less long-term use.

The memory of the system can be used to capture, for example, surprising learnings and regret-based information, similar to human memory. An agent may determine the knowledge and/or insights to store based on a measure of "surprise" associated with the knowledge and/or insights an agent encounters along its operation and/or task implementation path. For example, the more "surprising" an error/code generation point, the more emphasis that memory point should hold in the output synthesis (e.g., a synthesis of learnings that may be generated by the agent and committed to memory). Feedback, including user/human feedback, can also provide a measure of "surprise." The measure of surprise may be a function of the difference between information already known to the model underlying the agent and information determined during performance of a task/project (e.g., to enable performance of the task/project). Advantageously, the learnings of one agent can be shared with all other agents by compounding the learnings into memory files in a shared long-term memory.

As mentioned above, the memory of the system can also include multiple types of memory. For example, the system can include more frequently updated short-term memory (which can be contextual to a current project), and less frequently updates long-term memory (which can be the agent's understanding of novel architectures and system patterns across projects). The more frequently updated memory, which can usually be associated with a particular project, task, or computational task, may be referred to as "project specific memory" ("PSM") or short-term memory. The less frequently updated memory, which can be used, accessed, updated, and/or the like, by multiple agents and across projects, tasks, or computational tasks, may be referred to as "shared based memory" ("SBM") or long-term memory. Short-term memory may generally be associated with performance of a particular project or task, while long-term memory may generally be associated with multiple projects or tasks. Or in other words, knowledge and/or insights that may generally be useful across multiple projects or tasks may be stored in long-term memory. These multiple types of memory can enable adaptively loading relevant memories to the start of context for a task, and capture the one or more task intuition paths through usage. The organization between short-term memory and long-term memory can be adjusted based on the expected reuse of context and knowledge in the future.

An agent may read from both short-term memory files and long-term memory files during performance of a project or computational task. Because long-term memory may be substantially more voluminous than short-term, the agent may only read relevant parts of long-term memory during performance of a project or task. Relevant parts of long-term memory may be determined using LLM-based analysis, semantic search, and/or the like. Furthermore, a selected mode associated with the computational task can be provided to determine the relevant long-term memory to read, and in some instances, which short-term memory should be initialized.

In various implementations, the system can include a long-term memory service which may service requests from one or more agents and/or agent services to retrieve long-term memory and/or store long-term memory. Further, the system can include a long-term memory store which may include a knowledge graph. The knowledge graph can include nodes and edges, where the nodes may store memory content, and the edges may indicate relationships among the memory content of the associated/linked nodes. Advantageously, long-term memory service may enable concurrent requests from a plurality of agents and/or agent services for storing and retrieving long-term memory. Additionally, the knowledge graph may advantageously avoid memory decay that may result from other types of memory architectures.

Advantageously, the memory can boost performance on long-form and valid inter-dependent tasks. For example, the system can include a prompting technique for memory, including for writing learnings to memory and/or for accessing learning from memory. Such memory features may be used, for example, with coding agents that are configured to write and/or generate computer programming code. The memory features can advantageously boost performance on long-form and valid inter-dependent code generation. The agent can thus advantageously take advantage of previous learnings and can thereby operate more efficiently. Such learnings can include not only that a previous task was successful, but why it was successful and how it was accomplished, thus providing reasoning-based retrieval of information, rather than only knowledge-based retrieval. Memory features and functionality of the system, as described herein, may be used for any other type of agent.

For example, the system can include various computing functionality and primitives (which can include, for example, various tools), on which can sit the ontology, on which can sit the one or more agents (including one or more coordinators). The system can include pathways to onboard AI/LLM-based agents, including providing a level of agency, providing the right tools, and providing guardrails and guidance for assessing the effectiveness with which they are using the tools.

The present disclosure further includes various processes, functionality, and interactive graphical user interfaces related to the system. Advantageously, the system can optionally enable agents to coordinate (e.g., handoff a task from one agent to another) with each other to effectively solve computational tasks or problems in both time and resource efficient manners. Optionally, information useful for processing tasks or solving problems can be effectively and reliably shared among agents through the system while respecting security and/or permissions defined by the system and/or users. Further, the system may optionally provide user interface(s) that allow users to track or monitor computational task or problem-solving processes went through by agents to evaluate the soundness of steps taken or decisions made by agents. The system may further optionally allow users to configure agents based on various user objectives to enhance scalability and reusability of the system.

### Agent Configurations

Computer-based agents deployed in an agent system (or AI system) may be configurable based on various settings or parameters. Agents in the system may share one or more common building blocks (e.g., an agent logic that defines how agents operate and/or interact with each other, tools, and/or users) but may be configured to various configurations by the system and/or users. In some implementations, an agent can be configured or reconfigured to be associated with various ontologies, large language models (LLMs), tools, accessories, storages, or the like. For example, a first configuration of an agent may associate the agent with a first set of ontologies, LLMs, tools, accessories, and storages and a second configuration of the agent may associate the agent with a second set of ontologies, LLMs, tools, accessories, and storages. The system may flexibly (e.g., based on user demands) reconfigure an agent from one configuration to another configuration. Advantageously, reconfigurable agents enable the system to swap or switch agent configurations for achieving various objectives. For example, the system may feed the same input(s) to two agents that are configured the same except LLMs utilized by the two agents to evaluate or benchmark performances of the LLMs. As another example, when an agent is tasked to solve a problem related to a new subject matter, the system and/or users may reconfigure the agent to utilize an ontology that is created or updated based on the new subject matter.

In some implementations, configurations of an agent can be version controlled by the system. For example, the system may assign version numbers (e.g., a string of text) to corresponding configurations of agents and keep track of configurations of agents using version numbers. More specifically, a first configuration of an agent may be assigned or identified by a first version number and a second configuration of the agent may be assigned or identified by a second version number. Additionally and/or optionally, the system may assign identification numbers (IDs) to components (e.g., one or more ontologies, LLMs, tools, and storages) of configurations of agents. For example, a first LLM and a first ontology in a first configuration of a first agent may be assigned a first LLM ID and a first ontology ID, and a second LLM and a second ontology in a second configuration of a second agent may be assigned a second LLM ID and a second ontology ID. Advantageously, version controlled configurations and/or IDs assigned to components of configurations may allow the system robustly and effectively track operations of agents, adapt agents among various configurations, or contrast strengths and weakness of an agent when operating under disparate configurations. In various implementations, the system may utilize pointers to access or point to an ontology, LLM(s), tool(s), accessory, storage(s), or one or more configurations associated with the agent.

Additionally, the system may generate and maintain a log to record events, timelines, received inputs, or generated outputs while an agent processes tasks. The log may describe events that occurred while the agent processes tasks and corresponding timestamps, inputs received from users and/or the system, and/or results generated by the agent while processing tasks. In various implementations, the log may record number of errors committed by the agent while processing tasks. Advantageously, the log may allow the system or users to effectively monitor or evaluate performances of agents for taking appropriate measures (e.g., re-train an agent for processing a particular type of task in response to monitoring a high error number from the agent while processing the particular type of task).

### Agent Handoffs

Agents may be configured to coordinate with each other to process tasks collaboratively. In some implementations, agents may coordinate with other agents by handing off tasks (e.g., a partially completed task) to other agents that are suitable or specialized in performing a next step in the tasks. For example, when an agent determines that a task which the agent is processing requires specialized capability, for example in terms of a particular ontology, LLM, tools, accessories, agent storage, or other aspects of an agent, the agent may handoff some or all of the task to another agent that has been trained or tested to efficiently solve the task. For example, a first agent may comprise settings including a first configuration that indicates or specifies that it is suitable or specialized in performing a first type or first group of tasks and less specialized in performing at least a second type or second group of tasks. For example, a second agent may comprise settings including a second configuration that indicates or specifies that it is suitable or specialized in performing the second type or second group of tasks and, possibly, that it is less specialized in performing at least the first type or first group of tasks. The first and second configurations may be provided in metadata or other formats stored by, or at least accessible to, the first and second agents. The term less specialized may refer to an agent being capable of performing a type of task but in a less processing efficient manner than a more specialized agent, for example because it requires extra data or a manual intervention by a user. For example, for a video processing task involving both video and audio content, a first agent may comprise a first configuration that indicates that it is more capable of, or specialized for, performing image and video processing tasks (e.g., because it comprises or has access to various types of image-based models, libraries, and/or codecs) but less capable of, or specialized for, performing related audio processing tasks relative to a second agent. For example, the second agent may have a configuration that indicates that it has access to various types of audio-based models, libraries and./or codecs that means that the second agent will be able to handle the audio processing in a more computationally efficient manner than the first agent which handles the image/video processing tasks better than the second agent. For example, the first agent may know in advance, or have access to, the configuration of the second agent, and can determine based on, for example, the metadata of said configuration that it should hand-off the audio processing task (or sub-task) to the second agent. The resulting processed video and audio data can be merged or combined by either the first agent, the second agent or a third agent. Other use cases can be envisaged other than video and/or audio processing, for example tasks involving two or more sub-tasks that involve different types of processing. These tasks may involve language-based tasks and sub-tasks, examples of which are given below.

In various implementations, an agent may handoff some (e.g., sub-tasks) or all of a task to one or more child agents which may specialize in processing specific types of tasks or sub-tasks. The parent-child agent relationship can be configurable. For example, an agent can be configured to have child agent(s), and the child agent(s) may be explicitly specified in a configuration of the agent, where a configuration of the child agent(s) may also explicitly specify the agent as a parent agent. As such, the parent-child agent relationship(s) can be bi-directional. An agent can be a parent of another agent, and can also be a child of still another agent. Advantageously, handing off tasks to child agents provides multiple improvements over utilizing a single and large agent to process tasks. For example, handing off sub-tasks to child agents that have been proven to process the sub-tasks efficiently enables the system to effectively process requests from users to return accurate and reliable results. Handing off tasks may further reduce the update or maintenance cost of agents of the system because updates on or migration of agents can be targeted and tailored toward subsets of agents of the system.

When an agent (or coordinator, as discussed further below) determines that handoff of a sub-task to a child agent should occur, the agent (and/or coordinator) may identify information to provide to the child agent to aid in performance of the sub-task. For example, an agent may select one or more accessories (e.g., pieces of information) that are useful for the child agent to process the sub-task, and share the one or more accessories with the child agent. The agent may determine whether an accessory can be shared with the child agent based on permission of users or the system. An accessory, once shared by the agent to the child agent, may provide useful information to the child agent in processing a task or a sub-task more efficiently without the need to discover, generate, or obtain the accessory by the child agent itself.

The system may further allow various types of handoffs depending on use cases or tasks submitted by users. For example, the system may allow blocking handoffs, where an agent may handoff a task to a child agent, pauses until receiving a result from the child agent, and then proceeds after receiving the result. As another example, the system may allow parallel handoffs, where an agent may handoff tasks in parallel to multiple child agents, and, without waiting for results from the child agents, continues to process other tasks or sub-tasks that the agent is processing without handing off. Advantageously, various handoffs schemes enable the system to more flexibly and efficiently utilize agents to process tasks based on characteristics of the tasks. In various implementations, the system may limit number of handoffs associated with task(s) or sub-task(s). For example, for some types of tasks, the system may limit the handoffs of the task that may occur at most twice (e.g., an agent can handoff the task to two child agents) or other numbers. Advantageously, limiting number of handoffs on some or all types of tasks may increase security of the system and reduce likelihood of extensive looping of tasks that may occur if a set of tasks are attempting to incrementally optimize an output.

### Agent Accessory

Accessories are information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks but may also be provided by users based on demands of users. For example, when an agent is tasked to perform statistical analysis on production data of a production facility to provide recommendation on how to increase production volume, the user may provide a spreadsheet or other data files that include production data as an accessory for the agent to process the task. Alternatively and/or optionally, accessories may be generated, discovered, synthesized, or created by agents while processing certain tasks. For example, while processing a task that needs to take into account particular information, an agent searched through on-line databases to identify a document containing the particular information and saved the particular information along with a document ID of the document as an accessory. Additionally and/or optionally, accessories may be created by agents using tools while processing tasks. For example, an accessory may be a result generated by an agent while processing a task, where the result may be utilized by the agent or other agents for processing other tasks.

To use accessories for processing tasks, agents may store accessories in memory (e.g., agent storages). To access accessories, agents may utilize pointers that point to locations in the memory where desired accessories are stored. In various implementations, accessories may be stored as data objects that are defined in one or more ontologies. An accessory can be multi-modal (e.g., including both textual and video information). An accessory can also come in different forms and types. For example, an accessory may include strings, double integers, integers, images, data frames, sound files, or the like. An agent may share accessories with other agents if sharing is permitted under the permission of the system. For example, the agent may grant other agents access to an accessory that is stored in a storage associated with the agent and provide a pointer to the accessory to other agents. Advantageously, when utilized by an agent, accessories may enrich knowledge base of the agent or increase potency of the agent.

In various implementations, the system can track a lineage of an accessory to track a basis for a generated accessory and/or whether the accessory is further utilized to generate other information. For example, the system can record a lineage of an accessory, where the lineage shows what tool(s) are utilized to generate the accessory. The lineage of the accessory may include metadata that can enable users or the system to efficiently track from where the accessory comes into being and where the accessory is used, such as which agents or tasks use the accessory (which may be one or more versions of an accessory).

In various implementations, lineages of accessories may be presented to users through interactive graphical representations that include nodes (e.g., representing accessories) and/or edges (e.g., representing connections between accessories) of graphical user interfaces (GUIs). Advantageously, the lineage of an accessory enables the system to more efficiently verify or evaluate the usefulness of the accessory. Once an accessory is stored in an agent storage, the system may further evaluate correctness or accuracy of information contained in the accessory. For example, if an agent or the system determines that the accessory contains accurate information, the agent or the system may keep the accessory in an agent storage. But if the agent or the system determines that the accessory contains inaccurate information, the agent or the system may update the accessory and/or delete the accessory from the agent storage.

Additionally and/or optionally, the system may impose a time-to-live constraint on an accessory based on characteristics of the accessory. For example, an accessory that is solely useful for processing a specific task by a specific agent may have a shorter time-to-live, and may be deleted once the specific task has been processed. As another example, an accessory that may be useful for an agent to process various tasks or for other agents may have a longer time-to-live, and may persist after the agent completes tasks using the accessory. As still another example, an accessory that is provided by a user may persist throughout or beyond an individual run, where the individual run is a full interaction of the user with the system. Advantageously, imposing time-to-live constraints on accessories may allow the system to utilize storage resources more efficiently by freeing up storage capacity that otherwise would be occupied by accessories that are no longer useful to users or the system.

### Agent Coordinator

In various implementations, the system may utilize an agent coordinator to supervise handoffs of tasks or sub-tasks among agents to ensure handoffs are robustly performed and do not interfere with processing of other tasks or sub-tasks. For example, if an agent seeks to handoff a first task to a child agent which is processing a second task and the first task requires the child agent switches from a current configuration to a different configuration, the agent coordinator may determine the handoff may adversely impact performance of the child agent and intervene to redirect the handoff to another child agent that has immediate capacity (e.g., already configured to the different configuration) to process the first task. Additionally and/or optionally, the agent coordinator may mange handoffs among agents based on input(s) from user(s). For example, upon receiving an input from a user indicating that a task is to be terminated, the agent coordinator may instruct agents that are processing the task to pause and may block handoffs of sub-tasks of the task. Advantageously, more computing resources may be released to process tasks based on user needs.

In various implementations, an agent coordinator may facilitate communications among agents, and communications between agents and users or the system. In some examples, the agent coordinator may manage, and monitor operations performed by agents. For example, the agent coordinator may pause an agent if the agent coordinator determines that the agent is committing more errors while processing a task. As another example, the agent coordinator may restart an agent in response to receiving input(s) from a user. As yet another example, the agent coordinator may prevent unexpected input from feeding into an agent if the agent coordinator determines that the unexpected input may mislead the agent to improperly process a task.

Additionally, the agent coordinator may allow bidirectional communications between agents and users or the system. In various implementations, an agent may request additional information from a user or the system after the agent starts processing a request from the user. For example, the agent may request more user inputs from the user, such as a prompt or an accessory, through the agent coordinator. As another example, the agent may request the user to perform one or more actions on the system or other systems external to the system, such as requesting the user to enter entries in a system applications and products (SAP) ordering system before the agent can further proceed with a current task. Advantageously, the bidirectional communications facilitated by the agent coordinator allows users to more efficiently work with agents to meet demands of users.

### Agent Storage

An agent storage may be utilized by an agent to store data and/or information (e.g., accessories, tools, messages, program code, data files, tables, or the like) for processing tasks. For each agent, the system may allocate an agent storage, where an agent may store data and/or information used by the agent to process tasks. For example, an agent may store accessories that are generated by the agent in an agent storage associated with the agent and share pointers that pointed to the stored accessories to other agents such that other agents can access the stored accessories. As another example, the agent may generate or create new tools (e.g., a statistical analysis tool) for processing certain tasks to the agent storage. As yet another example, the agent may be tasked to write a program code (e.g., Python code). The agent may then utilize a tool to find an application programming interface (API) endpoint for generating the program code and store the program code in the agent storage. In various implementations, an agent may have full access to an agent storage allocated to the agent but may have limited access to agent storages of other agents. Based on permissions of the system, an agent or the system may grant another agent access to parts or all of the agent storage of the agent. For example, an agent may share accessories to a child agent to which the agent handoffs a task or a sub-task.

The agent can utilize the agent storage to store a directory associated with the memory bank for its run to perform a computational task. The directory can provide the agent with access to short-term memory files and long-term memory files stored in the memory bank, which can be stored within the agent system or externally. In some instances, some or all of the files associated with the directory can be stored in the agent storage. For example, in some instances, the short-term memory files can be stored in the agent storage to provide a cache that is accessible. The relevant long-term memory files associated with the computational task provided by the user query can be accessed by either a pointer through the directory, or by saving a copy to the agent storage as short-term memory.

To efficiently utilize an agent storage, an agent may have one or more retention policies that allow the agent to remove outdated data and/or information from the agent storage. For example, the agent may have a message retention policy based on which the agent may determine whether some messages are outdated or no longer useful and can be removed from the agent storage. The message retention policy or any other data retention policies of the agent may be configurable. For example, the agent may configure its message retention policy to one of keep_initial_and_last_n, remove_by_drop, remove_and_add_summary, and the like.

Additionally, an agent may designate some of data and/or information stored in an agent storage to appropriate retention durations based on various criterion. In various implementations, the agent may determine that information contained in an accessory is true for a limited amount of time and assign a shorter time-to-live on the accessory stored in the agent storage. For example, the agent may determine that information contained in the accessory no longer holds true after a currently processed task is completed. Once completing the task, the agent may remove the accessory from the agent storage to release spaces of the agent storage. Removing outdated accessories, messages, and/or other data stored in the agent storages enables agents to more efficiently utilized available and constrained storage resources to preserve capacity for storing useful data and/or information in agent storages.

### Example User Interface Features

The system may further allow users to interact with the system through one or more user interfaces (e.g., a graphical user interface ("GUI") or other types of user interfaces) to allow users to configure agents, interact with agents, and verify results generated by agents. In various implementations, users may configure an ontology, an LLM, tools, accessories, an agent storage, or other aspects of an agent through operating on a user interface. For examples, a user may configure which tools (e.g., a calculator or other tools) the agent can utilize to process tasks. The user may also configure types of child-agents to which the agent may handoff tasks or sub-tasks, and maximum number of handoffs (e.g., a handoff depth) that can be utilized by the agent. Additionally and/or optionally, the user may configure types of LLMs and/or machine learning (ML) models accessible to the agent through the user interface. The user interface may further allow users to view and track various configurations (e.g., through version control mechanisms noted above) that are available to configure an agent or child-agents of the agent. Advantageously, a user may preserve a specific configuration of an agent that is tested to be effective for solving a specific type of problems while experimenting new configurations based on minor or minimal adjustments to the specific configuration without losing the efficacy of the specific configuration.

In various implementations, a user may evaluate or verify results generated by agents through manipulating a user interface provided by the system. In some examples, the user interface may present information related to an individual run. For example, the information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Advantageously, the system may allow users to more efficiently evaluate or verify performances of agents through, for example, reviewing steps or actions taken by an agent to process a task.

Additionally, user interfaces of the system may present information related to accessories utilized by agents to process tasks. In various implementations, a user interface of the system may visualize relationships between accessories utilized by one or more agents for solving some problems. For example, the user interface may present an interactive graphical representation of accessories used by an agent. More specifically, the interactive graphical representation may represent accessories as nodes and relationships of accessories as edges. For example, the interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, the graphical representation of accessories enables users to efficiently review and track what accessories are utilized by agents to process tasks and how an accessory is related to another. Additionally and/or optionally, the system may allow a user to create one or more accessories by operating on user interface(s) provided by the system, where the created accessories may be passed to agents by the system for processing tasks submitted by the user.

### Example Large Language Model Functionality

The system and/or agents of the system may employ one or more LLMs to provide various services. In various implementations, agents may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, agents may allow users to query internal or third-party data using an LLM (e.g., a QA (question and answer) LLM) that is trained to generate answers from user queries. In various implementations, the LLMs utilized by the system and/or the agents may be locally hosted, cloud managed, accessed via one or more Application Programming Interfaces ("APIs"), and/or any combination of the foregoing and/or the like. Data that may be processed by agents through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As noted above, the system may provide the flexibility of easily swapping between various language models employed by agents to provide various services through configuring agents. For example, the system may swap an LLM (e.g., switching between GPT-2 to GPT-3) for analyzing information to provide recommendations (e.g., to which distribution centers shipment orders should be placed) based on analyses. Such model swapping flexibility provided by the system may be beneficial in various aspects, such as experimentation and adaptation to different models based on specific use cases or requirements, providing versatility and scalability associated with services rendered by the system.

In other embodiments, the system and/or agents of the system can incorporate and/or communicate with one or more LLMs to perform various functions, such as executing similarity searches to search for data. The communication between the system and the one or more LLMs may include, for example, a context associated with an aspect or analysis being performed by the system, a user-generated prompt, an engineered prompt, prompt and response examples, example or actual data, and/or the like. For example, the system and/or agents may employ an LLM, via providing an input to, and receiving an output from, the LLM. The output from the LLM may be parsed and/or a format of the output may be updated to be usable for various aspects of the system.

In some embodiments, the system can be informed by the distinctions between two classes of LLM systems. The first type, continuous interpolation, can include the LLMs operating in a continuous high-dimensional latent space that generalizes information by interpolating among training samples in this space. The accuracy of the first type can depend on the density of training examples near the input point, and in some instances, hallucinations occur when inputs fall in sparsely populated regions of the latent space. Accordingly, the first type can have difficulty with novel tasks or obscure software usage, remaining vulnerable to errors. This difficulty can persist even with massive training data. The second type, discrete component search, can operate on discrete sets of components (such as, but not limited to, files, modules, reasoning steps, and/or the like). The second type can perform combinatorial or programmatic searches over these components to "pick and place" known components and stitch them together for novel tasks or obscure software usage. The short-term memory and long-term memory structure can capture "serialized learning" as discrete building blocks to enable systematic generalization to out-of-distribution tasks through component reuse.

### Example Features Related to Data Objects

The system may employ database(s) that uses ontology and data objects to store, represent and/or organize data utilized by the system. The system may capture and synchronize data or information associated with a run (e.g., a full interaction of a user with the system) into an ontology associated with a database. As such, data utilized by the system may be organized and linked to relevant context for providing a comprehensive knowledge base for evaluation, verification, and analysis.

In some embodiments, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a document or other data source such as an e-mail message, a news report, or a written paper or article. Additionally, data object can represent an entity such as a person, a place, an organization, a market instrument, or other noun. Data object can further represent an event that happens at a point in time or for a duration. Each data object may be associated with a unique identifier that uniquely identifies the data object within the database of the system.

In various implementations, the system may utilize an "interaction data object" to store information and/or data associated with a run of a user in a database of the system for various purposes. The interaction data object may include data objects or may be linked to data object(s) that represent documents, data sources, timestamps of events (e.g., when one or more user queries of the user are received and/or responded), profiles of the user, or the like that are associated with a user interaction. For example, initial and subsequent prompts from the user and/or steps taken by agents utilized to fulfill objectives of the user can be stored by the system using the interaction data object and/or data objects associated with the interaction data object for later evaluation. The system may utilize the interaction data object and/or additional data objects to automatically generate evaluation reports for various purposes, such as evaluating the performances of agents. Advantageously, interaction data objects stored in the database of the system may enable information associated with the user interaction to be easily reviewable. The system may further utilize information stored using the interaction data object and/or other data objects to evaluate if agents are not processing tasks efficiently.

### Example System and Related Computing Environment

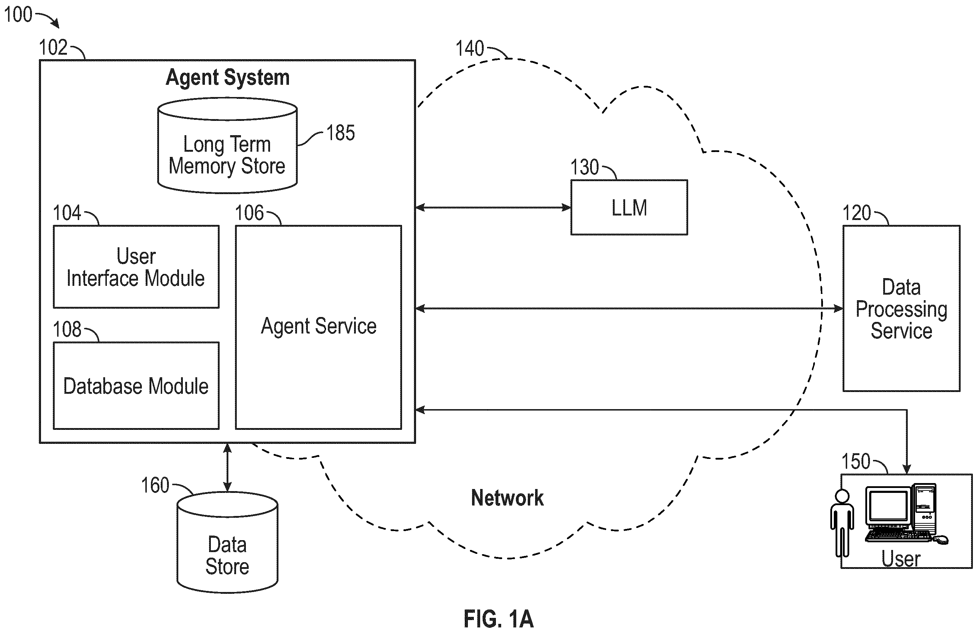

FIG. 1A illustrates an example computing environment 100 including an example agent system 102 in communication with various devices to respond to user inputs. The example computing environment 100 includes an agent system 102, an LLM 130, a network 140, a data processing service 120, a data store 160, and a user 150. In the example of FIG. 1A, the agent system 102 comprises various modules, including a user interface module 104, a database module 108 including an ontology 107, a long-term memory store 185, and an agent service 106. In other embodiments, the agent system 102 may include fewer or additional components. In various implementations, the agent system 102 can comprise the system of the present disclosure, in whole or in part. In various implementations, the agent system 102, and/or various aspects or components of the agent system 102, may be considered part of, or comprise, the system of the present disclosure. The system of the present disclosure, in various implementations, may include additional features, aspects, components, and/or functionality.

In various implementations, one or more of the user interface module 104, database module 108, long term memory store 185, data processing service(s) 120, LLM 130, and/or data store 160 may be comprised, in whole or in part, by the agent service 106. In various implementations, the agent service 106 and one or more of the user interface module 104, database module 108, long term memory store 185, data processing service(s) 120, LLM 130, and/or data store 160 may be part of a common system and/or computing environment. For example, one or more of the user interface module 104, database module 108, long term memory store 185, data processing service(s) 120, LLM 130, and/or data store 160 may be outside of the agent service 106, but may be accessible by the agent service 106 in the ordinary course of performing one or more operations, such as described further herein.

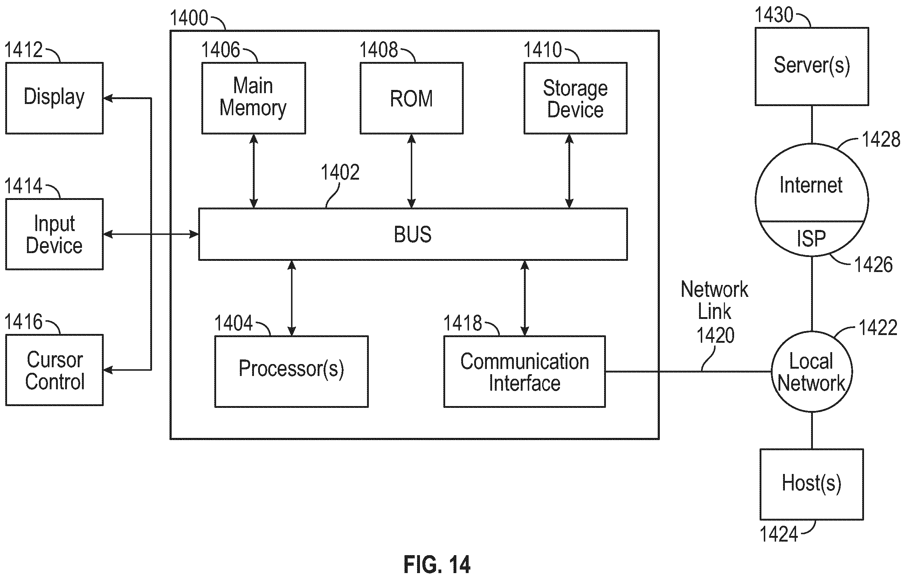

The operations of agent system 102, including user interface module 104, agent service 106, database module 108, and/or long-term memory store 185 can be performed by one or more hardware processors operating under control of computer-executable program instructions which can be stored on non-transitory computer readable media, as shown and/or described in FIG. 14. The agent system 102, including user interface module 104, agent service 106, database module 108, and/or long-term memory store 185, can include and/or be implemented in one or more computing devices including one or more hardware processors such as shown and/or described in FIG. 14.

In the example of FIG. 1A, the various devices are in communication via a network 140, which may include any combination of networks, such as one or more personal area network, local area network, wide area network, over-the-air broadcast network (e.g., for radio or television), cable network, satellite network, cellular telephone network, or combination thereof. As a further example, the network 140 may be a publicly accessible network of linked networks, possibly operated by various distinct parties, such as the Internet. In some embodiments, the network 140 may be a private or semi-private network, such as a corporate or university intranet. The network 140 may include one or more wireless networks, such as a Global System for Mobile Communications (GSM) network, a Code Division Multiple Access (CDMA) network, a Long Term Evolution (LTE) network, or any other type of wireless network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. As additional examples, the network 140 can include a variety of communication protocols, including wired communication, wireless communication, wire-like communication, far-field communication (such as transferring energy via electromagnetic radiation (e.g., radio waves)), Wi-Fi, Bluetooth^{®}, ZigBee^{®}, Z-wave^{®}, cellular telephony, such as long-term evolution (LTE) and/or 1G, 2G, 3G, 4G, 5G, and/or the like, infrared, satellite transmission, proprietary protocols, combinations of the same, and the like.

In some embodiments, modules of the illustrated components, such as the user interface module 104, the database module 108, and the agent service 106, may communicate via an internal bus and/or via the network 140.

The user interface module 104 is configured to generate user interface data that may be rendered for a user 150, such as to receive an initial user input or user query, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. Example user interfaces are described in greater detail below. As described hereinabove, the user input can include a term, phrase, question, query, and/or statement written in a human language (e.g., English, Chinese, Spanish, and/or the like), a request for data, a task to be performed, information associated with a task to be performed, one or more tools (e.g., a query object tool, an apply action tool, and/or the like), one or more tool types (e.g., an object type, an action type, and/or the like), other context, and/or other information. The agent system 102 (e.g., agent service 106) can receive user input from the user 150 via the user interface module 104. For example, the user 150 may provide a user input indicating a natural language request for one or more tasks to be performed and/or problems to be solved by the agent system 102.

In various implementations, the user interface module 104 allows the user 150 to configure agents, interact with agents, and verify results generated by agents in the agent service 106. The user 150 may configure an ontology, an LLM, tools, accessories, the agent service 106 (and/or one or more aspects thereof), and/or other aspects of an agent through interacting with the user interface module 104. For example, the user 150 may configure which tools (e.g., a calculator or other tools), AI models, and/or data processing services an agent can utilize to process tasks. The user 150 may also configure types of child-agents (also referred to herein as "sub-agents") to which an agent may handoff tasks or sub-tasks, a maximum number of handoffs that can be utilized by an agent, and/or the like. Additionally and/or optionally, the user interface module 104 may further allow the user 150 to view and track various configurations (e.g., through version control mechanisms) that are available to configure an agent or child-agent(s) of the agent. Advantageously, the user 150 may preserve a specific configuration of an agent that is tested to be effective for solving a specific type of problem while experimenting with new configurations based on (minor or minimal) adjustments to the specific configuration without losing the efficacy of the specific configuration.

The user interface module 104, in various implementations, can generate user interface data to render in a graphical user interface (GUI) of one or more devices of the user 150. This can include one or more editable and/or non-editable representations of one or more context items (e.g., user input, prompts, responses, datasets, code repositories, functions, tools and/or related tool information, tool calls, other context, and/or the like) and/or other information that have been previously provided and/or that are potentially going to be provided to the agent service 106 and/or LLM 130. For example, user input can include user interaction(s) with the editable and/or non-editable representations, and user interaction(s) can indicate one or more context items to be provided to the agent service 106 and/or the LLM 130, and/or indicate a modification (e.g., deletion, update, edit, addition to, removal, and/or the like) to at least a portion of said one or more context items. The user interface module 104 can provide the agent service 106 with the one or more user inputs associated with the user interaction(s) with said representations, and in response the agent service 106 can execute one or more tasks and/or sub-tasks, such as to modify the one or more context items. The agent service 106, in various implementations, may automatically (e.g., without additional user interaction) modify the one or more context items and feed said one or more context items to the LLM 130. In some examples, user interaction with the editable and/or non-editable representations can indicate a retrospective modification to at least a portion of one or more context items previously provided to the agent service 106 and/or LLM 130. In this way, the user 150, via the agent service 106, may modify the history (e.g., conversation history) of the LLM 130. Accordingly, the user 150 can modify the state that is passed into the LLM 130 when the agent system 102 (e.g., the agent service 106) calls the LLM 130 in the course of resuming one or more tasks and/or subtasks, and/or performing subsequent tasks and/or sub-tasks.

The database module 108 may be any type of data store and can store any data, data objects of data object types, or the like. The database module 108 is configured to store data/information that may be utilized by the agent system 102 and/or accessed or manipulated by the user 150, as described herein. The database module 108 can include data stored in data store 160, data transferred from data store 160, or access data stored in data store 160. The database module 108 can be indexed according to an ontology. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like. The ontology may constitute a way to represent things in the world. The ontology may be used by an organization to model a view on what objects exist in the world, what their properties are, and how they are related to each other. The ontology may be user-defined, computer-defined, or some combination of the two.

In the example of FIG. 1A, the user 150 (which generally refers to a computing device of any type that may be operated by a human user) may provide a user query, which can include a request to perform a computational task, to the agent system 102 indicating a natural language request for some data analysis to be performed or computational tasks and/or problems to be solved by the agent system 102. For example, the user query along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input. In addition, the user 150 may provide information on memory settings associated with the computational task. These memory settings can be used to determine supplemental information that can be used by the agent to cause generation of a prompt. In some instances where the memory settings provided is for OSDK mode, the supplemental information can include ontology documentation, which can either be supplied by the user or accessed from the database module 108 or data store 160.

As noted above, the agent system 102 (e.g., the agent service 106) may include and/or have access to one or more large language model (LLM) or other language model, and the LLM may be fine-tuned or trained on appropriate training data (e.g., annotated data showing correct or incorrect pairings of sample natural language queries and responses). After receiving a user query, the agent system 102 may generate and provide, through the agent service 106, one or more prompts to an LLM 130, which may include one or more large language models trained to fulfill a modeling objective, such as task completion, text generation, summarization, or the like.

The LLM 130 and various modules of the agent system 102, such as the agent service 106, may also communicate with one or more data processing services 120 in the course of fulfilling a user query. The data processing services 120 may include any quantity of services (or "plug-ins") and any available type of service. For example, the data processing services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services. For example, the agent service 106 may request for data processing services 120 to perform a specific process. By another example, the data processing service can include an ontology software development kit (OSDK), used in OSDK mode, which can be used to generate ontology documentation based on a documentation template and information indicative of the ontology. The OSDK can enable the user 150 to provide user input or by the agent service 106 fulfilling the user input to access and/or update the ontology or data in either of the database module 108 or data store 160. In some implementations, the data processing services 120 may be a part of the agent system 102 (e.g., as part of a data processing services module of the agent system 102).

The agent service 106 may include a plurality of agents that may be utilized by the agent system 102 to solve various problems or process various tasks received, via the user interface module 104, from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106.

Each of the agents may be configurable based on various settings. For example, an agent can be configured or reconfigured to be associated with various ontologies, large language models (LLMs), tools, accessories, storages, and/or the like. The agent service 106 may flexibly (e.g., based on user demands) reconfigure one or more agents from one configuration to another configuration. Advantageously, reconfigurable agents enable the agent service 106 to swap or switch agent configurations to achieve various objectives. For example, the agent service 106 may feed the same input(s) to a first and second agent, but swap LLMs utilized by the agents, such as to evaluate or benchmark performances of the LLMs. In some examples, when an agent is tasked to solve a problem related to a new subject matter, the agent service 106 and/or user 150 may reconfigure the agent to utilize an ontology that is created or updated based on the new subject matter.

In various implementations, the agent(s) in the agent service 106 may coordinate with each other to process tasks collaboratively. For example, a first agent may coordinate with a second agent by handing off tasks to the second agent, where the second agent is suitable or specialized in handling the tasks. More specifically, when the first agent determines that a task that the second agent is processing requires specialized capability, the first agent may handoff some or all of the task to the second agent that has been trained or tested to efficiently solve the task. In various implementations, agents may hand off some (e.g., sub-tasks) or all of a task to one or more child agents, which may specialize in processing specific types of tasks or sub-tasks. Additionally, the parent-child agent relationship can be configurable by the agent service 106. For example, a first agent can be configured to have a second agent as a child agent, where the child agent may be explicitly specified in a configuration of the first agent. A configuration of the child agent may also explicitly specify the first agent as a parent agent. As such, the parent-child agent relationship(s) can be bi-directional. Advantageously, handing off tasks from agents to corresponding child agents can provide multiple improvements over utilizing a single and large agent to process tasks. For example, handing off sub-tasks to child agents that are trained to process the sub-tasks efficiently can enable the agent service 106 to efficiently process requests from the user 150, reducing computational load, storage requirements, and/or compute overhead in generating outputs, and/or increasing the accuracy of said outputs. Handing off tasks may further reduce the update or maintenance cost of agents employed by the agent service 106 because updates on or migration of agents can be targeted and tailored toward subsets of agents of the system.

In various implementations, the agent system 102 can onboard agents. For example, when providing a user input from the user 150, the agent system 102 can designate tasks to one or more agents of agent service 106 to accomplish the task.

The agent service 106 may generate and maintain a log to record events, timelines, received inputs, or generated outputs while agents process tasks or solve problems received from the user 150. In various implementations, agents employed by the agent service 106 may coordinate with other agents by handing off tasks to agents (e.g., child-agents) which are suitable or specialized in handling the tasks. If an agent determines to handoff a sub-task to a child agent (sometimes referred to herein as a "subagent"), the agent may choose to share knowledge with the child agent. For example, the agent may share an accessory with the child agent, where the accessory may be useful in processing the sub-task.

As described further hereinbelow, the agent service 106 may provide storage (e.g., agent storage 126) for agents to store and/or access accessories (e.g., tools and/or related tool information), other context, and/or other information useful for processing tasks or problems. The agent service 106 may further utilize an agent coordinator 124 to supervise handoffs of tasks or sub-tasks among agents to ensure handoffs are robustly performed and do not interfere with processing of other tasks or sub-tasks. In various implementations, the agent coordinator 124 of the agent service 106 may facilitate communications among agents, and communications between agents and users 150 or the agent system 102.

The agent service 106 enables agents to coordinate (e.g., handoff a task from one agent to another) with each other to effectively solve problems received from the user 150 in both time and resource-efficient manners. Additionally, the agent service 106 allows agents to share information useful for processing tasks or solving problems effectively and reliably while respecting security and/or permissioning defined by the agent system 102 and/or the user 150. Further, through the assistance of the user interface module 104, the agent service 106 may allow the user 150 to track or monitor problem-solving processes performed by agents employed by the agent service 106 to evaluate the soundness of steps taken or decisions made by agents. The agent service 106 may further allow the user 150 to configure agents based on various user objectives to enhance scalability and reusability of the agent system 102.

In various implementations, the agent service 106 may receive user queries to process various types of computational tasks, such as image and/or audio processing tasks, machine controlling tasks, tasks involving automatically generating texts to summarize a set of documents, conducting analysis based on data contained in articles, tables, spreadsheets, or the like, scheduling distribution of materials based on supply chain constraints and requirements from demand sides, or the like. For example, the agent service 106 may allow users to query internal or third-party data using the LLM 130 (e.g., a QA (question and answer) LLM) that is trained to generate answers from user queries. In various implementations, the LLM 130 utilized by the agent service 106 may be locally hosted, cloud managed, accessed via one or more Application Programming Interfaces ("APIs"), and/or any combination of the foregoing and/or the like. Data that may be processed by the agent service 106 through using the LLM 130 may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

Optionally, the agent system 102 (e.g., the agent service 106) may be capable of interfacing with multiple LLMs. This allows for experimentation and adaptation to different models based on specific use cases or requirements, providing versatility and scalability to the system. In some implementations, the agent system 102 may interface with a second LLM 130 in order to, for example, solve a problem for the user 150, generate an input to a data processing service 120, or to generate some or all of a natural language prompt (e.g., generate a prompt for the first LLM 130). Additionally, the agent service 106 may optionally include a plurality of agents that may be utilized by the agent system 102 to solve various problems or process various tasks received from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106.

The agent system 102 can onboard computer-based agents (unless specified otherwise, agents refers to computer-based agents). For example, when providing a user query from the user 150, the agent system 102 can designate tasks to one or more computer-based agents to accomplish the task. The agent system 102 can determine supplemental documentation to generate a prompt based on the user query and the supplemental information. At least a portion of this supplemental documentation can be based from the long-term memory store 185, which can be accessed to establish a memory bank for the agent. This supplemental documentation can provide agents with an understanding of the relationships between data objects in the data set to generate a prompt, and how the agent can utilize the tools it has been configured to have accessible to these data objects. Furthermore, the supplemental information can provide insight on past patterns and learnings that can guide the agent on how to accomplish performance of the computational task. Accordingly, the agent can be provided with similar levels of agency and memory as a human agent, which can be further accomplished based on how the settings of the agent are configured. The settings can include what tools are accessible and what guardrails are provided to the agent to confirm the tools are being used as expected. In some instances, the prompt can be further based on files in the memory bank, which can include settings of the selected agent, work flow specifics associated with the ontology, example prompts with sample processes on how to access data objects for the prompt and ideal outputs, a target number of suggestions, agent connections, template response formats on how the agent output or process updates can be provided back to the user, guardrails against improper user queries, and/or the like. These additional components can be included as part of the user query, or can be separate from it.

The long-term memory store 185 can store memory files that are accessible to a plurality of agents. The long-term memory store can be used to store compounded learning from prior experiences across all agents. During initialization, the agent can access relevant long-term memory files from the long-term memory store 185. In some instances, short-term memory can be stored in the long-term memory store 185.

### Example System and Related Modules

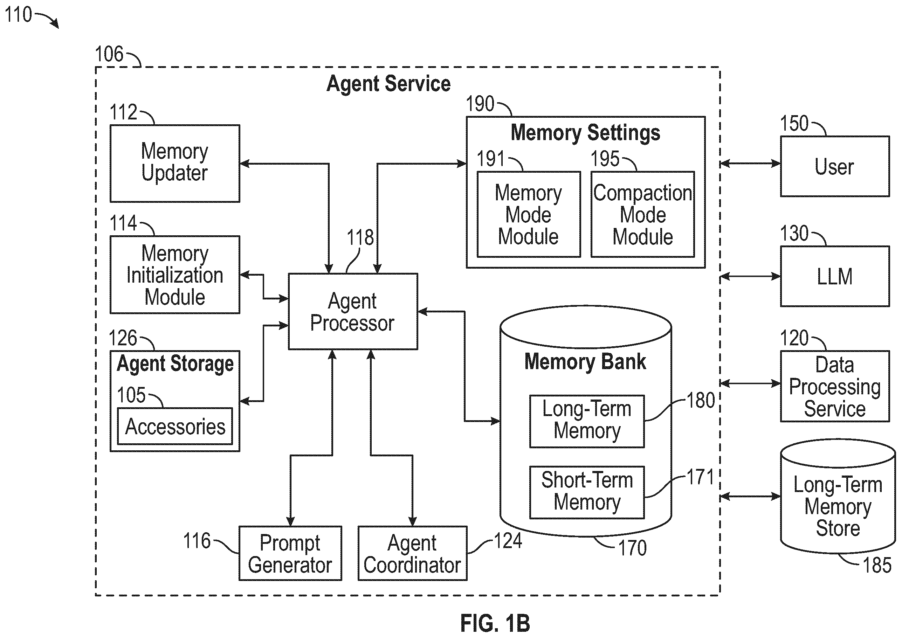

FIG. 1B depicts example connections 110 between various modules associated with the agent system 102 of FIG. 1A, including the user 150, the data processing service 120, the LLM 130, the long-term memory store 185, and the agent service 106 that includes one or more agent coordinator 124, one or more agent storage 126 including accessories 105, one or more agent processors 118, memory settings 190 including a memory mode module 191 and compaction mode module 195, a memory updater 112, a memory initialization module 114, a prompt generator 116, and a memory bank 170 including short-term memory 171 and long-term memory 180. In other embodiments, the agent system 102 and/or the agent service 106 may include fewer or additional connections. The indicated connections and/or data flows of FIG. 1B are exemplary of only certain processes performed by the agent system 102 and are not meant to include all possible blocks and participants.

As described above, the user interface module 104 is configured to generate user interface data that may be rendered on the user 150 (which generally refers to a computing device of any type and/or a human user of the device), such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. A user 150 may provide a user query for a computational task to the user interface module 104, indicating a natural language request for some data analysis to be performed and/or tasks or problems to be solved by the agent system 102.

In various implementations, the database module 108 and/or the data store 160 may function and/or be configured to provide various of the data storage aspects of the system. For example, various of the memory settings, memory bank(s), memory store(s), and/or like, functionality of the present disclosure may be enabled, or provided by, the database module 108 and/or the data store 160.

In the example of FIG. 1B, the agent service 106 includes one or more agent coordinator 124, one or more agent storage 126 including accessories 105, one or more agent processor 118, memory settings 190 including a memory mode module 191 and compaction mode module 195, a memory updater 112, a memory initialization module 114, a prompt generator 116, and a memory bank 170 including short-term memory 171 and long-term memory 180.

The memory bank 170 can store memory files that are accessible to the agent. The memory of the agent can be reset between each session. The memory bank 170 can include supplemental documentation usable to generate a prompt and with information on how to process the computational task. The agent can rely on the memory bank 170 to initialize its memory in conjunction with the memory initialization module 114 by accessing the two types of memory stored in the memory bank 170: long-term memory 180 for compounded learning from prior experiences across all agents, and short-term memory 171 that provides cache data for more active context for a particular project. The long-term memory 180 can contain knowledge that persists across projects, representing longer-term, more abstract knowledge. The short-term memory 171 can contain information specific to the current project (across multiple sessions) and functions as a short-term, quick access of context, similar to a "cache."

The memory initialization module 114 can provide the process that sets up the memory bank for its first use, or when the agent begins a session. The memory initialization module 114 can be used to read and copy files for the memory bank and create new files as needed. In some instances, the memory bank 170 can have a directory structure. During initialization, the agent can access all short-term memory files and only relevant long-term memory files from the long-term memory store 185. This initialization can be done by generating a directory with pointers to the relevant files or by adding the files to the memory store. In some instances, the agent storage 126 and the memory bank 170 can be the same. The memory initialization module 114 can include one or more steps that can include one or more of: checking if the memory is enabled in the memory settings 190, defining memory bank 170 paths such as long-term memory 180 and short-term memory 171, checking if a memory bank 170 already exists that satisfies the memory settings 190 (and if so, in some instances, skipping remaining steps), creating a director structure (such as memory-bank/short-term and memory-bank/long-term), copying the learnings 182 file from the long-term memory store, determining which mode-specific files based on the memory mode module 191 to copy into long-term memory and/or short-term memory, copying the mode-specific files, and adding the memory bank to the project file. In some instances, copies of memory files added to the memory bank 170 can be done manually over an air-gapped network 140 environment. In other instances, the files can be added by the agent connecting to a server associated with an ontology that acts as a memory transfer store. The memory initialization module 114 can be called to set up the memory bank 170 prior to making the first API call.

The memory settings 190 inform the agent on configuration options that control memory behavior. In some instances, the memory settings 190 can be enabled to be on or off for use by the agent system 102. The memory setting 190 can be based on modes received for the memory mode module 191 and the compaction mode module 195. The memory mode module 191 can include, but are not limited to, an OSDK mode, a functions mode, and a transform mode.

The memory bank 170 can be accessed by the prompt generator 116. The prompt generator 116 can be used to generate a prompt based on the computational task and files accessed from the memory bank 170. The prompt can be provided to the agent service 106. In some instances, the memory bank 170 can be included within the agent service 106. The prompt can be generated by the prompt generator 116 by an agent in connection with the agent processor 118. The prompt can be generated and executed to perform at least a portion of the computational task, such as by generating code and executing the code. The prompt generator 116 can include more or less of the following steps, generating a prompt in some or all of the steps, including: introducing the agent to the memory bank 170 between sessions, emphasizing the importance of maintaining documentation in the long-term memory store 185, explaining the memory bank 170 structure and file organization, providing guidance to user 150 on when and how to update memory in the memory bank 170 and the long-term memory store 185, and adapting the prompt based on the current memory mode through the memory mode module 191 and compact method in the compaction mode module 195 of the session.

The agent processor 118 can be used for one or more agents or include one or more agent processors 118. The delegation of which agent to handle tasks associated with the search query can be determined using the agent coordinator 124. The agent processor 118 can coordinate with the data processing service 120 and LLM 130 when executing the search query to access external information. The agent processor 118 can retrieve and store data during the execution of the search query in the agent storage 126. The agent storage 126 can include accessories 105 that can be accessed by the agent processor 118 to provide the agent with tools to execute the search query. For example, if the memory settings 190 receive input through the OSDK mode module 191, the agent can access long-term memory for ontology documentation for instructions on how to operate an ontology software development kit (OSDK), which provides the agent with the ability to efficiently interact with the data objects defined by the ontology with minimal hallucinations.

The system may generate a prompt through the prompt generator 116 to provide to an agent. The agent can then cause generation of a search query to perform a portion of the computational task included in the prompt based on the accessed memory files. The agent can cause execution of the search query by accessing program code. The code can be a preferred language by the agent processor 118, such as Python, Java, TypeScript, cURL, and/or the like. The code can be generated by the system from the search query using the ontology documentation, which is formed from an ontology software development kit ("OSDK"). The agent can cause processing of the code to access the data objects associated with the search query, which can be used to fulfill the task associated with the search query. During the execution of the search query, artifacts can also be generated. The program code can be based on the ontology documentation if the system is in OSDK mode, which can provide a syntax for the preferred language of the agent as a code template. This code template can differ based on the language, but each of which is intended to access data object of the data object types described in the code template. Similarly, transformations can be generated if the system is in transform mode or functions can be generated if the system is in functions mode.

Executing the search query can include parsing through the ontology documentation to determine the code template that achieves the desired task(s) of the search query. For example, if the search query is to "determine the average cost to build buildings from 2010-2020," then the code template can be for reading a property of a data object type and averaging the value of the accessed property values, such as by using an accessory. The system can update the code template, which can include placeholder data object types and relationships, with the specific data object types that are relevant to the data objects associated with the search query.

Referring back to the example, the code template can be a single code template or multiple code templates, such as one for retrieving the data object type, another for reading the property, and another for averaging the values. Similarly, the generated program code for the search query can combine the code templates or it can generate a set of program code for each code template. In the latter instance, the search query can thus compose three tasks, each with program code correlating the respective code template with the desired data object type, property, or relationship. In some instances, the generation of the program code can further be based on example prompts provided to the agent with sample processes on how to access data objects for the prompt and ideal outputs. These example prompts can inform the system on how to utilize the ontology documentation. In some instances, the generation of the program code can further be based on template response formats on how the agent output or process updates can be provided back to the user 150. The template responses can inform the system on how to generate code that provides a desired format for the responses to the user 150.

The memory updater 112 can provide the process for updating the memory bank based on new information that is obtained during the processing of the computational task. The new information can be based on artifacts that are generated during the processing of the computational task or errors received during. The system base updates through the memory updater 112 through a regret-based decision-making process. The system can determine whether there would be regret if a new learning were not documented in the long-term memory store 185 for the agent or other agents to use in the future. The memory updater 112 can be associated with the compaction mode module 195 to combine the writing of memory in the memory bank 170 with compaction to the long-term memory in a single operation based on the compaction mode. The compaction process can emphasize ephemeral traces into stable abstractions in the long-term memory store 185 shared by the agents to provide a systematic generalization of the information.

In various implementations, the agent storage 126 may store accessories 105 that may be useful or necessary for agents to process tasks. Accessories 105 may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. Accessories 105 may be permissioned and/or subject to various security constraints such that the accessory may be accessible to some agents but inaccessible to other agents. Accessories 105 may be generated or created by agents during processing tasks, but may also be provided by users based on the demands of users. Additionally and/or optionally, accessories 105 may be created by agents using tools while processing tasks. In various implementations, the agent storage 126 may impose a time-to-live constraint on the accessories 105 based on characteristics of the accessories 105.

In addition to accessories 105, agents may also store and/or access tools for processing certain tasks or generated results to the agent storage 126. For example, the agent may be tasked to write a program code (e.g., Python code). The agent may then utilize a tool stored in the agent storage 126 to find an application programming interface (API) endpoint for generating the program code, and store the program code in the agent storage 126. In various implementations, the agent storage 126 may be partitioned and allocated to agents.

In various implementations, the agent service 106 may utilize the agent coordinator 124 to supervise handoffs of tasks or sub-tasks among agents to ensure handoffs are robustly performed and do not interfere with processing of other tasks or sub-tasks. Additionally and/or optionally, the agent coordinator may mange handoffs among agents based on input(s) from the user 150. Additionally, the agent coordinator may allow bidirectional communications between agents and the user 150 or the agent system 102.

In various implementations, the user interface module 104 allows the user 150 to configure agents, interact with agents, and verify results generated by agents. The user 150 may configure an ontology, an LLM 130, tools, accessories 105, the agent storage 126, or other aspects of an agent through interacting with the user interface module 104.

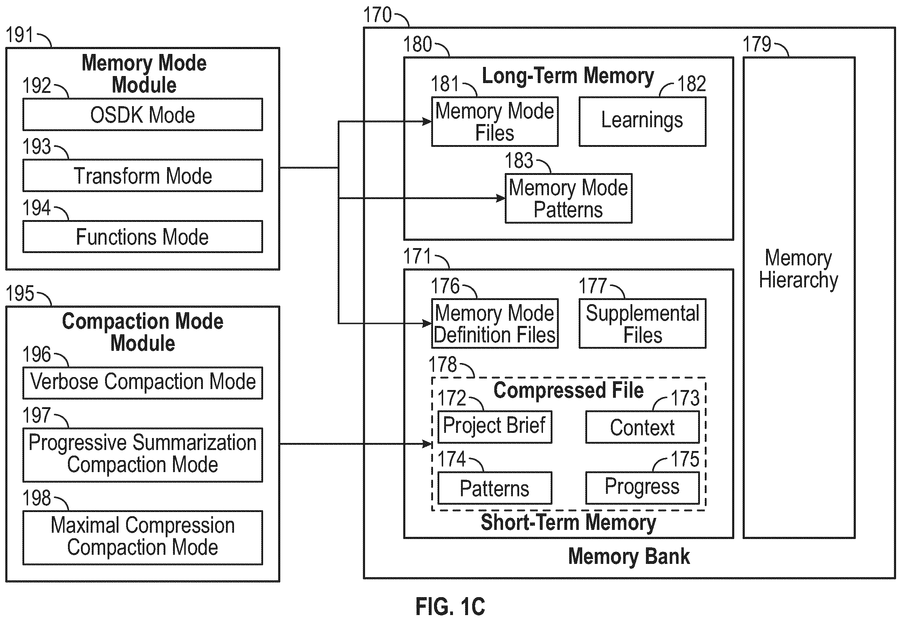

FIG. 1C depicts example connections between various modules associated with the agent system 102 of FIG. 1B, including the memory mode module 191 including at least OSDK mode 192, transform mode 193, and functions mode 194, the compaction mode module 195 including at least verbose compaction mode 196, progressive summarization compaction mode 197, and maximal compression compaction mode 198, and the memory bank 170 including short-term memory 171, long-term memory 180, and the memory hierarchy 179. Both the memory mode module and the compaction mode module can include more or less modes than those illustrated in FIG. 1C. The memory bank 170 may include more or less files than those illustrated in FIG. 1C, for example, the memory hierarchy 179 may not be included. The long-term memory 180 can include memory mode files 181, learnings 182, and memory mode patterns 183. The short-term memory 171 can include memory mode definition files 176, supplemental files 177, project brief 172, context 173, patterns 174, and progress 175.

The project brief 172 can be a foundation document that shapes the other files for short-term memory 171. The project brief 172 can define core requirements and goals, and can be the source of truth for project scope. The project brief 172 can be used as a basis for updating the long-term memory store 185. The project brief 172 can be based on the portion of the long-term memory store 185 used for long-term memory 180, such as the learnings 182. The project brief 172 can include sections related to component structure and best practices for implementation and component design. The context 173 can focus on current work, recent changes, next steps, and active decisions and considerations. The context 173 can be updated with current focuses and implementations of the tasks, such as the components that have been implemented. For example, the context 173 can include a technical implementation section context or a component structure section. The patterns 174 can include system architecture, key technical decisions, design patterns in use, and component relationships. The patterns 174 can be updated based on analysis of implementations, such as when using actual data or mock data. The patterns 174 can include information about future implementations with different data. In some instances, the patterns 174 can include graphs or illustrations, which can for example, show the relationship between memory components. These graphs or illustrations can be interpretable by a user or by an agent. The progress 175 can include the overall progress of running the computational task, including what works, what's left to build, current status, and known issues. The progress 175 can be updated during the run for project phases, such as from initialization to implementation, such as adding details when the system implements new activity. The progress 175 can include a checklist of tasks, which can be marked when completed or can include milestone statuses. For example, remaining tasks can be to implement vector embedding, entity resolution, surprise-based learning, and/or the like. The progress 175 can be updated with details of known issues and the next immediate tasks. In some instances, when a new computational task within an agent session is requested, the system may only read the progress 175 and context 173 of the short-term memory 171. In such instances, the system may further briefly access the project brief 172. Advantageously, the system can minimize the amount of files accessed to increase the efficiency in completing the computational task.

For example, the project brief 172 can provide an overview of what the computational tasks are, such as building an LLM-based chat application that utilizes an OSDK. The overview can include expected parameters or preferences, such as the application delivering smooth animations, responsive design, and seamless integration with the OSDK actions and functions. The project brief 172 can also include sections for core features with brief descriptions, target users, sub-sections for technical preferences, and/or the like. For example, some core features can be file attachment support to allow user to attach files to their queries or user authentication display. Target users can be business professionals or company employees, which may guide the parameters on how information can be provided or read from the application.

The memory mode module 191 can include, but are not limited to, an OSDK mode 192, a transform mode 193, and a functions mode 194. For example, the OSDK mode 192 can be used for building applications using the OSDK. As another example, the transform mode can be for building data transforms, such as Pyspark. The different modes, in some instances, can include specialized files and patterns for performing the computational tasks. The selected mode can be used to determine which memory mode file 181 to access from the long-term memory store 185 to include as part of the long-term memory 180 and which memory mode definition file 176 to access from the short-term memory 171. After the memory bank 170 has been established, the system can determine which portions of the memory mode file 181 or memory mode definition file 176 to access when processing a computational task. For example, in OSDK mode 192, the memory mode files 181 can be ontology documentation that includes all of the functionality to use the OSDK. This ontology documentation can include functionality such as filtering functions or aggregation functions. However, when processing the computational task, if the particular computational task would not need to filter objects, then the portion of ontology documentation detailing filtering functions may not be accessed from the memory bank 170 of the agent. By further example, if the particular computational task was associated only with equal to filtering but not other types of filtering, the portions of the equal to filtering in the ontology documentation but not other filtering may be accessed from the memory bank 170 of the agent. Accordingly, the system can read portions of files specific to the memory mode that are relevant to the computational task without unnecessarily accessing other portions for the memory bank 170 of an agent. The agent may access all memory mode definition files 176 associated with the memory mode as part of accessing its short-term memory 171.

For example, in either mode, the long-term memory 180 can include learnings and general patterns and the short-term memory 171 can include a project brief 172, context 173, patterns 174, and progress 175. The memory mode files 181 may not be updated or created unless from explicit request from user 150. The memory mode patterns 183 provides best practices, common patterns, and optimization techniques based on the selected memory mode. The supplemental files 177 can be crated within memory bank as needed, such as but not limited to complex feature documentation, integration specification, API documentation and understanding, testing strategies, and deployment procedures.

When in transform mode 193, the memory mode files 181 can include the transform documentation that outlines how to use functions for data transforms. The transform documentation can include schema and sampled rows. As another example, when in OSDK mode 192, the memory mode files 181 can include at least ontology documentation and authorization migration documents. The authorization migration documents can be read if the agent needs to migrate between the authorization code grant and the confidential client grant. The ontology documentation can include API and SDK documentation that outline how to use the OSDK, which can be a backend data store that allows for state-managed objects that reflect a real-world state of the workflow. The ontology documentation can used for querying, use for performing complex data transforms, search around, and other actions outlined in the memory mode definition files 176 for OSDK mode 192. The memory mode definition files 176 for OSDK mode 192 can include available ontology objects, which includes data object types usable with the OSDK, documentation on the object types, their links, other object types.

The compaction mode module 195 can include, but is not limited to, verbose compaction mode 196, progressive summarization compaction mode 197, and maximal compression compaction mode 198. The mode of compaction can provide for the level of detail that the short-term memory 171 of the agent is saved as. When an update is particularly requested by the user 150, every (rather than only one) file in the memory bank must be read, which can focus on context 173 and progress 175. The memory mode files 181 can only be updated if the user 150 discovers a function that is unavailable. Moreover, the mode of compaction is associated with the regret-based approach of the memory system to determine how the system determines what is saved from the memory bank 170 up to the long-term memory store 185. The system can focus on surprising learnings and information that would be regretted if forgotten.

For example, verbose compaction mode 196 can provide for high detail in the short-term memory 171, such as by providing comprehensive documentation with appropriate levels of detail, focusing on forward-looking insights, and high-signal learning. Verbose compaction mode 196 can include generating or verifying that the short-term memory 171 includes files for the project brief 172, context 173, patterns 174, and progress 175. Verbose compaction mode 196 can include diagrams and structured content for its files. In some instances, the agent can evaluate to determine the appropriate level of detail for each file. Verbose compaction mode 196 can be the default mode of the system selected by the compaction mode module 195.

For example, progressive summarization compaction mode 197 can provide for a more structured and precise approach, by increasing processing efficiency with structured format, providing progressive summarization of surprising encounters and key learnings, focusing on information that would be regretted if forgotten, omitting diagrams in its files to save context space, and using bullet points with clear headers for efficient organization. Progressive summarization compaction mode 197 can also include generating or verifying that the short-term memory 171 includes files for the project brief 172, context 173, patterns 174, and progress 175.

As another example, maximal compression compaction mode 198 can provide for the most efficient memory usage approach. Maximal compression compaction mode 198 can include generating or verifying that the short-term memory 171 includes a project brief 172 as a compressed file 178 that consolidates information associated with the context 173, patterns 174, and progress 175 into a single file for the short-term memory 171. This compressed file 178 can include three sections, such as recent information in full detail, providing complete entries from the last two or three agent cycles, recent history that is summarized for brief bullet points of key actions or decisions, and background context that is highly compressed and includes essential project information. The short-term memory 171 in maximal compression compaction mode 198 can omit all diagrams and non-essential details. When incorporating the memory bank to compound learnings to the long-term memory store, the system set to maximal compression compaction mode 198 can focus entirely on surprising knowledge and key learnings.

Learnings 182 can include basic rules and security guidelines. Learnings 182 can be a journal for the agent across projects and can capture important patterns, preferences, and derived intelligence from the user and agent work. For example, the learnings 182 can include information related to an error that prevented fulfilling the search query for a computational task. For instance, if the search query were attempting to access a portion of a data object that was not present, the system can use this error saved in the long-term memory 180 to pre-emptively generate a new search query to try to write in that data object or determine an alternative means to performing the computational task.

The memory hierarchy 179 can optionally provide a weighting on each file in the long-term memory 180 and short-term memory 171 for weighing importance to be used in determining how to perform a computational task. For example, the memory mode files 181 can be weighted more than the project brief 172, the memory mode definition files 176 can be weighted more than the memory mode files 181, the memory mode definition files 176 can be weighted more than a the project brief 172, the project brief 172 can be weighted more than the patterns 174, the patterns 174 can be weighted more than the context 173, and the context 173 can be weighted more than the progress 175.

### Example Database and Data Models

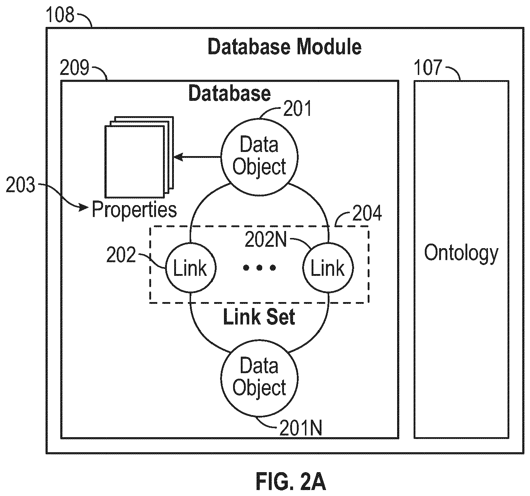

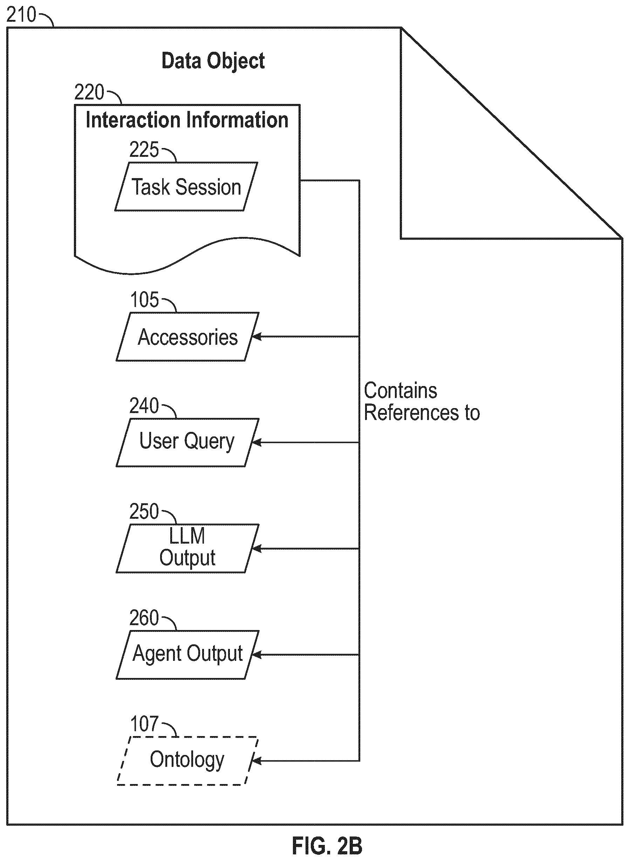

FIG. 2A illustrates an example embodiment of an object-centric conceptual data model, such as may be comprised by the database module 108, in various implementations. An ontology 107, as described hereinabove, may include stored information providing a data model for storage of data in the database 209. The ontology 107 may be defined by one or more object types, which may each be associated with one or more properties 203 or property types. Data objects 201 through 201N are containers for information representing things in the world. In various implementations, data object 201 (see FIG. 2B, for example) can represent information and/or data associated with a run of the user 150. In various implementations, data object 201 can represent a document or other unstructured data source such as an e-mail message, a news report, or a written paper or article. In various implementations, data object 201 can represent a query submitted by the user 150 or a response provided by the agent system 102 to the user 150. In various implementations, data object 201 can represent an entity such as a person, a place, an organization, a market instrument, or other noun. Data object 201, in various implementations, can represent an event that happens at a point in time and/or for a duration. Each data object 201 is associated with a unique identifier that uniquely identifies the data object within the database module 108.

FIG. 2B is a block diagram illustrating an example embodiment of a data object 210 that is optional with various implementations of the present disclosure. The data object 210 may be stored in the database 209 of the database module 108. In various implementations, the agent system 102 may utilize the data object 210 to store interaction information 220, which can include information and/or data associated with a run of a user 150. The data object 210 may include other data objects and/or may be linked (e.g., using the link 202 and/or 202N in link set 204) to other data object(s) that represent documents, data sources, timestamps of events (e.g., when one or more user queries of the user 150 are received and/or responded), profiles of the user 150, or the like that are associated with a user interaction of the user 150. For example, initial and subsequent user input from the user 150 and/or steps taken by one or more agents utilized to fulfill objectives of the user 150 can be stored by the agent system 102 using the data object 210 and/or data objects associated with the data object 210 for later evaluation. The agent system 102 may utilize the data object 210 and/or additional data objects 201 through 201N to automatically generate evaluation reports for various purposes, such as evaluating the performance (e.g., compute efficiency) of agents. Advantageously, data objects 201 through 201N stored in the database 209 may enable information associated with a user interaction to be easily reviewable. The information stored in the data object 210, as described, can also be stored in different components of the agent system 102 or an external system.

In various implementations, the interaction information 220 can include information and/or data associated with a task session 225. The interaction information 220, in various implementations, may include references to at least a portion of accessories 105, user query 240, LLM output 250, agent output 260, and/or ontology 107. For example, interaction information 220 may: (1) identify accessories 105 that are utilized by agents while processing tasks in a run of the user 150; (2) identify user query 240 that may be submitted by the user 150 in the run of the user 150; (3) identify LLM output 250 that may be generated by the LLM 130 in response to receiving (e.g., via agent service 106) a prompt; and/or (4) identify ontology 107 that the agent service 106 and/or LLM 130 may traverse in providing an agent output 260 to fulfill a user query 240 from the user 150. In various implementations, the LLM output 250 can include a search query and/or outputs for executing the search query. In various implementations, the LLM output 250 can include program code that is generated using ontology documentation (e.g., documentation providing details of how to perform search queries and/or data object information retrieval from data objects of a particular ontology) based on the search query to access data objects and produce an output.

It is to be noted that the example embodiment of data object 210 shown and/or described in FIG. 2B is not intended to limit the present disclosure and is optional. Accordingly, the interaction information 220 can also be optional, and at least a portion (if not all) the interaction information 220 and/or related information can be comprised, in whole or in part, in a different component of the agent system 102 or by an external system, or may not be included at all.

Additionally, while the data object 210 is an example of a particular type of data object 201 that may be stored by the system, in various implementations, and as described herein, the system may store any type of data object. Such data objects and associated links among data objects can include various information, data, and/or properties, that may be useful in various processes of the system. For example, such data objects can include information and data usable for enabling answering of prompts, queries, and/or the like.

### Example Functionality and Operations of the System

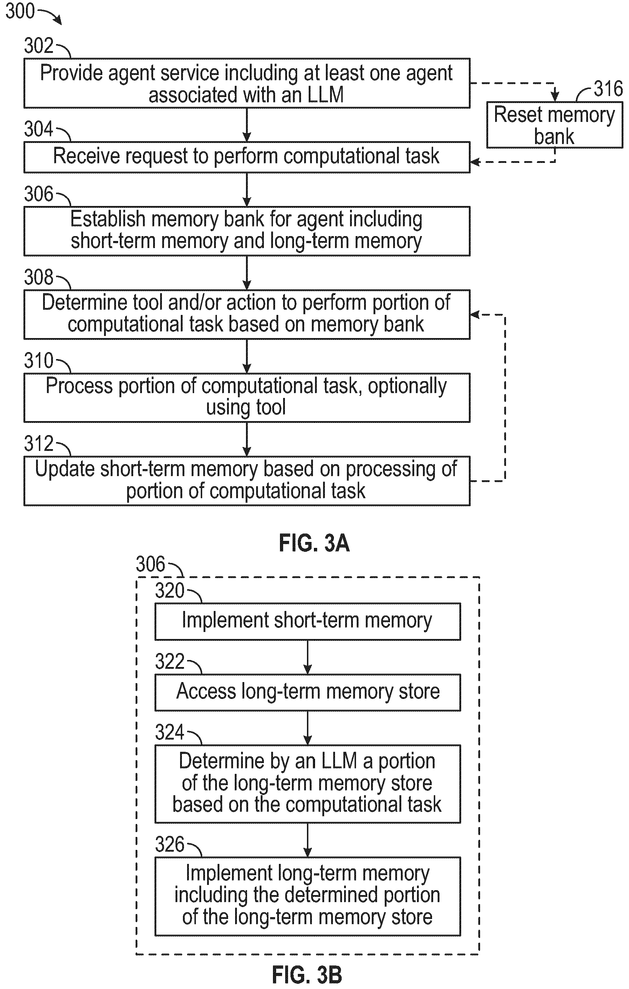

FIGS. 3A-D, 4A-C, and 5A-B show flowcharts illustrating example operations of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 3A-D, 4A-C, and 5A-B may be implemented, for example, by the one or more aspects of the agent system 102 (e.g., the agent service 106), various other aspects of the example computing environment 100, and/or the like.

### Example Aspects Related to Compounding Memory for Computer-Based Agents Including Accessing Long-Term Memory

FIGS. 3A-D show flowcharts illustrating example operations for establishing and updating a memory bank of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 3A-D may be implemented, for example, by the one or more aspects of the agent system 102 (e.g., the agent service 106), various other aspects of the example computing environment 100, and/or the like.

FIG. 3A is an example flowchart depicting an example method 300 for the agent system 102 on how an agent can access memory files according to various implementations. In various implementations, the method 300 may be performed in part or in full by the computing environment 100 of FIGS. 1A, 1B, and/or 1C. It should be noted that not all of the blocks of FIG. 3A has to be performed.

At block 302, the system may provide agent service 106 that can include at least one agent of a plurality of agents that are associated with one or more LLMs 130. At block 316, the system may optionally reset the memory bank 170 of the agent. At block 304, the system may receive a request to perform a computational task from the user 150. At block 306, the system may establish the memory bank 170 for the agent, which can include short-term memory 171 and long-term memory 180. Establishing the memory bank can include initializing the memory bank 170. At block 308, the system may determine one or more tools and/or actions to perform at least a portion of the computational task based on the memory bank 170. The system may determine based on the memory bank 170 of the agent whether the computational task requires access to the memory bank 170. If the system determines that the computational task requires access to the memory bank 170, the system may read all of the short-term memory 171 files and only relevant long-term memory 180 files. For example, if the computational task is associated with filtering functions for OSDK mode, then the system may only read the portions of the memory mode files 181 (which would include ontology documentation based on being in OSDK mode 192) associated with filtering functions. Conversely, if the computational task was not associated with filtering functions, this portion of the memory mode files 181 would not be read.

In some instances, the one or more tools and/or actions can be determined to perform the whole of the computational task. At block 310, the system may process a portion of or the entirety of the computational task, which can be accomplished by optionally using a determined tool. At block 312, the system may update the short-term memory 171 based on the processing of the portion or entirety of the computational task. If only a portion of the computational task is processed at block 310, the system may return to block 308 to determine one or more tools and/or actions to perform another portion of the computational task. If the entirety of the computational task is performed, although not shown in FIG. 3A, the system may receive a request to perform another computational task related to or different from the first computational task at block 304. In either instance, although not shown, the system may update the long-term memory store 185 based on the update to the memory bank in block 312. In each scenario, after processing performance of any portion of any computational task, the system can update the short-term memory 171 of the memory bank 170 at block 312. In some instances, each of these steps may be prompted by the user 150 either as input or as a computational task.

The system may cause execution of a search query in block 310 to process a portion of the computational task using an application programming interface ("API") to access the one or more data objects for the LLM 130. The APIs can be called by the agent processor 118 using the data processing service 120. In some instances, the API can be used to generate program code. Optionally, the system can delegate which agent to perform the search query or tasks associated with the search query using the agent coordinator 124. Each agent can be configurable through a set of settings associated with data object types for the one or more data objects. Accordingly, particular agents may be more adept at handling certain classes of tasks. Conversely, some agents may not be capable to perform some tasks.

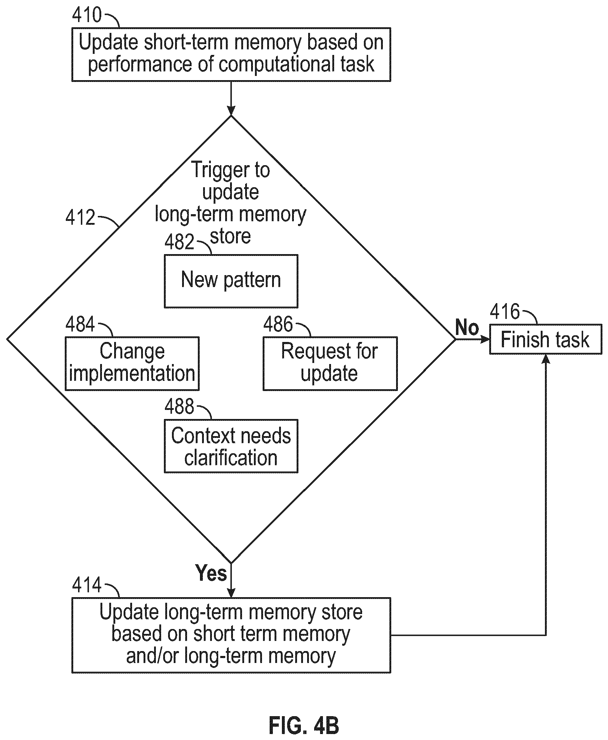

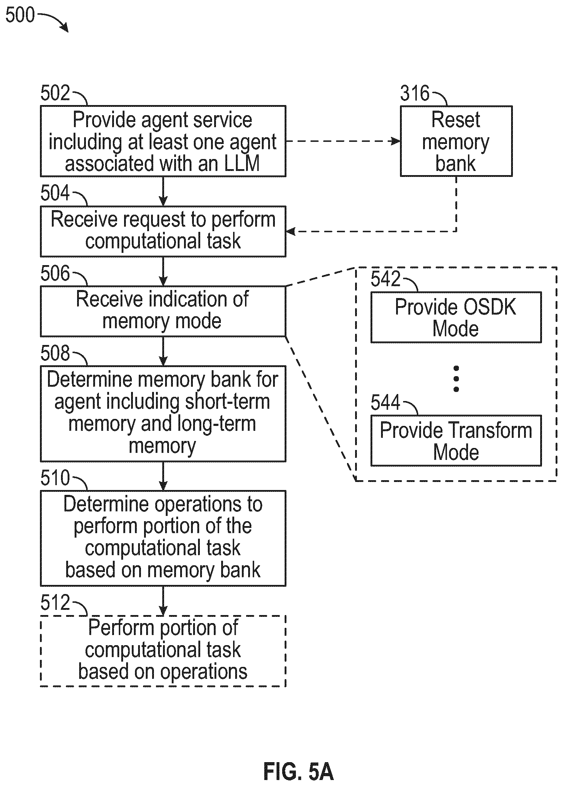

FIG. 3B is an example flowchart depicting an example method for the agent system 102 on how an agent can establish the memory bank according to various implementations. In various implementations, the method may be performed in part or in full by the computing environment 100 of FIGS. 1A, 1B, and/or 1C. It should be noted that not all of the blocks of FIG. 3B has to be performed. The example method can provide additional information associated with blocks 306 as described in FIG. 3A. At block 320, the system may implement short-term memory 171. As described in FIGS. 1B and 1C and further in in FIG. 5A, the short-term memory 171 implemented can be based on the compaction method or mode and the memory mode of the memory settings 190. At block 322, the system may access the long-term memory store 185. At block 324, the system may determine, by an LLM, a portion of the long-term memory store 185 based on the computational task. The long-term memory store 185 can be a local data store server or on a different server. If the system can communicate with the remote server to retrieve the portion of the files from the long-term memory store 185 using a tool. This tool can be utilized by an agent using the LLM 130. As described in FIGS. 1B and 1C and further in FIG. 4B, the portions of the long-term memory store 185 determined can be based on the memory mode of the memory settings 190 provided. At block 326, the system may implement long-term memory, and include the portion of the long-term memory store 185 that was determined in block 324.

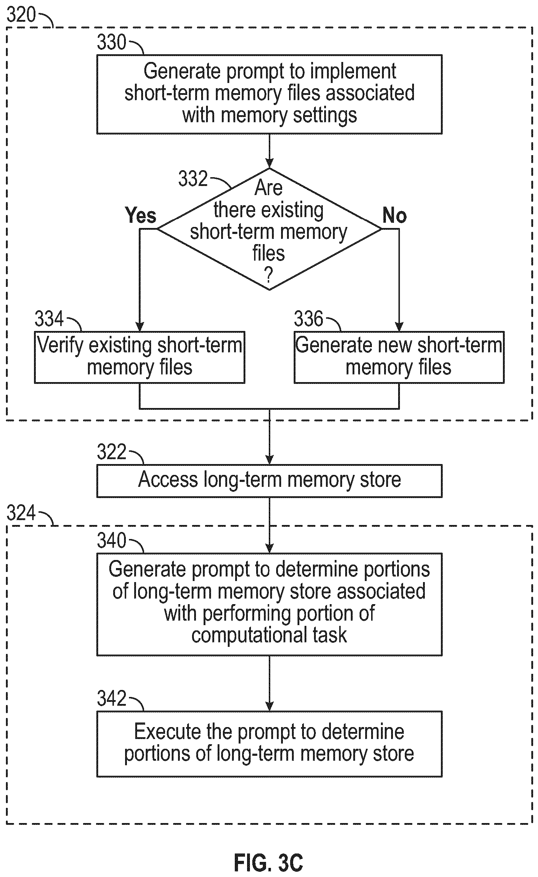

FIG. 3C is an example flowchart depicting an example method for the agent system 102 on how an agent can establish the short-term memory and the long-term memory of the memory bank according to various implementations. In various implementations, the method may be performed in part or in full by the computing environment 100 of FIGS. 1A, 1B, and/or 1C. It should be noted that not all of the blocks of FIG. 3C has to be performed. The example method can provide additional information associated with blocks 320 and 324 as described in FIG. 3B.

Blocks 330, 332, 334, and 336 may provide additional information associated with block 320 as described in FIG. 3B. At block 330, the system may generate a prompt to implement short-term memory 171 files associated with memory settings 190, which can include the compaction method/mode and/or the memory mode. At block 332, the system may determine if there are already existing short-term memory 171 files. For example, if the agent has not previously initialized a memory bank 170, then there would not already be existing short-term memory 171 files. Alternatively, if the current memory settings 190 differ from a prior session, then the types of short-term memory 171 files that exist may differ from what is currently requested. By one example, if the prior memory mode of a session was for maximal compression compaction mode 198 and the current memory mode requested for the session is verbose compaction mode 196, then the memory bank may be missing files for context 173, patterns 174, and progress 175. For all short-term memory 171 files that do exist, the system may move to block 334 and may verify the existing short-term memory files by reading them. Although not shown in FIG. 3C, if the verification of a short-term memory 171 file fails to verify at block 334, the system may move to block 336 to generate a new short-term memory 171 file for it instead. If there are not short-term memory 171 files or some are missing, the system may move to block 336 and may generate new short-term memory 171 files. The verified and generated short-term memory 171 files can be added to the directory of the memory bank 170.

At block 322, similar as described in FIG. 3B, the system may access the long-term memory store 185. Blocks 340 and 342 may provide additional information associated with block 324 as described in FIG. 3B. At block 340, the system may generate a prompt to determine portions of long-term memory store 185 that are associated with performing portions of the computational task. As described above, this determination can further be based on the memory mode of the memory settings 190. At block 342, the system may execute the prompt to determine portions of long-term memory store 185. Although blocks 320 and 324 are described separately, the system may implement both types of memory at the same time and, optionally, in a single prompt.

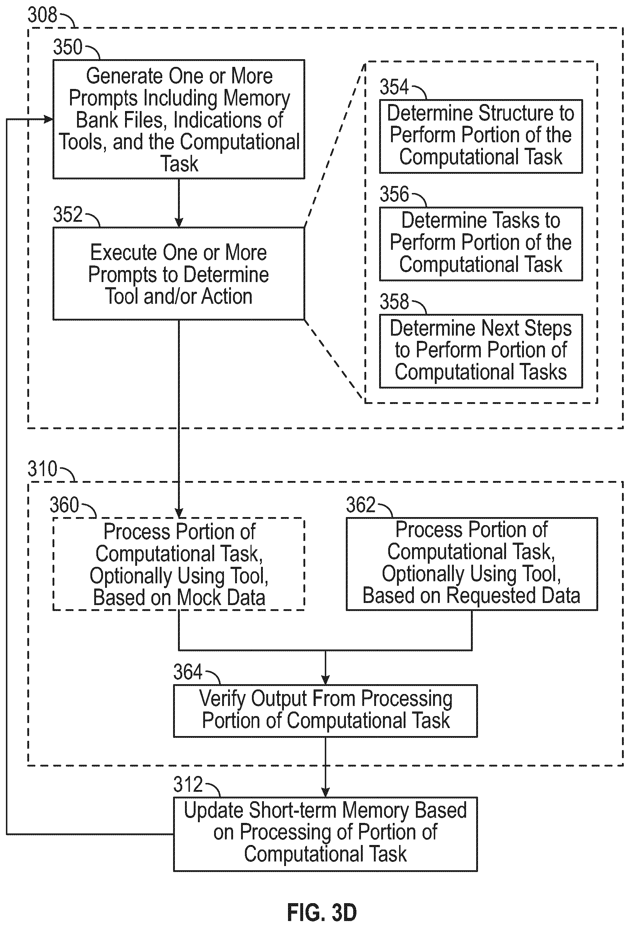

FIG. 3D is an example flowchart depicting an example method for the agent system 102 on how an agent can perform at least a portion of the computation task according to various implementations. In various implementations, the method may be performed in part or in full by the computing environment 100 of FIGS. 1A, 1B, and/or 1C. It should be noted that not all of the blocks of FIG. 3D has to be performed. The example method can provide additional information associated with blocks 308 and 310 as described in FIG. 3A.

Blocks 350, 352, 354, 356, and 358 may provide additional information associated with block 308 as described in FIG. 3A. At block 350, the system may generate one or more prompts that include the memory bank 170 files, indications of tools, and the computational task (or a portion of). At block 352, the system may execute the one or more prompts to determine one or more tools and/or actions. Executing the one or more prompts can optionally cause the agent to determine a structure to perform the computational task at block 354, to determine tasks to portion the computational task at block 356, determine next steps to perform the computational task at block 358, and/or the like.

Blocks 360, 362, and 364 may provide additional information associated with block 310 as described in FIG. 3A. At block 362, the system may process the computational task (or portions of) by optionally using the tool based on a requested data set associated with the computational task. For example, after receiving the computational task from the user 150 to "build an application," the user 150 may further provide instructions or tasks associated with the computational task, such as "initialize the memory bank," "review the memory bank to determine how to build the application," "use this data to build the application." At block 364, the system may optionally verify the output from processing a portion of the computational task before returning an output to the user. At block 312, similar as to what is described in FIG. 3A, the system may update the short-term memory 171 based on the processing of the portion of the computational task. The system may return to block 312 as described in FIG. 3A, particularly to block 350. In some instances, at block 360, prior to using requested data at block 362, the system may instead process the computational task using mock data, optionally using determined tools from block 352. Similarly, the system may optionally move to block 364 to verify the output using mock data. At block 312, the simulation using mock data can be used to update the short-term memory 171 before turning to block 350. This can advantageously provide a more accurate processing when returning to block 362 by being able to use the updates from the mock data simulation to generate a better prompt at block 308.

### Example Aspects Related to Compounding Memory for Computer-Based Agents Including Compaction to Long-Term Memory

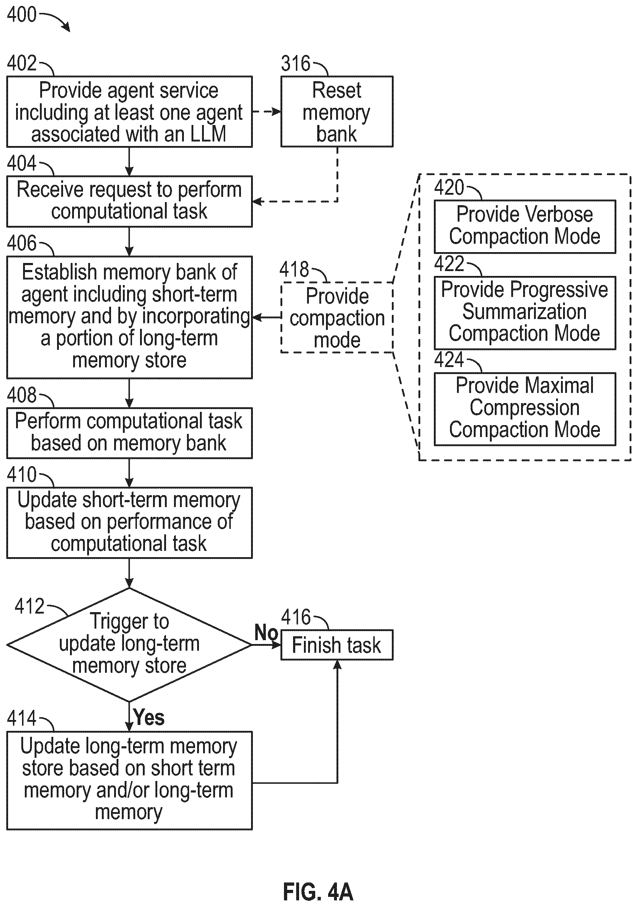

FIGS. 4A-C show flowcharts illustrating example operations for updating long-term memory stores based on the processing of a computational task of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 4A-C may be implemented, for example, by the one or more aspects of the agent system 102 (e.g., the agent service 106), various other aspects of the example computing environment 100, and/or the like.

FIG. 4A is an example flowchart depicting an example method 400 for the agent system 102 for compaction of short-term memory 171 into long-term memory 180 according to various implementations. In various implementations, the method 400 may be performed in part or in full by the computing environment 100 of FIGS. 1A, 1B, and/or 1C. It should be noted that not all of the blocks of FIG. 4A have to be performed.

At block 402, the system may provide agent service 106 that can include at least one agent of a plurality of agents that are associated with one or more LLMs 130. At block 316, the system may optionally reset the memory bank 170 of the agent. At block 404, the system may receive a request to perform a computational task from the user 150. At block 406, the system may establish the memory bank 170 for the agent, which can include short-term memory 171 and incorporating a portion of the long-term memory store 185 into long-term memory 180. This can be similar to the descriptions in FIGS. 3A and 3B. The establishing of the memory mode can optionally be further based on a memory mode provided in block 418, which can include providing a verbose compaction mode at block 420, providing a progressive summarization compaction mode at block 422, or providing a maximal compression compact mode at block 424, among others. As described in FIGS. 1A-C, the compaction mode can influence the files generated or verified for the short-term memory 171.

At block 408, the system may perform computational tasks based on the memory bank 170. Similar to the description of FIG. 3A, performance of the computational task can include performance of a portion of the computational task, and vice-versa. At block 410, the system may update the short-term memory 171 based on performance of at least a portion of the computational task. During the provision of a tool to perform the computational task, such as generating a search query, or performance of a portion of the computational task, such as by an agent causing execution of a search query using the tool, the agent can determine learnings that can provide insights and answers associated with the computational task. These learnings can include the reasoning completed by the agent and/or metadata analyzed throughout the tasks to arrive at the learnings. The learnings can be stored in the project brief 172 of the short-term memory 171.

Artifacts can be generated that can describe the code generated, the tools accessed, and the process of how the functions were executed to perform a portion of a computational task. These artifacts can be saved as part of the progress 175 files, patterns 174, and/or context 173. The artifacts can include data generated by the agent, such as data objects or, in some instances, new definitions of data object types. Accordingly, the artifacts can provide not just the output of the agent, but also how the output was generated. When operating in verbose compaction mode 196, these artifacts can be utilized to create visualizations of the process, such as tables, and/or used to determine how to change data objects defined by the ontology.

At block 414, the system may determine if there is a trigger to update long-term store 185, and if so, the system can move to block 414 to update the long-term memory store 185 based on short-term memory 171 and/or the long-term memory 180. The long-term memory 180 may be updated based on the short-term memory 171, before using the updated long-term memory 180 to update the long-term memory store 185. For example, if there is a trigger to update the long-term memory at block 412, the artifacts stored in the short-term memory cache can be upgraded to the long-term memory at block 414 to update data objects defined by the ontology 107 or the ontology 107 itself as part of the learnings 182 and/or the memory mode files 181 for mode patterns. Artifacts can be generated regardless of whether the portion of the computational task is successfully completed or not. The agent may enable finding errors in the code, which can be saved as artifacts.

If there either no trigger or the long-term memory store 185 is updated, the system may finish the computational task 416. Although not shown, the system may also proceed back to block 404 to receive another computational task to perform.

FIG. 4B is an example flowchart depicting an example method for the agent system 102 to determine when to compact short-term memory 171 into long-term memory 180 according to various implementations. In various implementations, the method may be performed in part or in full by the computing environment 100 of FIGS. 1A, 1B, and/or 1C. It should be noted that not all of the blocks of FIG. 4B has to be performed. The example method can provide additional information associated with block 412 as described in FIG. 4A. For example, triggers to update long-term memory store 185 in block 412, can include, but are not limited to, receiving a new pattern 482, when the system changes an implementation 484 during processing of the computational task, when the system needs context from the user 150 for clarification 488, and/or the user 150 requesting for an update 486. Further description is provided in FIGS. 1A-C.

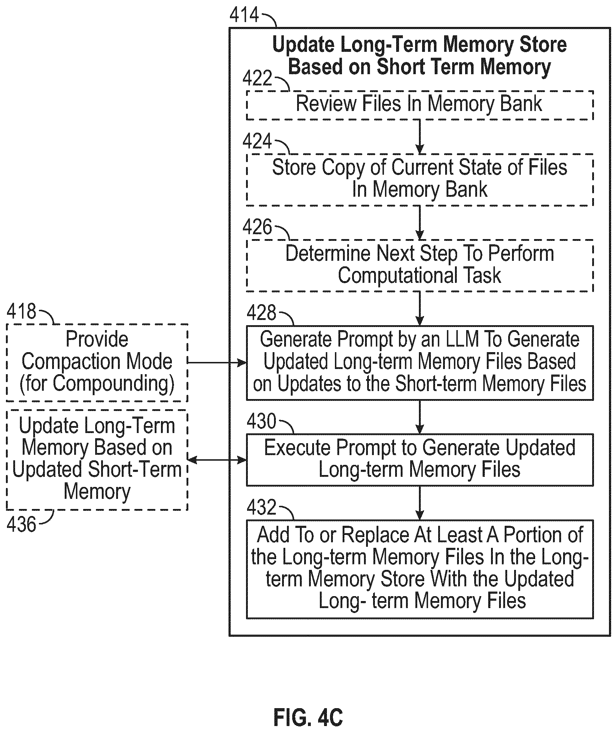

FIG. 4C is an example flowchart depicting an example method for the agent system 102 on how to compact short-term memory 171 into long-term memory 180 according to various implementations. In various implementations, the method may be performed in part or in full by the computing environment 100 of FIGS. 1A, 1B, and/or 1C. It should be noted that not all of the blocks of FIG. 4C has to be performed. The example method can provide additional information associated with block 414 as described in FIGS. 4A and 4B.

At block 422, the system may review the files in the short-term memory 171 and the long-term memory 180 in the memory bank. At block 424, the system may optionally store a copy of the current state of the files in the memory bank 170 and/or the long-term memory store 185. In some instances, the system may encounter an error during processing of a computational task that may be difficult to fix. In such cases, the agent can enable restoring to a previous state prior to generating the errors from the code that was saved at block 424 prior to the update the memory bank. The agent service 106 can include logs that provide checkpointing and state recovery. These logs can be stored within the context 173. The agent service 106 may generate and maintain a log to record events, timelines, received inputs, or generated outputs while agents process tasks or solve problems received from the user 150. The logs can further assist with debugging, forking, evaluation, and/or the like. The errors committed by agents may be recorded in a log generated and stored by the agent system 102. Advantageously, the agent processor 118 may pause the agent if the agent is committing more errors while processing a task using a particular tool and instruct the agent to use alternative tool(s) for processing the task.

At block 426, the system may optionally determine next steps to perform the computational task. At block 428, which can occur after block 422 in some instances, the system may generate a prompt, by an LLM, to generate updated long-term memory 180 files based on the updates to the short-term memory 171 files. Furthermore, as described in FIGS. 1B-C, the compaction mode provided in block 418 can be used to determine how the memory is compounded from the short-term memory 171. At block 430, the system may execute the prompt to generate updated long-term memory files. In some instances, optionally at block 436, executing the prompt can include using the short-term memory 171 files to update the long-term memory 180 files in the memory bank 170, which can then be used to update the long-term memory store 185. This can provide a visualization of differences or changes being made to the previous iteration of the long-term memory files, particularly the learnings 182 files and the memory mode patterns 183 file. At block 432, the system can add and/or replace at least a portion of the long-term memory files in the long-term memory store 185 with the updated long-term memory files generated from the memory bank 170.

### Example Aspects Related to Compounding Memory for Computer-Based Agents Including Memory Modes

FIGS. 5A-B show flowcharts illustrating example operations for establishing the memory bank based on a memory mode of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 5A-B may be implemented, for example, by the one or more aspects of the agent system 102 (e.g., the agent service 106), various other aspects of the example computing environment 100, and/or the like.

FIG. 5A is an example flowchart depicting an example method 500 for the agent system 102 to determine how to initialize memory files to determine operations to perform a computational task according to various implementations. In various implementations, the method 500 may be performed in part or in full by the computing environment 100 of FIGS. 1A, 1B, and/or 1C. It should be noted that not all of the blocks of FIG. 5A has to be performed.

At block 502, the system may provide agent service 106 that can include at least one agent of a plurality of agents that are associated with one or more LLMs 130. At block 316, the system may optionally reset the memory bank 170 of the agent. At block 504, the system may receive a request to perform a computational task from the user 150. This can be similar to the descriptions in FIGS. 3A and 3B.

At block 506, the system may receive an indication of memory mode, which can include, in an example, providing OSDK mode in block 542, providing transform mode in block 544, and/or the like. For example, although not shown, a functions mode can also be provided, amongst other modes. At block 508, the system may establish the memory bank 170 for the agent, which can include short-term memory 171 and incorporating a portion of the long-term memory store 185 into long-term memory 180 based on the received memory mode. The use of the memory mode for determining the memory bank 170 is further described in FIG. 1C. At block 510, the system may determine the operation to perform portions of the computational task based on the memory bank. Similar to the description of FIG. 3A and 4A, performance of a portion of the computational task can include performance of the entire computational task and vice-versa. At block 512, the system may optionally perform portions of the computational task (or the entirety of) based on the operations.

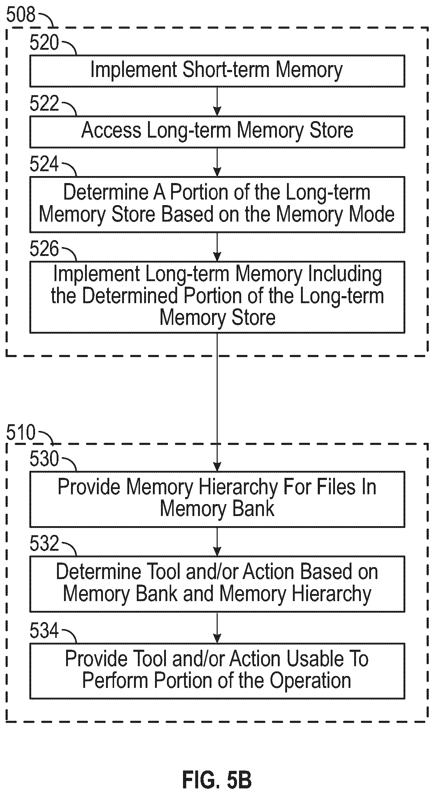

FIG. 5B is an example flowchart depicting an example method of the agent system 102 to use a provided memory mode to determine a tool for determining operations to perform a computational task according to various implementations. In various implementations, the method of FIG. 5B may be performed in part or in full by the computing environment 100 of FIGS. 1A, 1B, and/or 1C. It should be noted that not all of the blocks of FIG. 5B has to be performed. The example method can provide additional information associated with blocks 508 and 510 as described in FIG. 5A.

Blocks 520, 522, 524, and 526 may provide additional information associated with block 508 as described in FIG. 5A. The description of FIG. 3B can also provide further insight for block 508, and vice-versa. At block 520, the system may implement the short-term memory 171. At block 522, the system may access the long-term memory store 185. At block 524, the system may determine a portion of the long-term memory store 185 based on the provided memory mode. At block 526, the system may implement long-term memory 180 by including the determined portions from the long-term memory store 185. As described in FIGS. 1B-C, the memory mode can be used to determine memory mode specific files to add to the long-term memory 180 and the short-term memory 171, such as but not limited to the memory mode files 181, the memory mode patterns 183, and the memory mode definition files 176.

Blocks 530, 532, and 534 may provide additional information associated with block 510 as described in FIG. 5A. At block 530, the system may optionally provide a memory hierarchy 179 on how the files in the memory bank 170 should be weighted against each other. At block 532, the system may determine one or more tools and/or actions based on the memory bank to perform the computational task. If a memory hierarchy is received in block 530, it can be used by the system to determine the one or more tools and/or action. At block 532, the system may provide the tools and/or actions usable to perform the portion of the operation for the computational task. For example, the system provide an indication of OSDK mode at block 542 as a setting on how to utilize the memory bank 170. When operating in OSDK mode, the memory mode files 181 in the long-term memory can include ontology documentation, which can be generated using an ontology software development kit (OSDK). The ontology documentation can include API and SDK information that outlines how to use the OSDK. The agent can query the ontology documentation to perform data object transformations, search arounds, and perform actions on data objects of the data object type defined by an ontology associated with the ontology documentation. Agents may operate using a design-specific language (DSL). However, a DSL may reduce the expressivity of agents (and thereby the agency of the agent). The OSDK can advantageously enable the agent to write and operate in any language it prefers, such as any programming language (e.g., Python, cURL, TypeScript, Java) and to fully wield and use the ontology 107. For example, the agent, operating with the ontology documentation, may thereby be able to handle not just specific tasks (e.g., "go summarize this thing"), but higher-order tasks (e.g., "go and optimize the supply chain"). Accordingly, the OSDK can become a universal orchestration language that can let the entire agent life cycle access, in a read and write way, the entirety of the ontology and data objects defined by the ontology. The other memory files can improve the agent's ability to perform the computational task, such as by providing guidance on past patterns or insights on the function to generate more efficient search queries.

### Example Aspects Related to User Interfaces and Related Functionality

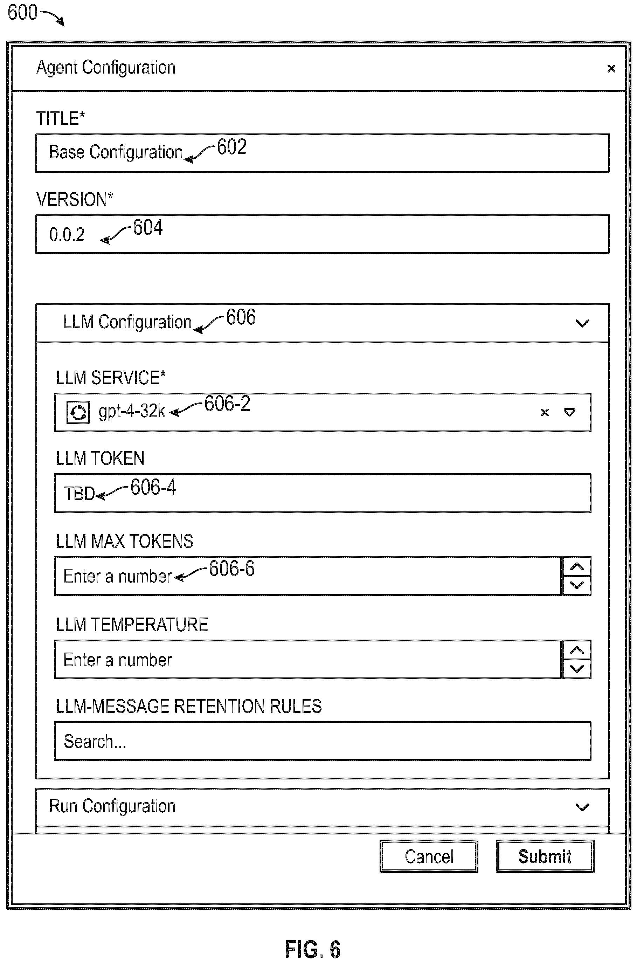

FIGS. 6, 7, 8A, 8B, 9, and 10 show example user interfaces that illustrate utilizing the agent service 106 of the agent system 102 of FIGS. 1A, 1B, and 1C to automatically solve complex problems through optional coordination among agents employed by the agent service 106 without being constrained by capabilities of individual agents, according to various implementations of the present disclosure. The example user interfaces illustrated in FIGS. 6, 7, 8A, 8B, 9, and 10 may be optionally presented through the user interface module 104 of the agent system 102 and/or a user interface of the user 150.

The example user interfaces illustrated in FIGS. 6, 7, 8A, 8B, 9, and 10 may optionally allow the user 150 to interact with the agent system 102 for configuring agents, interacting with the agents, and verifying results generated by the agents. In various implementations, the user 150 may configure the accessories 105, the agent storage 126, and an ontology 107, an LLM, tools, other aspects associated with one or more agents through operating on the example user interfaces. For examples, the user 150 may configure which tools (e.g., a calculator or other tools) an agent can utilize to process tasks. The user 150 may also configure types of child-agents to which the agent may hand off tasks or sub-tasks, and a maximum number of handoffs that can be utilized by the agent. Additionally and/or optionally, the user 150 may configure types of LLMs and/or machine learning (ML) models accessible to the agent through the example user interfaces. The example user interfaces may further allow the user 150 to view and track various configurations (e.g., through version control mechanisms noted above) that are available to configure an agent or child-agents of the agent. Advantageously, the user 150 may preserve a specific configuration of an agent that is tested to be effective for solving a specific type of problems while experimenting new configurations based on minor or minimal adjustments to the specific configuration without losing the efficacy of the specific configuration by interacting with the example user interfaces.

In various implementations, the user 150 may optionally evaluate or verify results generated by agents through manipulating the example user interfaces. In some examples, the example user interfaces may present information related to an individual run. For example, the information related to the individual run may include the initial prompt and subsequent prompts received by an agent from the user 150, starting and end timestamps of the individual run, status (e.g., completed, succeeded, failed, or the like) of the individual run, timelines of occurrence of events while the agent executing the individual run, intermediate results generated by the agent, child-agents to which the agent hands off tasks, number of errors committed by the agent when utilizing some tools, or the like. Advantageously, the example user interfaces may allow the user 150 to more efficiently evaluate or verify performances of agents through, for example, reviewing steps or actions taken by an agent to process a task.

Optionally, example user interfaces may present information related to accessories 105 utilized by agents to process tasks. In various implementations, example user interfaces may visualize relationships between at least some of the accessories 105 utilized by one or more agents for solving some problems. For example, example user interfaces may present interactive graphical representation(s) of at least some of the accessories 105 used by an agent. More specifically, interactive graphical representation(s) may represent at least some of the accessories 105 as nodes and represent relationships of at least some of the accessories 105 as edges. For example, an interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, graphical representation(s) of the accessories 105 enables the user 150 to efficiently review and track what accessories 105 are utilized by agents to process tasks and how an accessory is related to another. Additionally and/or optionally, the agent system 102 may allow the user 150 to create one or more accessories 105 by operating on example user interfaces.

As shown in FIG. 6, the user interface 600 can optionally include a display portion 602 that shows a title of a configuration of an agent. The title of the configuration of the agent can be editable by the user 150 to facilitate the user to manage configurations that are utilized to configure the agent. Here, the display portion 602 states "Base Configuration," which specifies the title of the configuration of the agent (e.g., one of the agents) that the user interface 600 is utilized to configure. In various implementations, agent(s) may be configurable based on various settings or parameters, where the agent(s) may share one or more common building blocks (e.g., an agent logic that defines how agents operate and/or interact with each other, tools, and/or users) but may be configured to various configurations using the user interface 600.

The user interface 600 can optionally further include a display portion 604 that shows a version of the configuration of the agent. The version of the configuration of the agent can also be editable by the user 150 to facilitate the user to manage configurations that are utilized to configure the agent. Here, the display portion 604 shows "0.0.2," indicating the version number of the configuration that the user interface 600 is utilized to configure. Advantageously, version controlled configurations may allow the agent system 102 and/or the user 150 to robustly and effectively track operations of agents, adapt agents among various configurations, or contrast strengths and weakness of an agent when operating under disparate configurations.

The user interface 600 can optionally include a display portion 606 that includes various configurations of an LLM utilized by an agent. Here, the display portion 606 reads "LLM Configuration," indicating configurations of the LLM employed by the agent can be configured by the user 150 through operating on sub-portion(s) (e.g., a sub-portion 606-2, a sub-portion 606-4, or a sub-portion 606-6) of the display portion 606. The LLM may assist the agent to handle requests from the user 150 and/or process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, the agent may allow the user 150 to query internal or third-party data using the LLM (e.g., a QA (question and answer) LLM) that is trained to generate answers from user queries. In various implementations, the LLM utilized by the agent may be locally hosted, cloud managed, accessed via one or more Application Programming Interfaces ("APIs"), and/or any combination of the foregoing and/or the like. Data that may be processed by the agent through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As shown in FIG. 6, optionally, the sub-portion 606-2 of the display portion 606 can allow the user 150 to switch a model of the LLM employed by the agent. Here, the sub-portion 606-2 shows "gpt-4-32k," indicating a type of the model of the LLM. The sub-portion 606-2 may provide the user 150 the flexibility of easily swapping between various language models employed by the agent to provide various services through configuring the agent using the sub-portion 606-2. For example, the user 150 may swap the LLM (e.g., switching between GPT-4, GPT-3, and GPT-2) for analyzing information to provide recommendations (e.g., to which distribution centers shipment orders should be placed) based on analyses. Such model swapping flexibility provided by the sub-portion 606-2 may be beneficial in various aspects, such as experimentation and adaptation to different models based on specific use cases or requirements, providing versatility and scalability associated with services rendered by the agent system 102.

The display portion 606 can optionally further include at least the sub-portion 606-4 and the sub-portion 606-6 that allows the user 150 to configure various aspects of the LLM that are related to tokens utilized by the LLM. Here, the sub-portion 606-4 shows "TBD," indicating the token(s) that are utilized by the LLM is yet to be defined; the sub-portion 606-6 shows "Enter a number," prompting the user 150 to enter a number of maximum token size of prompts to the LLM. As such, the user 150 may flexibly reconfigure the agent from one LLM configuration to another LLM configuration. Advantageously, the user interface 600 enables the user 150 to swap or switch agent configurations related to LLM(s) employed by the agent for achieving various objectives. For example, the user 150 may feed the same input(s) to two agents that are configured the same except LLMs utilized by the two agents to evaluate or benchmark performances of the LLMs.

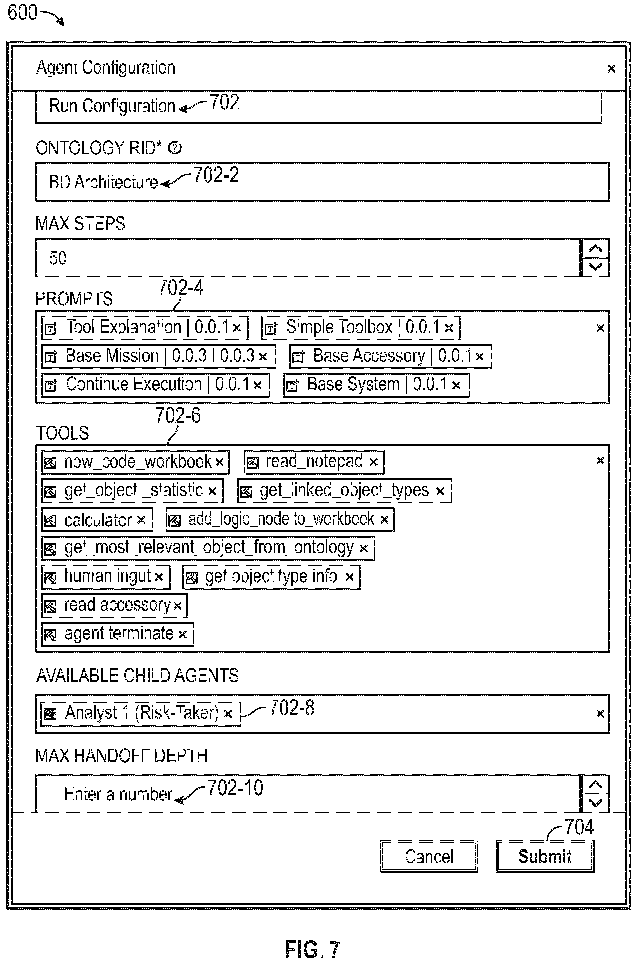

With reference to FIG. 7, the user interface 600 can optionally further allow the user 150 to configure aspects of a run that is to be executed by an agent, such as an ontology 107, tools, prompts, or child-agents utilized by the agent for executing the run. As shown in FIG. 7, the user interface 600 can include a display portion 702 that includes various configurations of the agent for executing a run that can represent an interaction between the user 150 and the agent system 102 for processing tasks or solving problems received from the user 150. Configurations associated with the run may be set by the user 150 through operating on sub-portions (e.g., a sub-portion 702-2, a sub-portion 702-4, a sub-portion 702-6, a sub-portion 702-8, or a sub-portion 702-10) of the display portion 702, and stored by the agent system 102 to facilitate automation orientation and/or co-pilot orientation. The configurations related to the run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Here, the display portion 702 reads "Run Configuration."

As shown in FIG. 7, optionally, the sub-portion 702-2 of the display portion 702 can allow the user 150 to specify an ontology 107 associated with the agent. Here, the sub-portion 702-2 reads "BD Architecture," indicating the ontology 107 associated with the agent may be created based on the notion of business development. Advantageously, when the agent is tasked to solve a problem related to a new subject matter (e.g., business development) during the run, the user 150 may configure the agent to utilize the ontology 107 that is created or updated based on the new subject matter.

The display portion 702 can optionally further include the sub-portion 702-4 that may allow the user 150 to define types of prompts or inputs the agent is to receive for processing tasks during the run. Here, the sub-portion 702-4 lists "Tool Explanation | 0.01," "Simple Toolbox | 0.01," "Base Mission | 0.03 | 0.03," "Base Accessory | 0.01," "Continue Execution | 0.01," and "Base System | 0.01," indicating names and versions of the prompts or inputs that the agent is to receive during execution of the run. For example, "Base Accessory | 0.01" indicates that the agent is to be provided with an accessory with a version number "0.01" for executing the run. Advantageously, the button 704 allows the user 150 to indicate to the agent types of prompts, inputs, or tasks that the agent receives for the run.

The display portion 702 can also optionally include the sub-portion 702-6 that may allow the user 150 to equip the agent with various tools to enable efficient execution of the run. As noted above, the tools may allow the agent to interact with the operational system, a database, the ontology 107, internal databases and system, and/or external systems. The tools can be any set of logic or rules that can be provided to the agent for the agent's use to obtain additional information, such as by generating a request for access to additional data via a plug-in. The tools can be used by the agent to generate requests (that may be fulfilled by the agent system 102) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Here, tools listed in the sub-portion 702-6 include "new_code_workbook," "read_notepad," "get_object_statistic,""get_linked_object_types,""calculator,""add_logic_node_to_workboo k," "read_accessory," "get_most_relevant_object_from_ontology," "get_object_type_info," "agent_terminate," "human_input."

As shown in FIG. 7, optionally, the display portion 702 may further include the sub-portion 702-8 that may allow the user 150 to configure available child-agent(s) to which the agent may handoff tasks or sub-tasks. Here, the sub-portion 702-8 reads "Analyst 1 [Risk-Taker]," indicating the child agent may be specialized in risk taking analysis. When the agent determines that a task which the agent is processing requires specialized capability of analyzing risks, the agent may handoff some or all of the task to another agent (or sub-agent) that has been trained or tested to efficiently analyze risks, where the agent/sub-agent has been configured by the user 150 and/or the agent system 102 to be available to the agent through operating on the sub-portion 702-8.

The display portion 702 may further include the sub-portion 702-10 that may allow the user 150 to set a maximum number of handoffs for the agent. Here, the sub-portion 702-10 reads "Enter a number," indicating to the user 150 to input a number to limit the number of handoffs for the agent during execution of the run. Advantageously, limiting the number of handoffs on some or all types of tasks may increase security of the agent system 102.

Although not illustrated in FIGS. 6-7, the user interface module 104 may optionally further allow the user 150 to configure various types of handoffs that an agent can use during a run. For example, through the user interface module 104, the user 150 may configure the agent to be able to use blocking handoffs, where the agent may handoff a task to a child agent, pauses until receiving a result from the child agent, and then proceeds after receiving the result. As another example, through the user interface module 104 the user 150 may configure the agent to be able to use parallel handoffs, where the agent may handoff tasks in parallel to multiple child agents, and, without waiting for results from the child agents, continues to process other tasks or sub-tasks that the agent is processing without handing off. Advantageously, various handoffs schemes configurable by the user 150 may enable the agent service 106 to more flexibly and efficiently utilize agents to process tasks based on characteristics of the tasks.

The user interface 600 can also include a button 704 that may allow the user 150 to submit the configurations described in FIGS. 6-7 above to configure the agent for processing tasks. By clicking on the button 704, the user 150 may cause the agent system 102 (e.g., the agent service 106) to configure the agent based on demands of the user 150. Advantageously, allowing the user 150 to configure agents based on various user objectives may enhance scalability and reusability of the agent system 102.

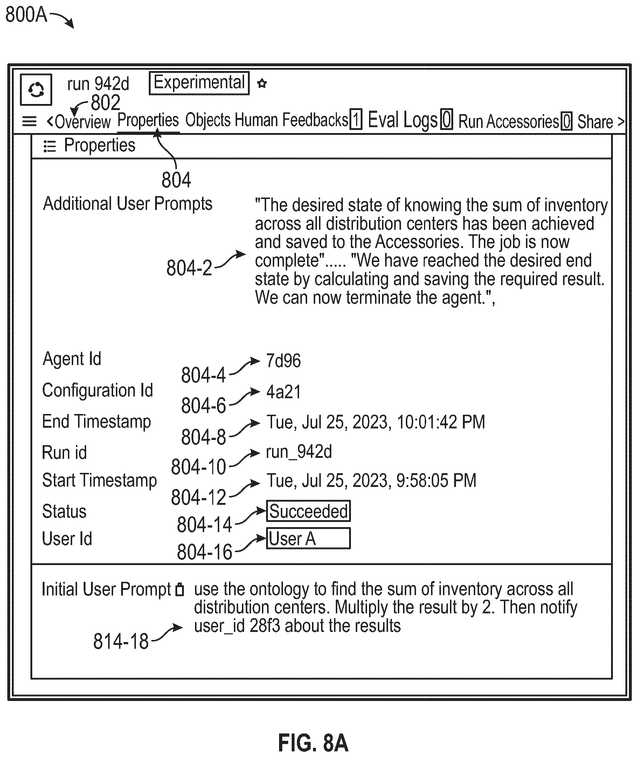

FIGS. 8A-8B show example user interfaces 800A and 800B depicting optional information related to a run to allow the user 150 to track or monitor problem solving processes went through by agents to evaluate the soundness of steps taken or decisions made by agents. The agent system 102 may capture and synchronize data and/or information associated with a run into the ontology associated with the database 209 of the database module 108. As such, data utilized by the agent system 102 may be organized and linked to relevant context for providing a comprehensive knowledge base for evaluation, verification, and analysis through presenting the example user interfaces 800A and 800B to the user 150.

In various implementations, the agent system 102 may optionally utilize an interaction data object (similar to data object 210) to store information and/or data associated with a run of the user 150 in the database 209 of the database module 108 for review and evaluation by the user 150. The interaction data object may include data objects or may be linked to data object(s) that represent documents, data sources, timestamps of events (e.g., when one or more user queries of the user are received and/or responded), profiles of the user 150, or the like that are associated with the run. For example, initial and subsequent prompts from the user 150 and/or steps taken by agents to fulfill objectives of the user 150 can be stored by the agent system 102 using the interaction data object and/or data objects associated with the interaction data object for later evaluation. Besides evaluation by the user 150, the agent system 102 may utilize the interaction data object and/or additional data objects to automatically generate evaluation reports for various purposes, such as evaluating the performances of agents of. Advantageously, interaction data objects stored in the database 209 of the database module 108 may enable information associated with the run to be easily reviewable. The agent system 102 may further utilize information stored using the interaction data object and/or other data objects to evaluate if agents are not processing tasks efficiently.

As illustrated in FIG. 8A, the user interface 800A can optionally include a display portion 802 and a display portion 804 that enable the user 150 to navigate information related to a run. Here, the display portion 802 reads "Overview," indicating the user 150 can review overview of the run by navigating to the display portion 802. The display portion 804 reads "Properties," indicating properties associated with the run can be reviewed by the user 150 by navigating to the display portion 804. As indicated in the user interface 800A, the user 150 may be navigating information associated with the run within the display portion 804.

The user interface 800A can further include a display portion 804-2, a display portion 804-4, a display portion 804-6, a display portion 804-8, a display portion 804-10, a display portion 804-12, a display portion 804-14, a display portion 804-16, and a display portion 814-18 that illustrate various properties associated with a run. The display portion 814-18 shows an initial user prompt from the user 150 to the agent system 102 for the run. Here, the display portion 814-18 reads "use the ontology to find the sum of inventory across all distribution centers. Multiply result by 2. Then notify user_id 28f3 about the results." The display portion 814-18 may indicate to an agent (e.g. the agent that is configured through the example user interface 600) to use the ontology specified in the sub-portion 702-2 to process a task (e.g., find the sum of inventory across all distribution centers) specified by the initial user prompt.

Optionally, the display portion 804-2 shows additional user prompts received by the agent system 102 from the user 150 during the run. Here, the display portion 804-2 reads "The desired state of knowing the sum of inventory across all distribution centers has been achieved and saved to the accessories. The job is now complete.... We have reached the desired end state by calculating and saving the required result. We can now terminate the agent." As such, the display portion 804-2 indicates that the user 150 has instructed the agent system 102 (e.g., the agent service 106) to terminate processing the task after the request from the user 150 is fulfilled.

The display portion 804-4 optionally shows an identification number (e.g., an agent ID) of an agent that is employed in the run to fulfill request(s) from the user. Here, the display portion 804-4 reads "7d96." The display portion 804-4 may enable the user 150 to effectively identify the agent that is utilized to execute the run such that the user 150 may efficiently associate the performance with the agent that is responsible for executing the run.

The display portion 804-6 optionally shows an identification number of a configuration (e.g., a configuration ID) of the agent of the display portion 804-4. Here, the display portion 804-6 reads "4a21," specifying the ID of the configuration that is used to configure the agent for executing the run. Advantageously, assigning IDs to configurations of an agent may allow the user 150 and/or the agent system 102 to robustly and effectively track operations of agents, adapt agents among various configurations, or contrast strengths and weakness of an agent when operating under disparate configurations.

The display portion 804-8 optionally indicates an end time (e.g., an end timestamp) of the run. Here, the display portion 804-8 reads "Tue, July 25, 2023, 10:01:42 PM," indicating the time the run completed. The display portion 804-12 indicates a start time (e.g., a start timestamp) of the run. Here, the display portion 804-12 states "Tue, July 25, 2023 9:58:05 PM," indicating the time the time the run started. Advantageously, the display portion 804-8 and the display portion 804-12 allow the user 150 to gauge amount of time the agent with the agent ID shown in display portion 804-4 takes to complete the run.

The display portion 804-10 optionally shows an identification number (e.g., a run ID) of the run. Here, the display portion 804-10 shows "run_942d." The display portion 804-14 shows a status of the run. Here, the display portion 804-14 reads "Succeeded," indicating that the run has been successfully completed and the request(s) of the user 150 for the run have been fulfilled. The display portion 804-16 shows an identification (e.g., a user ID) of the user 150 that may initiate the run. Here, the display portion 804-16 shows "User A."

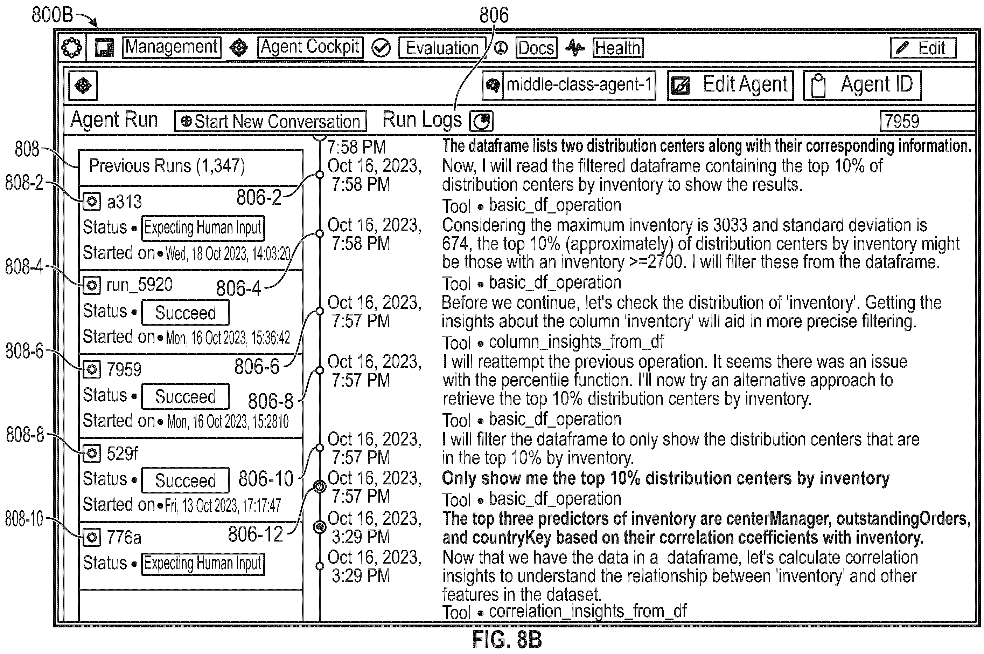

FIG. 8B illustrates the example user interface 800B presenting a log 806 of a run to a user (e.g., the user 150). The agent system 102 may generate and maintain the log 806 to record events, timelines, received inputs, or generated outputs while an agent processes tasks during the run. The log 806 may describe events that occurred while the agent processes tasks and corresponding timestamps, inputs received from users and/or the system, and/or results generated by the agent while processing tasks during the run. Although not illustrated in FIG. 8B, the log 806 may further record the number of errors committed by the agent while processing tasks. Advantageously, the log 806 may allow the user 150 to effectively monitor or evaluate the performances of agents during the run for taking appropriate measures (e.g., retrain an agent for processing a particular type of task in response to monitoring a high error number from the agent while processing the particular type of task).

As shown in FIG. 8B, the log 806 may include a message portion 806-12, which may indicate a supplemental instruction provided by the user 150 to the agent system 102 through the user interface module 104. The supplemental instruction (as well as initial prompts from the user 150) may be received by the agent coordinator 124, which transmits to the agent that executes the run. Here, the message portion 806-12 reads "only show me the top 10% distribution centers by inventory" with a timestamp of "Oct 16, 2023, 7:57PM." The message portion 806-12 allows the user 150 to review when user input(s) is provided to the agent during the run.

The log 806 may also include a message portion 806-2, a message portion 806-4, a message portion 806-6, a message portion 806-8, a message portion 806-10, and a message portion 806-12. Each of the message portions 806-2, 806-4, 806-6, 806-8, and 806-10 indicates an action taken by an agent during the run and a time the action was taken in response to receiving input(s) as indicated in the message portion 806-12 from the user 150. For example, the message portion 806-2 indicates a time when the agent read filtered data frame containing the top 10% of distribution centers by inventory. Here, the message portion 806-2 reads "Now, I will read the filtered data frame containing the top 10% of distribution centers by inventory to show the results" with a timestamp on "Oct 16, 2023, 7:58PM." As such the message portion 806-2 allows the user 150 to review the action taken by the agent for various purposes, such as reviewing the soundness of steps taken or decision made by the agent responsive to user inputs.

The user interface 800B may further include a display portion 808 that lists previous runs executed by one or more agents for fulfilling requests from the user 150. Here, the display portion 808 states "Previous Run (1,347)," indicating the agent system 102 may have executed 1347 runs for the user 150. Under the display portion 808 are a sub-portion 808-2, a sub-portion 808-4, a sub-portion 808-6, a sub-portion 808-8, and a sub-portion 808-10. Each of the sub-portions 808-2, 808-4, 808-6, 808-8, and 808-10 may respectively summarize a previous run executed by the agent system 102 for the user 150. For example, the sub-portion 808-8 shows an identification number (e.g., 529f) of a previous run, along with a status (e.g., "Succeeded") and start time (e.g., "Fri, 13 Oct 2023, 17:17:47") of executing the previous run.

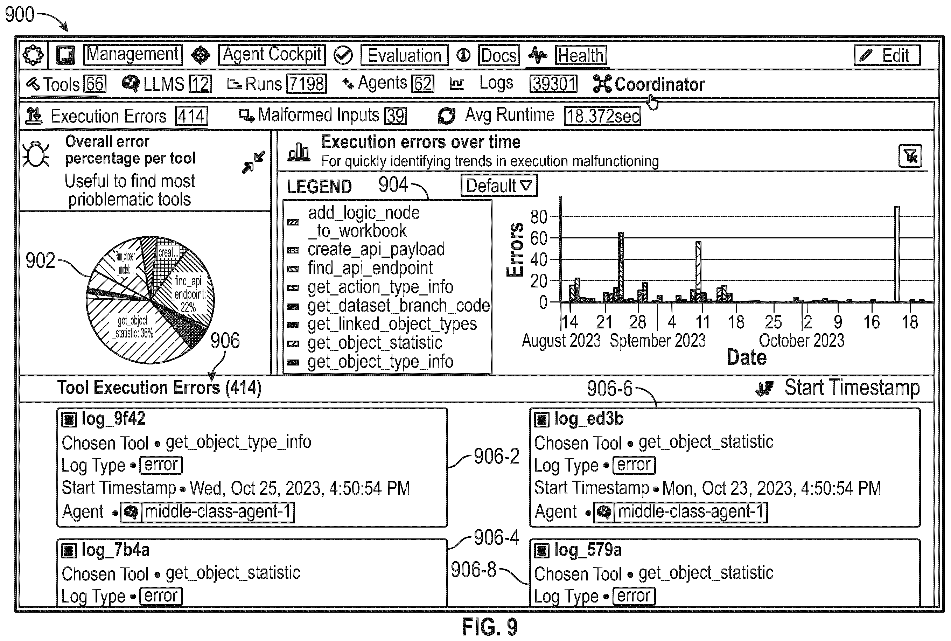

With reference to FIG. 9, an example user interface 900 illustrates errors committed by agents while using various tools for processing tasks requested by the user 150. The errors committed by agents may be recorded in a log generated and stored by the agent system 102 in a storage (e.g., the database module 108) of the agent system 102. Advantageously and optionally, the errors allow the user 150 to evaluate performance of the agents while using various tools, enabling the user 150 to provide feedback to the agent system 102 for improving the performances of the agents. Additionally, error information associated with agents may be used by the agent coordinator 124 to supervise or manage the agents. For example, the agent coordinator 124 may pause the agent if the agent coordinator 124 determines that the agent is committing more errors while processing a task using a particular tool, and instruct the agent to use alternative tool(s) for processing the task.

The user interface 900 may include a display portion 902 and a display portion 904. Here, the display portion 902 presents a pie chart illustrating percentages of errors committed by agents while using particular tools. For example, the display portion 902 shows that 36% of total errors committed by agents while using tools come from using a tool "get_object_statistic" and 22% of total errors committed by agents while using tools come from using another tool "find_api_endpoint." The display portion 904 provides legends of various tools illustrated in the pie chart of the display portion 902 for the user 150 to more efficiently identify tools with which agents committed most errors.

The user interface may optionally include a display portion 906 that provides logs that record more detailed information about the errors depicted in the display portion 902 and the display portion 904. The display portion 906 may include sub-portions 906-2, 906-4, 906-6 and 906-8 that respectively provide an error log of one of the errors depicted in the display portion 902. For example, the sub-portion 906-2 includes an error log associated with a tool "get_object_type_info." Here, the sub-portion 906-2 includes information that reads "log_9f42" (indicating an identification number of the error log), "Chosen Tool: get_object_type_info" (indicating a name of the tool used by an agent while committing the error), "Log Type: error" (indicating a type of the log is an error log), "Start Timestamps: Wed, Oct 25, 2023, 4:50:54 PM" (indicating a start time of the log), and "Agent: middle-class-agent-1" (indicating a name of the agent that commits the error while using the tool).

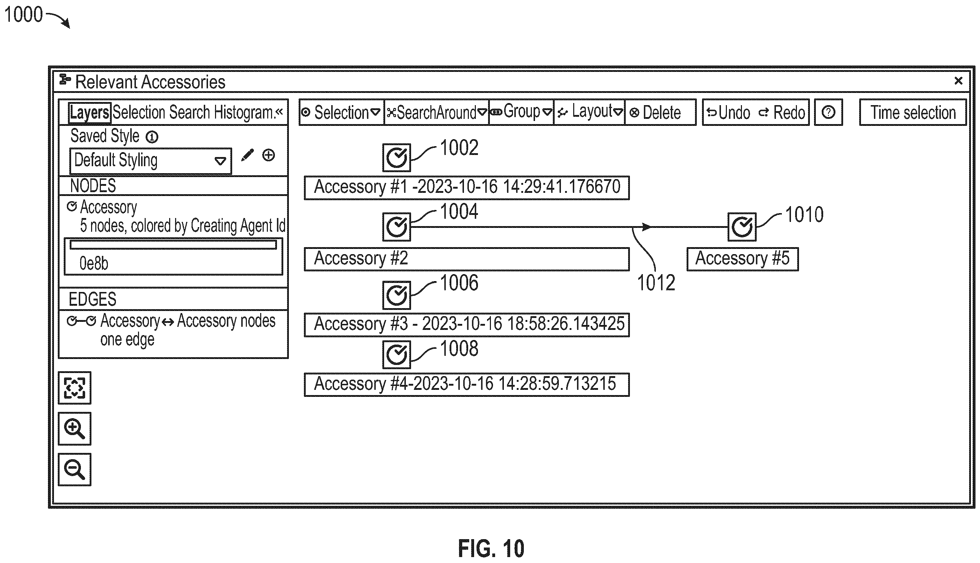

With reference to FIG. 10, an example user interface 1000 illustrating optional relationships among accessories 105 utilized by the agent system 102 will be described. The user interface 1000 includes a node 1002, a node 1004, a node 1006, a node 1008, a node 1010, and an edge 1012 that connects the node 1004 and the node 1010. Each of the nodes 1002, 1004, 1006, 1008, and 1010 represents an accessory that is used by agent(s) for processing tasks submitted by the user 150. For example, the node 1006 represents an accessory (e.g., Accessory #3) along with a time that indicates a time (e.g., 2023-10-16 18:58:26) the accessory was created.

As noted above, the agent system 102 can track a lineage of an accessory (e.g., one of the accessories 105) to know based on what the accessory is generated and/or whether the accessory is further utilized to generate other information. For example, the agent system 102 can record a lineage of the accessory, where the lineage shows what tool(s) are utilized to generate the accessory and the accessory are utilized to generate other accessories. The lineage of the accessory may include metadata that can enable users or the system to efficiently track from where the accessory comes into being and to where the accessory is used. In various implementations, lineages of accessories 105 may be presented to users through interactive graphical representations that include nodes (e.g., representing accessories) and/or edges (e.g., representing connections between accessories) of graphical user interfaces (GUIs) as illustrated in the user interface 1000. Advantageously, the lineage of the accessories 105 enables the agent system 102 to more efficiently verify or evaluate the usefulness of the accessories 105. Once an accessory is stored in the agent storage 126, the agent system 102 may further evaluate correctness or accuracy of information contained in the accessory. For example, if an agent or the agent system 102 determines that the accessory contains accurate information, the agent or the agent system 102 may keep the accessory in an agent storage. But if the agent or the agent system 102 determines that the accessory contains inaccurate information, the agent or the agent system 102 may update the accessory and/or delete the accessory from the agent storage 126.

As shown in the user interface 1000, the "Accessory #2" represented by the node 1004 is connected to the "Accessory #5" represented by the node 1010 through the edge 1012 that points from the node 1004 toward the node 1010. As such, the edge 1012 indicates that the "Accessory #5" was created based on "Accessory #2."

### Example Aspects Related to Ontology-Based Memory Compounding

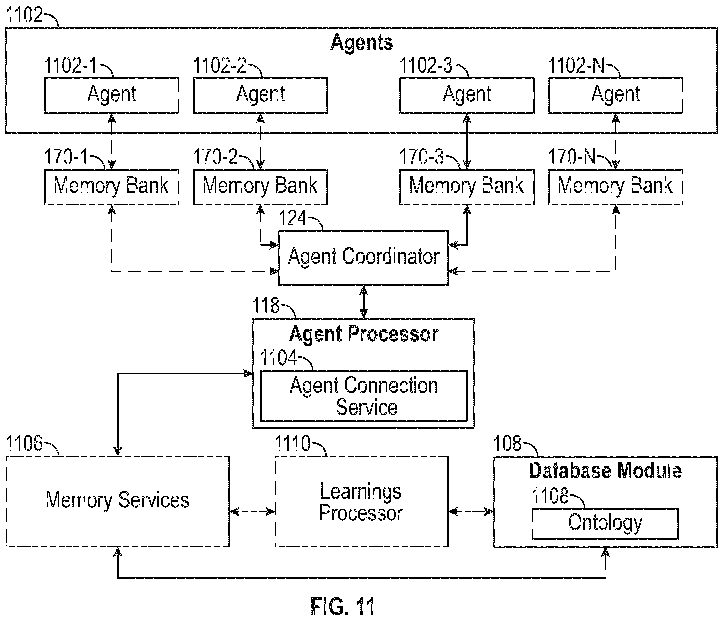

FIG. 11 depicts example connections between various modules associated with the agent system 102 of FIG. 1A, including the agents 1102 including agents 1102-1, 1102-2, 1102-3, 1102-N, memory banks 170-1, 170-2, 170-3, 170-N for each agent or sub-agent, the agent coordinator 124, the agent processor 118 including the agent connection service 1104, memory services 1106, learnings processor 1110, and the database module 108 including the ontology 1108. The description of FIG. 11 can provide insight for FIGS. 1A-1C, 3A-D, 4A-4C, and 5A-5B. The example connection illustrates an implementation of the system using short-term memory 171 and long-term memory 180 in combination with data objects of data object types defined by an ontology. The use of the ontology can provide a distributed component library to maintain discrete knowledge, provide a collective intelligence to compound learnings from all agents into a shared memory, surprise-based learning to prioritize unexpected or high-signal discoveries for preservations, dynamic context assembly for task specific memory based on relevance and utility, and providing knowledge graphs to form connections between components based on usage patterns. Advantageously, the system can provide knowledge persistence to preserve valuable learnings from being lost between agent sessions, cross-team learning so one agent can benefit all agents, accelerate onboarding so that new projects can immediately leverage organization knowledge, continuous improvement to become more capable over time through each experience, reduced redundancy to prevent multiple teams from solving the same problems repeatedly, and institutional memory that persists beyond individual projects.

The agent connection service 1104 can include an interface that enables agents 1102 to retrieve and contribute knowledge as memory. The agent connection service can provide HTTP API and model context protocol (MCP) interfaces for integration between the agents 1102 (such as through the agent coordinator 124) and the memory services 1106. The agent connection services can include an API server to handle HTTP requests from agents 1102, an MCP server for implementing model context protocol for direct agent integration, and connection logic for managing communication with the memory services 1106. The agent connection services 1104 can retrieve data objects of data object types defined by the ontology 1108 based on requests for computational tasks, return documentation for specified application in the computational tasks (such as but not limited to markdown files), retrieve relevant short-term memory 171 and long-term memory 180 files based on the context of the computational task, and accept short-term memory files from agents 1102 for processing and integration.

The system may access sub-agents or other agents through the agent coordinator 124. The agent service 106 can have an agent hand off tasks associated with the prompt to a plurality of sub-agents, with the agent causing execution of the search query by handing off at least a portion of the search query to one or more sub-agents to execute instead. The agent can then generate at least a portion of the response by receiving the response from the sub-agents. As described above, the agent can be configurable through a first set of settings, and the sub-agents can be configurable through a second set of settings that is different from the first set of settings.

Memory services 1106 can include a central system that processes, stores, and distributes knowledge as memory. The memory services 1106 can include functions include, but not limited to, ontology services to manage and distribute ontology-based context, memory synchronization to handle bi-directional memory transfer between the agent connection service 1104 and the database module 108 (or long-term memory store 185), knowledge compounding engine to process and consolidate learnings, and hybrid search system to retrieve relevant documentation based on the context of the computational task.

The database module 108 including the ontology 1108 can include core storage mechanisms for memory components as a memory storage. The long-term memory store 185 can supplement or supplant the database module 108. The memory storage can leverage the ontology structure to store key types of memory objects, such as, but not limited to, long-term memory object that contain knowledge across projects for the plurality of agents 1102, short-term memory objects that contains context for individuals projects, and long-term memory checkpoint objects for version control objects that track the evolution of long-term memory over time. By storing the memory based on the ontology, the system can advantageously provide unified data models, consistent access control to leverage ontology-based permissions, seamless integration, versioning capabilities to track changes, and query capability to enable complex search across memory objects.

The system can provide bi-directional knowledge flow between the agents 1102 and the memory system. For context retrieval, or "pull," the agents 1102 can submit task context or applications to the agent connection service 1104, which can forward the request to the memory services 1106. The memory services 1106 can query the memory system associated with the ontology 1108 for relevant long-term memory objects and context. Relevant documentation and memory components can be assembled and delivered to the agents 1102 as short-term memory files, which can incorporate context into its local memory in the memory bank 170. For knowledge contribution, or "push," the agents 1102 can perform computational task using the memory bank 170. The agent can push updated short-term memory files to the agent connection service 1104. The agent connection services 1104 can forward the files to the memory services 1106, where the learnings processor 1110 can extract key learnings. Learnings can be integrated into long-term memory objects into the memory system, where it can be available to all agents 1102.

The learnings processor 1110 can consolidate learnings across multiple agents 1102-1, 1102-2, 1102-3, 1102-N. For example, all the short-term memory objects can be gathered from all agents 1102. The learnings processor 1110 can identify common patterns, solutions, and challenges, then apply regret-based heuristics to identify high-value knowledge for importance filtering. The new learnings can be merged into existing long-term memory objects and organized by domain, application type, and use case. The objects can also be categorized according to versions through the long-term memory checkpoint objects to maintain evolution history.

### Example Aspects Related to User Interfaces and Related Functionality for Compounding Memory

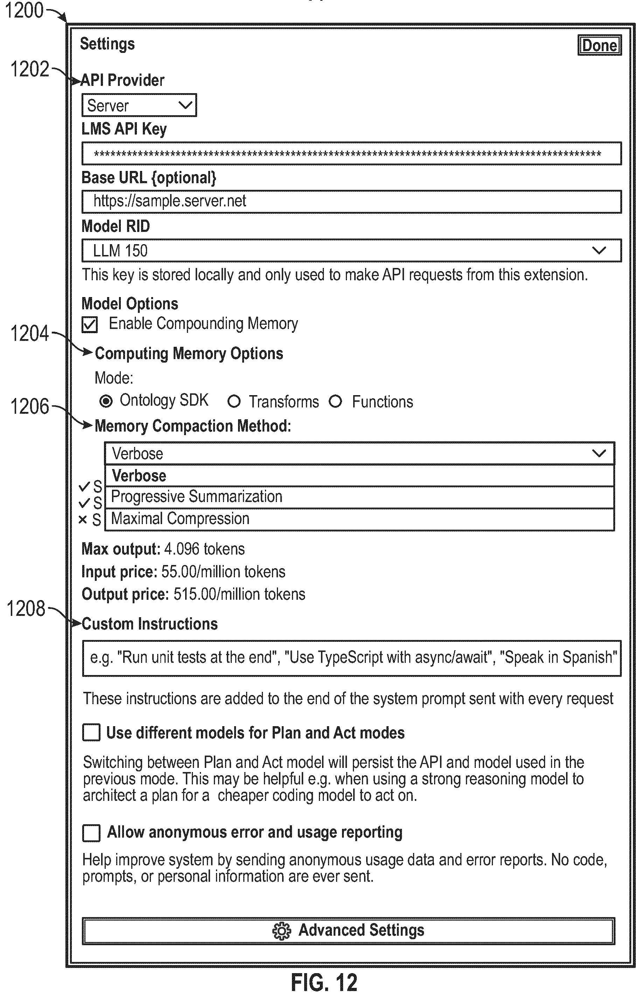

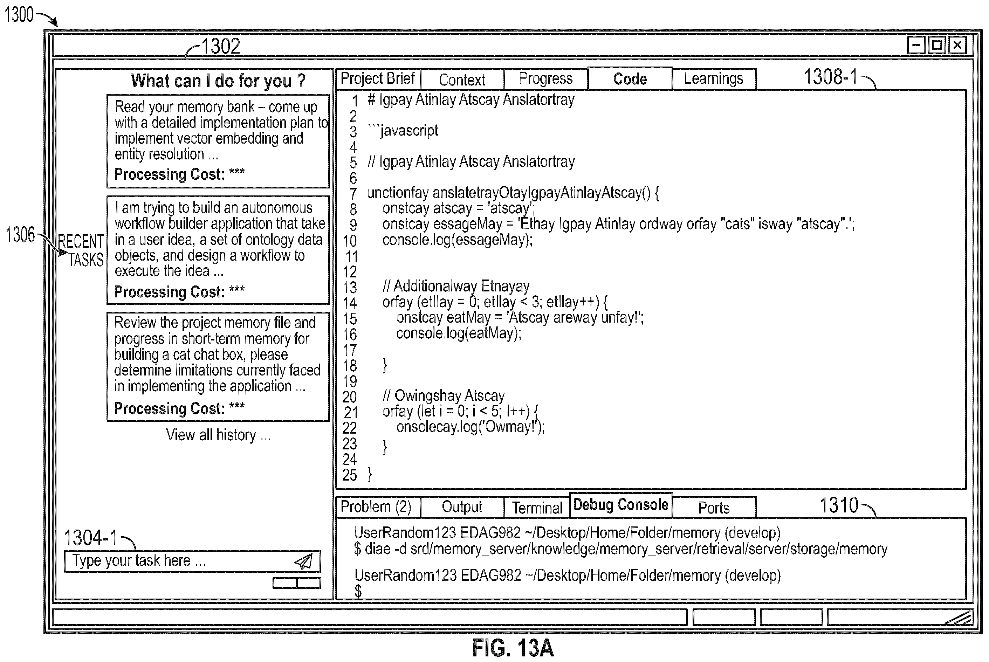

FIGS. 12 and 13A-13F show example user interfaces that illustrate utilizing the agent service 106 of the agent system 102 of FIGS. 1A, 1B, and 1C for inputting memory settings, computational requests, file editing, and displaying processes and outputs, according to various implementations of the present disclosure. The example user interfaces illustrated in FIGS. 12 and 13A-13F may be optionally presented through the user interface module 104 of the agent system 102 and/or a user interface of the user 150. The example user interfaces illustrated in FIGS. 12 and 13A-13F may optionally allow the user 150 to interact with the agent system 102, similar as described in reference to FIGS. 6, 7, 8A, 8B, 9, and 10.

FIG. 12 shows an example user interface 1200 that illustrates configuring memory for one or more agents 1102. As shown, the user may configure various "Model Options" which can include "enable compounding memory." In the example of FIG. 12, various base settings 1202 can be selected, such as, but not limited to, API provider, LMS API Key, Base URL, and Model RJD. Furthermore, when "enable compounding memory" is selected as part of these base settings 1202, the memory features and functionality described herein are enabled, and various compounding memory options are shown to the user. Such options can include memory mode selection 1204, which, for example, may include, but are not limited to, Ontology SDK mode, Transforms mode, and/or Functions mode. These modes can enable various functionality of the system that may enable optimized operations for various applications/modes. Additional examples of such modes and associated functionality are described herein. The options can also include compaction mode selection 1206, which can include, for example, Verbose (or High Detail), Progressive Summarization, and/or Maximal Compression. Different memory compaction levels may be appropriate for different applications, and/or for different agents/models. For example, models that have smaller context windows may benefit from memory with higher compression, while models that have larger context windows may benefit from memory with lower compression (or higher details). Additional examples of such compaction/compression options and associated functionality are described herein. The options can further includes custom instruction 1208, which can be added by the system to the agent context when performing a computational task. Custom instructions can indicate, for example, that learnings in the short-term memory are to be stored in the long-term memory upon completion of the computational task.

FIGS. 13A-13F show example user interfaces that illustrate a graphical user interface for utilizing memory for inputting computational requests, file editing, and displaying processes and outputs. In the example of FIG. 13A, the graphical user interface 1300 can include a development environment 1302 that can include a section for agent interaction, a section for file display 1308-1, and an editing console 1310. The file display 1308- 1can include tabs for different files, such as project brief, context, progress, code, and learnings. For example, file display 1308-1 displays a code file that illustrates the text in the file. The editing console 1310 can include information related to one or more of the files, such as problems, outputs, terminals, debug consoles, and ports. The editing console 1310 can be used to edit, run, read, or interact with the files or information related to the files. The section for agent interaction can include a chat box text generated by the agent, such as prompts asking the user how the agent can help. The chat box can include a user input field 1304-1 that the user can input text, documents, or other files to provide to the agent to request performance of a computational task, for example, user input field 1304-1 provides instructions to the user when the user has yet to provide an input. Additionally, the chat box can include recent tasks 1306 for computational tasks that the agent was recently requested. These recent tasks, 1306, can be selected to request the agent to perform these tasks. Advantageously, the system is able to store learnings from these tasks in its long-term memory store 185 and use them later, such that when the task is performed again or another task is requested, the system has at least some remnants from previously executing the tasks to rely on when performing that next task.

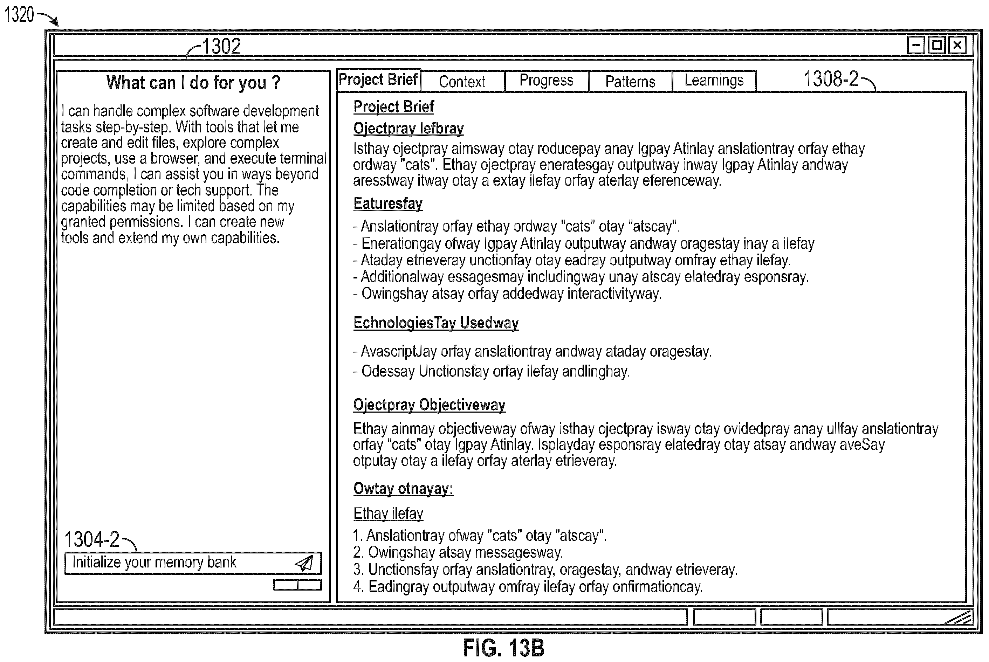

FIG. 13B shows an example user interface 1320 with a development environment 1302 in which the user is requesting for the memory bank to be initialized. In the example of FIG. 13B, the agent is instructed to initialize its memory bank as user input into the user input field 1304-2. Initialization of the memory bank may include establishing short-term memory, long-term memory, or both, which may further include reading and writing files to add to the memory bank. In some cases, initialization of the memory bank may also include writing to the long-term memory store. Initialization of the memory bank may be performed automatically upon activation of an agent, for example, for performing a computational task and/or project. FIG. 13B further depicts an example of information stored in the project brief in the file display 1308-2. FIG. 13B also depicts further description that the agent can provide to the user about its capabilities in the chat box.

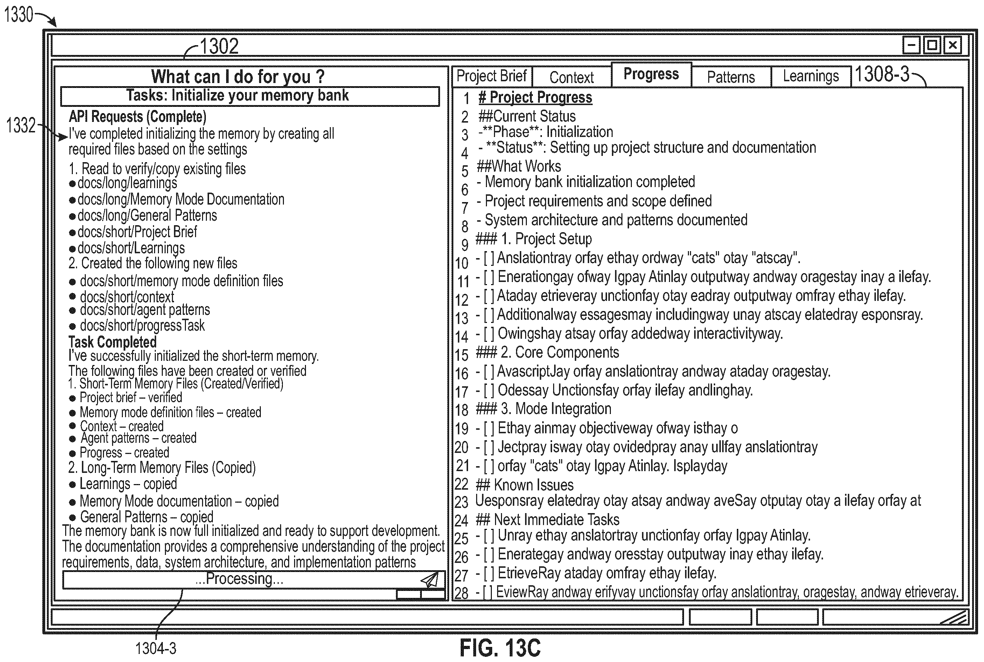

FIG. 13C shows an example user interface 1330 with a development environment 1302 in which the memory bank has been initialized. The chat box of the agent can display the processes and steps it is taking and completing as an agent status update 1332. The agent status update 1332 can include processes including creating and verifying various core files, such as the short-term memory. As illustrated, the memory bank initialization also includes reading and copying from the long-term memory store to establish the long-term memory files. During the processing of the computational task, the user input field 1304-3 can illustrate a display that the task is processing. Thus, knowledge and/or insights relevant to the current task and/or project, which are stored in the long-term memory store (based on agent actions in previous tasks/projects), may be read and loaded/copied into the memory bank as a long-term memory, enabling propagation of knowledge and/or insights across tasks and/or projects between the agent or a plurality of agents. As also illustrated in FIG. 13C, the file display 1308-3 can include information stored in a readable format (e.g., text, markdown, and/or the like), such as the progress file in the short-term memory that can include a check list of tasks to be completed.

The relevant long-term memory, or parts/portions of the long-term memory, for performance of the current task/project may be determined, in part, based on the "mode" of the memory. Thus, for example, Ontology SDK mode may involve instructing and/or identifying for the agent relevant long-term memory files and/or parts/portions of the long-term memory files from the long-term memory store to be saved in the memory bank.

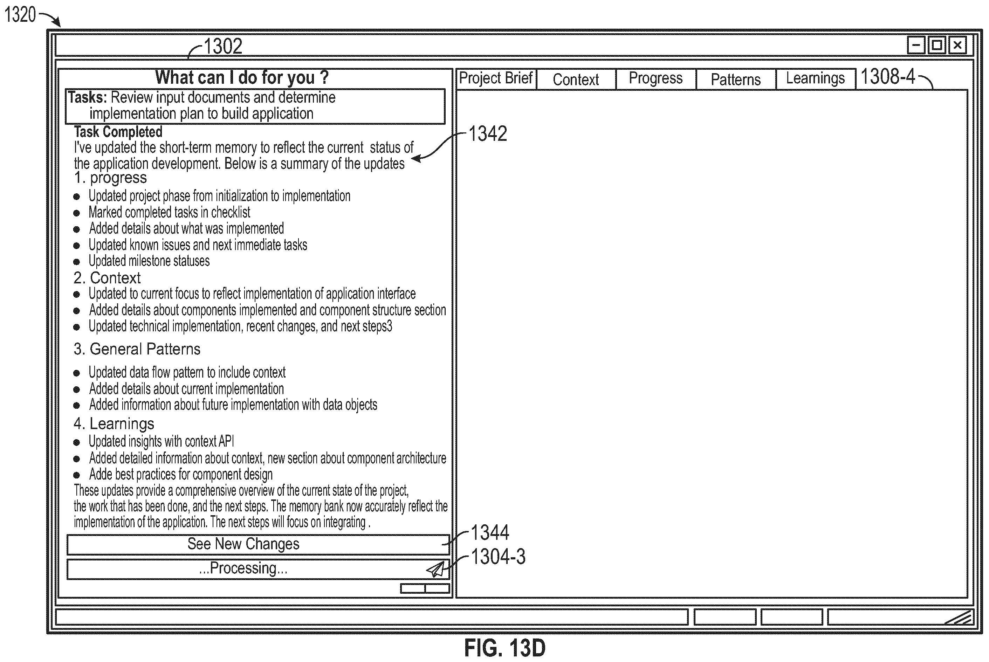

Having initiated the memory bank, FIG. 13D shows an example user interface 1340 with a development environment 1302 in which the agent has been further instructed to perform a computation task and/or project shown in task process 1342. In the example of FIG. 13D, the project includes reviewing input documents and determining an implementation plan to build the application. Because information regarding the OSDK may not be part of the underlying model of the agent, the system advantageously enables the agent to access relevant long-term memory files to obtain the knowledge and/or insights to efficiently utilize the OSDK as needed for the performance of the project/task. During and/or after the performance of a project/task, the agent can update its short-term memory files. An example is illustrated in FIG. 13D, short-term memory files and/or long-term memory files can be updated as steps are determined and/or completed. The update viewer 1344 can be used to see how the memory files are updated. Short-term memory can be used to maintain focus and/or context of the current project/task, and/or to document the work and/or steps determined and/or performed by the agent. The file view 1308-4 can be blank when a file is not selected to view.

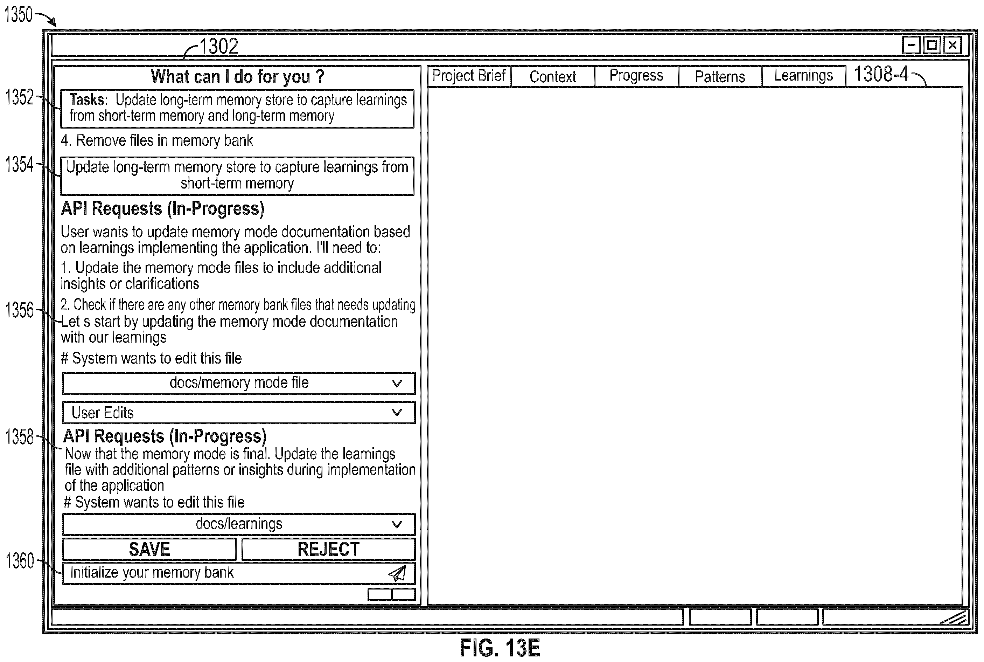

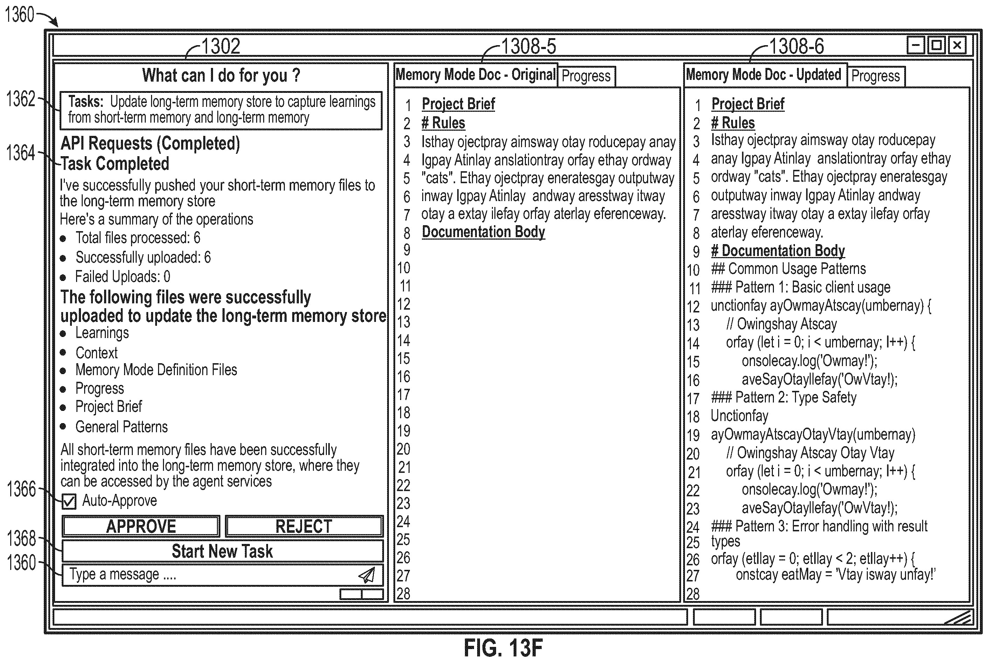

FIG. 13E and 13F shows an example user interface 1350 with a development environment 1302 in which the agent has just completed a computational task and requested to update the long-term memory store with learnings from the short-term memory, as shown by the current task 1352. As shown in FIG. 13E, the user input field 1360 can accept computational tasks even if the task is still running. Implementing the application included several steps, generating a substantial amount of code, testing the code, and implementing communications and/or a backend using the OSDK to enable data retrieval and storage. Utilizing the OSDK required the agent to read specialized documentation on the OSDK and/or the long-term memory, which further developed the agent's understanding of a novel architecture, and integrating the OSDK information for updating and/or building the application. Although the base model underlying the agent has no initial understanding of the OSDK, through the process of reading from the long-term memory and performing the task, the agent developed many additional insights that can advantageously be retained via memory. That knowledge and/or insights may be stored in the short-term memory. It can be advantageous to retain the information and insights related to the OSDK because the OSDK may be used by other agents in other projects/tasks, and/or the present agent in other projects/tasks. The update viewer can include various processes and information, including a task process 1354, task process 1356, take process 1364, and a file editor 1358 that can be saved or rejected.

As shown in FIG. 13C, the agent can summarize the steps and/or implementation accomplished. Then, the agent may be instructed to perform a current task 1362, and/or may automatically update memory bank files corresponding to the long-term memory to store any findings and/or insights (e.g., while using the OSDK). In response, as shown in FIG. 13F, the agent can synthesize the insights (in accordance with the memory confirmation) and write them to / store them in the long-term memory files. The system can include options 1368 to either approve or reject the suggestion from the agent. In some instances, the option to reject can be automatically selected when marked for auto selection 1366. The agent may further push the edited files to long-term memory store, and/or may update other documentation. The original long-term memory file is displayed by the file display 1308-5, and a comparison to the updated file display 1308-6 displayed on the file display 1308-6 can be made. Both documents can be stored for reference later. The chat box of the agent can also include an option to send additional information to the agent through a message box for user input field 1360.

Storing knowledge and/or insights to the long-term memory store may be considered compaction of memory. Storing knowledge and/or insights to the short-term memory may also be considered compaction. Storage of information to the short-term memory files and/or the long-term memory files may be based in part on the Memory Compaction Method setting specified in the agent configuration. Thus, depending on the setting, the agent may be more verbose, or may generate information in a more summarized and/or compressed manner. Memory compaction to the memory bank may include appending new information to the existing long-term memory. Memory compaction to the long-term memory may alternatively include reading the existing long-term memory, and re-writing the long-term memory in incorporate newly determined information (e.g., knowledge and/or insights determined during performance of the current task/project). Memory compaction to the short-term memory may be performed automatically, and/or on demand (e.g., as instructed by a user). As explained herein, knowledge and/or insights compacted to the memory bank may be based on a measure of value and/or surprise associated with the knowledge and/or insights.

A prompt, and/or a portion of a prompt, may be provided to the agent to enable memory features of the present disclosure. The prompt may include information based on the compounding memory options (which may be referred to as the memory configuration). The prompt may vary depending on the memory configuration. The prompt may include, for example, instructions to the agent regarding the short-term and/or long-term memory files to write and/or read (e.g., based on the mode), the level of detail with which to write information (e.g., based on the compaction method), and/or the like. The following is an example of memory-related instructions and/or prompts that may be provided to an agent and/or AI system of the present disclosure, and which may include any or all of the following sections:
# Memory Bank
   [instructions to determine whether to access memory files for the present task, including all PSM files and any relevant SBM files]
# Memory compaction
   e.g.:
   - Write comprehensive documentation with appropriate level of detail
   - Focus on forward-looking insights and high-signal learnings
   - Use my judgment to determine appropriate detail level for each file
   - Include diagrams and structured content where helpful
# Memory bank directory structure
   [outline of memory bank directory structure]
   e.g.:
# Core Files
   PSM = Project-specific memory/Short-term memory
   SBM = Shared base memory/long-term memory (your learnings from previous projects you worked on)
      1. File 1 (PSM)
         brief description of file 1
      2. File 2 (PSM)
         brief description of file 2
      2. File 3 (SBM) brief description of file 3 ...
# SBM files
   [optional additional description of SBM files, optionally including explanation of when to use them]
# Core workflows
   Plan mode:
      [description of workflow for plan mode, optionally including or consisting of a flowchart.]
      e.g.:
      Start[Start] --> ReadFiles[Read Memory Bank]
      ReadFiles --> CheckFiles{Files Complete?}
      CheckFiles -->|No| Plan[Create Plan]
      Plan --> Document[Document in Chat]
      CheckFiles -->|Yes| Verify[Verify Context]
      Verify --> Strategy[Develop Strategy]
      Strategy --> Present[Present Approach]
   Act mode:
      [description of workflow for act mode, optionally including or consisting of a flowchart]
      e.g.:
      Start[Start] --> Context[Check Memory Bank]
      Context --> Update[Update Documentation]
      Update --> Rules[Update .clinerules if needed]
      Rules --> Execute[Execute Task]
      Execute --> Document[Document Changes]
# Documentation Updates
   e.g.:
   Memory Bank updates occur when:
   1. Discovering new project patterns
   2. After implementing significant changes
   3. When user requests with **update memory bank**
   4. When context needs clarification

   Start[Update Process]
   subgraph Process
   P1[Review ALL Files]
   P2[Document Current State]
   P3[Clarify Next Steps]
   P4[Update .clinerules]
   P1 --> P2 --> P3 --> P4
      end
   Start --> Process
# Project Intelligence
   [description of when and/or how to update a compilation of learnings across projects to generate and/or update an SBM file. The learnings can include patterns, preferences, and derived intelligence from the user and from the agent's own project work]
   e.g.
   Start{Discover New Pattern}
   subgraph Learn [Learning Process]
   D1[Identify Pattern]
   D2[Validate with User]
   D3[Document in .clinerules]
      end
   subgraph Apply [Usage]
   A1[Read .clinerules]
   A2[Apply Learned Patterns]
   A3[Improve Future Work]
      end
   Start --> Learn
   Learn --> Apply
# What to Capture
   e.g.
   - Critical implementation paths
   - User preferences and workflow
   - Project-specific patterns
   - Known challenges
   - Evolution of project decisions
   - Tool usage patterns

In OSDK mode, which can be received through the memory mode selection 1204, the OSDK can advantageously enable the agent to write and operate in any language it prefers, such as any programming language (e.g., Python) and to fully wield and use the ontology 1108. For example, the agent, operating with the OSDK and ontology 1108 may thereby be aware of not just specific tasks (e.g., "go summarize this thing"), but higher order tasks (e.g., "go and optimize the supply chain"). Accordingly, the OSDK can become a universal orchestration language that can let the entire agent life cycle access, in a read and write way, the entirety of the ontology.

### Example Features and Functionality Related to Knowledge Graph-Based Long-Term Memory Service

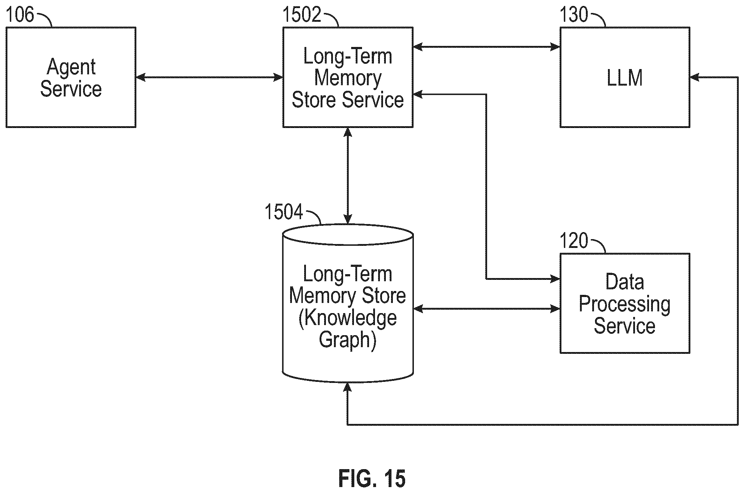

According to various implementations, the agent system 102 may include one or more services for enabling and/or accelerating storage and retrieval from the long-term memory store 185. For example, FIG. 15 is a block diagram of the agent system including a long-term memory store service 1502, according to various implementations of the present disclosure. The agent system as illustrated in FIG. 15 may include various of the features and functionality as described herein, but may further include the long-term memory store service 1502 and enables and/or provides data storage and retrieval from the long-term memory store 1504. The long-term memory store 1504 may be similar to, and include functionality of, the long-term memory store 185 described herein. In various implementations, however, the long-term memory store 1504 may store the long-term memory data/information as a knowledge graph.

The long-term memory store service 1502 may comprise a data processing service (similar to data processing service 120) that may receive requests, service the requests, and provide responses to the requests. The long-term memory store service 1502 may comprise a distributed computing service, and likewise the long-term memory store 1504 may comprise a distributed database or data source. The long-term memory store service 1502 may similarly be a server, or a software service, and may be configured to provide concurrent request processing for a large number of agents or argent services of the system, and may provide both storage and retrieval services with respect to the long-term memory store 1504. Thus, many agents and/or agent services may simultaneously make requests to retrieve long-term memory data/information from, or store long-term memory data/information in, the long-term memory store 1504 via the long-term memory store service 1502. Accordingly, the long-term memory store service 1502 can advantageously provide long-term memory storage and retrieval services for a plurality of agents and enable cross-agent sharing of long-term memory. In various implementations, the long-term memory store service 1502 may operate as an MCP server, and may operate asynchronously to the agent loop (e.g., operation of one or more agent services), advantageously providing a more scalable and retrieval based approach to long-term memory management.

As described herein, retrieved long-term memory may be utilized by an agent as context and/or incorporated into short-term memory for performing various computational tasks. Similarly, learnings (from performing computational tasks) as gathered and stored in short-term memory may be incorporated into or stored as long-term memory.

As mentioned above, the long-term memory store 1504 may include a knowledge graph by which long-term memory data/information may be stored. The knowledge graph may use a graph-structured data model or topology to represent and operate on data. The knowledge graph may include nodes (which may be similar to or the same as data objects, as described herein), which nodes may be linked to one another by edges. The link/edge may represent relationships between respectively linked nodes.

Within the knowledge graph of the long-term memory store 1504, the nodes may represent stored long-term memories, such as learnings and/or insights determined by one or more agents, as described herein. Thus, each node may include memory content. Nodes may further be associated with various properties, including one or more memory types, which may include, for example, code patterns (which may include reusable code patterns and solutions), documentation (which may include API documentation, tutorials, and guides), reasoning traces (which may include records of reasoning steps and decision-making processes), or system architecture (which may include information about system design and architecture). Memory types may provide a general classification or organization to the memory content, similar to the organization of long-term memory files via memory modes as described herein. Additional node properties may include, for example, tags (which may provide indications of types or content of the associated memory content), an importance indicator (indicating, for example, a relative importance or value of the associated memory content), one or more entities (which may provide indications of aspects, types, or content of the associated memory content), and/or the like.

Additionally, within the knowledge graph of the long-term memory store 1504, the edges may indicate relationships among the memory content of the associated/linked nodes. The edges may also be associated with various properties, including a relationship property, which may include, for example, implements, extends, requires, or defines.

According to various implementations, the long-term memory store service 1502 and/or the long-term memory store 1504 may include, for example, a retrieval engine (which may implement a hybrid search approach combining semantic search and graph traversal), a storage repository (which may persists memory components to a database), a tools engine or MPC tools engine (which may expose tools for querying and storing memory, e.g., making the long-term memory store service 1502 available to agent services as a tool), a resources engine or MPC resources engine (which may provide access to memory configuration and statistics, a backend client (which may enable communications with one or more LLMs and/or embedding services for intelligent memory operations), and/or the like. Accordingly, as illustrated in FIG. 15, the LLM(s) 130 and/or the data processing service 120 (among other components of the agent system 102) may be in communication with and/or available to the long-term memory store service 1502 and/or the long-term memory store 1504 (in addition to the agent service 106, as illustrated and described in reference to previous figures).

For example, the agent system may enable the long-term memory store service 1502 and/or the long-term memory store 1504 to utilize LLM and/or embedding services for, for example, vector embeddings (which may include generating high-quality embeddings for semantic search), entity extraction (which may include extracting entities from text using LLM-based techniques, relationship inference (which may include inferring relationships between memory nodes using an LLM), task analysis (which may include analyzing tasks to determine memory needs using an LLM), and/or the like.

According to various implementations, the agent service 106 may include additional functionality to enable interactions with the long-term memory store service 1502 (including, for example, to make long-term memory retrieval requests and long-term memory storage requests). Such functionality may optionally be provided by, for example, a memory client (which may communicate with the long-term memory store service 1502 to query and store memory), agent integration (which may integrate the memory client into the agent loop, e.g., the functionality of the agent service 106), and/or the like.

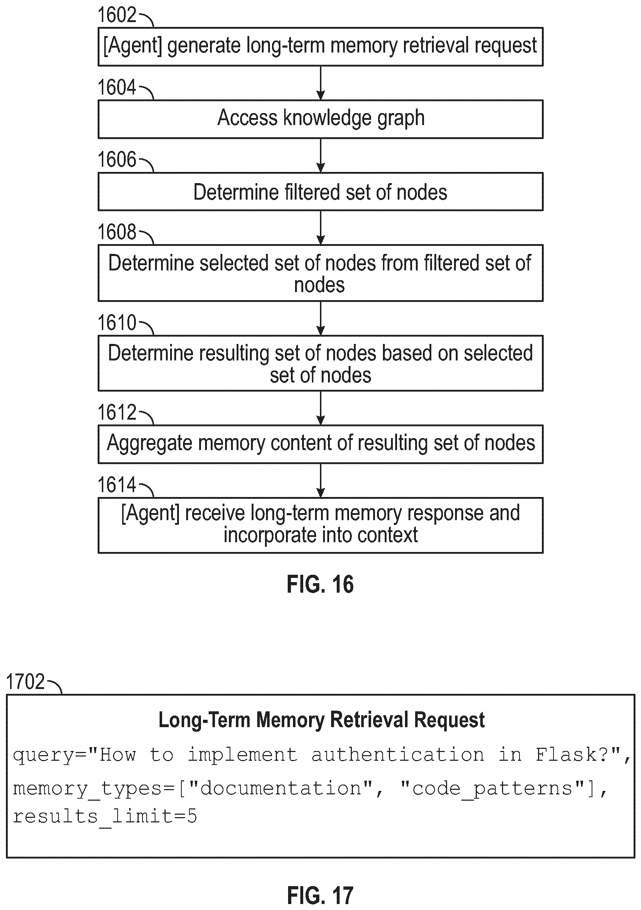

FIG. 16 is a flowchart illustrating example operations of the agent system related to long-term memory retrieval, according to various implementations of the present disclosure. Various of the blocks of FIG. 16 may include operations and/or methods that may be performed by various components of the agent system 102, including the agent service 106, the long-term memory store service 1502, and/or the long-term memory store 1504. The blocks of the flowchart illustrate example implementations, and in various other implementations various blocks may be rearranged, optional, and/or omitted, and/or additional block may be added.

At block 1602, the agent or agent service 106 generates a long-term memory retrieval request, which is provided to the long-term memory store service 1502. The long-term memory retrieval request can be an agent's request to obtain long-term memory when initiating a task, process, project, and/or the like (e.g., a computational task), as described herein, including in reference to, for example, block 306 of FIG. 3A, block 406 of FIG. 4A, block 508 of FIG. 5A, and/or the like. In various implementations, rather than receiving an indication of a memory mode, the system may determine one or more memory types associated with the long-term memory, and/or associated with establishing a long-term memory for a task, process, project, and/or the like, of an agent of agent service.

The long-term memory retrieval request may be determined by an agent, agent service 106, and/or the like. Determining and/or generating the long-term memory retrieval request may include one or more large language model ("LLM") requests. For example, generating the long-term memory retrieval request may include generating a prompt for an LLM including, for example, an indication of a computational task to be performed (e.g., by the agent or agent service), and a request to generate the long-term memory retrieval request. The request may further include, for example, a query received from the user. The query may comprise a portion of a definition of the computational task to be performed by the agent and/or agent service. The query may include, be similar to, or be the same as, the user request to perform the computational task received from the user (e.g., as described above in reference to, for example, block 304 of FIG. 3A, block 404 of FIG. 4A, and/or block 504 of FIG. 5A). The request may further include indications of one or more memory types. These indications of memory types may include, for example, names of the different memory types used by the system, long-term memory store 1504, and/or in knowledge graph. The indications may further include descriptions of the one or more memory types (e.g., along the lines of the descriptions provided above). The request can further include examples of other long-term memory retrieval requests that may be used by the LLM as models or examples. Such information can enable the LLM to determine relevant memory types (and other information, as described herein) associated with the query and/or request associated with the computational task. For example, the system may determine that only a particular type of information is needed from long-term memory, such as in the case when documentation is already known, but code patterns are needed. Memory types can advantageously enable the system to retrieve only needed types of information from the long-term memory thereby resulting in more efficient use of processing and/or memory resources.

The prompt can be provided to the LLM, and the LLM can respond to the prompt with a long-term memory retrieval request that is relevant to the present computational task, query, request, and/or the like. The response can be received from the LLM responsive to the prompt, and can include the generated long-term memory retrieval request.

The long-term memory retrieval request may further include (and the prompt may include instructions to include), for example, a results limit, when may be an indication of a maximum number of knowledge graph nodes to be read and/or used when returning memory contents (e.g., by the long-term memory store service 1502) in response the long-term memory retrieval request.

The long-term memory retrieval request may further include (and the prompt may include instructions to include), for example, one or more tags, which may be determined by the agent service 106, via the LLM prompt described above, and/or via one or more LLM prompts to determine tags associated with the query, computational task, and/or the like.

The long-term memory retrieval request may further include (and the prompt may include instructions to include), for example, one or more vectors and/or vector embeddings, which may be determined by the agent service 106, via the LLM prompt described above, and/or via one or more LLM prompts to determine vectors and/or vector embeddings associated with the query, computational task, and/or the like.

The long-term memory retrieval request may further include (and the prompt may include instructions to include), for example, one or more keywords, which may be determined by the agent service 106, via the LLM prompt described above, and/or via one or more LLM prompts to determine keywords associated with the query, computational task, and/or the like. The keywords may be words or phrases (groups of words) selected from the query, the computational task, the short-term memory, and/or the like.

In various implementations, the long-term memory retrieval request may be generated without an LLM, e.g., by any other model, algorithm, or process, and/or by a user (and/or based in part on a user input).

FIG. 17 is a diagram illustrating an example long-term memory retrieval request 1702 of the agent system, according to various implementations of the present disclosure. As illustrated, the long-term memory retrieval request, which may be generated by the LLM, may include, for example, a query (which may correspond to the user request, the computational task, and/or the like, as described herein), one or more memory types, a results limit (which may indicate a maximum quantity of nodes of the knowledge graph from which to retrieve/aggregate memory content), and/or the like.

Returning to FIG. 16, at blocks 1604, 1606, 1608, 1610, and 1612, the long-term memory store service 1502 may receive the long-term memory retrieval request (from the agent and/or agent service 106) and may perform operations to execute the long-term memory retrieval request. As noted above, the long-term memory retrieval request can include one or more of: the query, indications of one or more memory types, a results limit, indications of one or more tags, indications of one or more vectors and/or vector embeddings, indications of one or more keywords, and/or the like. According to various implementations, executing, by the long-term memory store service 1502, the long-term memory retrieval request can include: accessing a knowledge graph, wherein the knowledge graph comprises nodes storing memory content, and wherein the knowledge graph further comprises edges connecting related nodes and storing relationships among the memory content associated with the related nodes; determining a filtered set of nodes from the knowledge graph based on the one or more memory types; determining a selected set of nodes from the filtered set of nodes based on the query; determining a resulting set of nodes based on the selected set of nodes and relationships of nodes of the selected set of nodes with other nodes of the knowledge graph; and aggregating memory content of the resulting set of nodes to generate a long-term memory response; and providing, by the long-term memory store service, and to the agent, the long-term memory response in response to the long-term memory retrieval request.

For example, at block 1604, the long-term memory store service 1502 may access, communicate with, or be in communication with, the long-term memory store 1504. Access and/or communication with the long-term memory store 1504 enables the long-term memory store service 1502 to read nodes, edges, and/or the like from the knowledge graph stored by the long-term memory store 1504.

At block 1606, the long-term memory store service 1502 can determine a filtered set of nodes from the nodes of the knowledge graph. As noted above, the nodes of the knowledge graph may be associated with respective sets of properties, which may include, for example, memory types, tags, and/or the like. According to various implementations, determining the filtered set of nodes in block 1606 may include determining matches or similarities between the one or more memory types of the long-term memory retrieval request and one or more memory types associated with the nodes of the knowledge graph, and selecting the filtered set of nodes based on the determined matches or similarities. For example, any nodes having memory types that match, or are similar to (e.g., based on a sematic similarity) the memory types of the long-term memory retrieval request, may be selected as the filtered set of nodes therefore providing the aforementioned processing and/or memory efficiencies. Alternatively, or in addition, in various implementations, determining the filtered set of nodes in block 1606 may include determining matches or similarities between one or more tags associated with the long-term memory retrieval request and one or more tags associated with the nodes of the knowledge graph and selecting the filtered set of nodes based on the determined matches or similarities. For example, any nodes having tags that match, or are similar to (e.g., based on a sematic similarity) the tags of the long-term memory retrieval request, may be selected as the filtered set of nodes.

Tags associated with the long-term memory retrieval request and/or the query may be provided as part of the long-term memory retrieval request, and/or may be determined by the long-term memory store service 1502. For example, the long-term memory store service 1502 may perform an analysis of the long-term memory retrieval request, the associated query, and/or the like, to determine the tags. Such an analysis may include, for example, prompting an LLM with the query and requesting a listing of proposed tags (similar to the long-term memory retrieval request generation process described above).

At block 1608, the long-term memory store service 1502 can determine a selected set of nodes from the filtered set of nodes. As noted above, the nodes of the knowledge graph may be associated with respective sets of properties, which may include, for example, vectors, vector embeddings, and/or the like. Such vectors and/or vector embeddings may provide representations of semantic meanings of memory content stored by the respective nodes. According to various implementations, determining the selected set of nodes in block 1608 may include performing a semantic search or vector search based on the vector associated with the query (and/or long-term memory retrieval request) and the vectors associated with the nodes of the knowledge graph to select the selected set of nodes that have vectors similar to the vector associated with the query. For example, any nodes having vectors that match, or are similar to (e.g., based on a sematic similarity) the vectors of the long-term memory retrieval request and/or query, may be selected as the selected set of nodes. Alternatively, or in addition, in various implementations, determining the selected set of nodes in block 1608 may include performing a keyword search based on the keywords associated with the query (and/or long-term memory retrieval request) and the memory content stored by the nodes of the knowledge graph to select the selected set of nodes that have keyword similarity with the query. For example, any nodes having keywords that match, or are similar to (e.g., based on a sematic similarity) the keywords of the long-term memory retrieval request and/or query, may be selected as the selected set of nodes.

Vectors associated with the long-term memory retrieval request and/or the query may be provided as part of the long-term memory retrieval request, and/or may be determined by the long-term memory store service 1502. For example, the long-term memory store service 1502 may perform an analysis of the long-term memory retrieval request, the associated query, and/or the like, to determine the vectors and/or vector embeddings. Such an analysis may include, for example, prompting an LLM with the query and requesting a listing of proposed vectors (similar to the long-term memory retrieval request generation process described above).

Keywords associated with the long-term memory retrieval request and/or the query may be provided as part of the long-term memory retrieval request, and/or may be determined by the long-term memory store service 1502. For example, the long-term memory store service 1502 may perform an analysis of the long-term memory retrieval request, the associated query, and/or the like, to determine the keywords. Such an analysis may include, for example, prompting an LLM with the query and requesting a listing of proposed vectors (similar to the long-term memory retrieval request generation process described above).

According to various implementations, determining the selected set of nodes in block 1608 may include performing both a semantic search (and/or vector search) and a keyword search. Results (e.g., sets of nodes) determined from each of the searches may be intersected to determine the selected set of nodes. Accordingly, selecting the selected set of nodes can be based on an intersection of nodes identified by the keyword search and nodes identified by the semantic search or vector search. The intersection of nodes can include nodes that are present in both the vector search results, and the keyword search results.

At block 1610, the long-term memory store service 1502 can determine a resulting set of nodes based on the selected set of nodes. According to various implementations, determining the resulting set of nodes in block 1610 may include, for each of the nodes of the selected set of nodes, identifying related nodes in the knowledge graph by traversing any edges from the node to any connected nodes, and designating the selected set of nodes and the related nodes as the resulting set of nodes. Accordingly, the resulting set of nodes may include both the nodes of the selected set of nodes, and any nodes directly connected to the selected set of nodes (e.g., nodes with 1 degree of relationship with the selected set of nodes in the knowledge graph). Alternatively, and/or additionally, according to various implementations, determining the resulting set of nodes in block 1610 may further include, for each of the nodes of the related nodes, identifying further related nodes in the knowledge graph by traversing any edges from the node to any further connected nodes, and designating the selected set of nodes, the related nodes, and the further related nodes as the resulting set of nodes. Accordingly, the resulting set of nodes may include both the nodes of the selected set of nodes, and any nodes directly connected to the selected set of nodes, and any nodes directly connected to those nodes (e.g., nodes with 2 degrees of relationship with the selected set of nodes in the knowledge graph). In various implementations, 3 or more degrees of relationship from the selected set of nodes may be used to determine the resulting set of nodes.

In various implementations, identifying related nodes may be based not solely on the existence of a connection/edge/relationship, but also on the type of relationship between the selected nodes and related nodes, or between related nodes and further related nodes. Accordingly, at block 1610, identifying related nodes (which is part of determining the resulting set of nodes) may include analyzing relationships associated with the traversed edges (between selected nodes and related nodes, and so on) so as to traverse only edges, and thereby identify only nodes, that satisfy relationship criteria. As mentioned above, relationships, which are represented by the edges connecting nodes withing the knowledge graph (an which can be stored as a relationship property on the edges), can include, for example, implements, extends, requires, or defines. The relationship criteria can be determined based on, for example, the query, tags associated with the query, keywords associated with the query, the one or more memory types and/or the like. The relationship criteria may be based on the computational task, a type of the computational task, and/or a sub-task of the computational task. The relationship criteria may be determined, in whole or in part, using an LLM.

As mentioned above, the term memory retrieval request can include a results limit, and nodes of the knowledge graph can include important indicators. According to various implementations, determining the resulting set of nodes at block 1610 can further include ranking the nodes of the resulting set of nodes based on ranking criteria and/or importance indicators associated with the nodes of the resulting set of nodes. The ranking criteria can include, for example, a similarity of, or a confidence of similarity of, the nodes to the query as indicated by the keyword search and/or the semantic search or vector search. The ranking criteria can also include, for example, the importance indicators. According to various implementations, determining the resulting set of nodes at block 1610 can further include limiting the resulting set of nodes to a quantity of nodes that that is less than or equal to the results limit. Limiting may include limiting to a quantity of the highest ranking nodes (based on the ranking) that is less than or equal to the results limit.

At block 1612, the long-term memory store service 1502 aggregates the memory content of the nodes of the resulting set of nodes to generate a long-term memory response. Aggregating the memory content can include, for example, reading the memory content from each nodes of the resulting set of nodes, and combining the memory contents into a single file, data item, and/or the like. The contents of the long term memory response may be ordered according to the ranking of the resulting set of nodes. Once the long term memory response is generated, it is provided, by the long-term memory store service 1502, to the agent and/or agent service 106. Thus, the long-term memory store service 1502 provides the long-term memory response, including the aggregated memory contents of the resulting set of nodes, in response to the long-term memory retrieval request.

At block 1614, the agent or agent service 106 receives a long-term memory response (to the long-term memory retrieval request) from the long-term memory store service 1502. Receiving the long-term memory response may include, receiving, by the agent, the long-term memory response, and incorporating, by the agent, the long-term memory response into a context associated with a computational task to be performed. In various implementations, the agent and/or agent service 106 may use the long-term memory response as a long-term memory of a memory back (usable for for performing a computational task) as described herein, including in reference to, for example, block 306 of FIG. 3A, block 406 of FIG. 4A, block 508 of FIG. 5A, and/or the like.

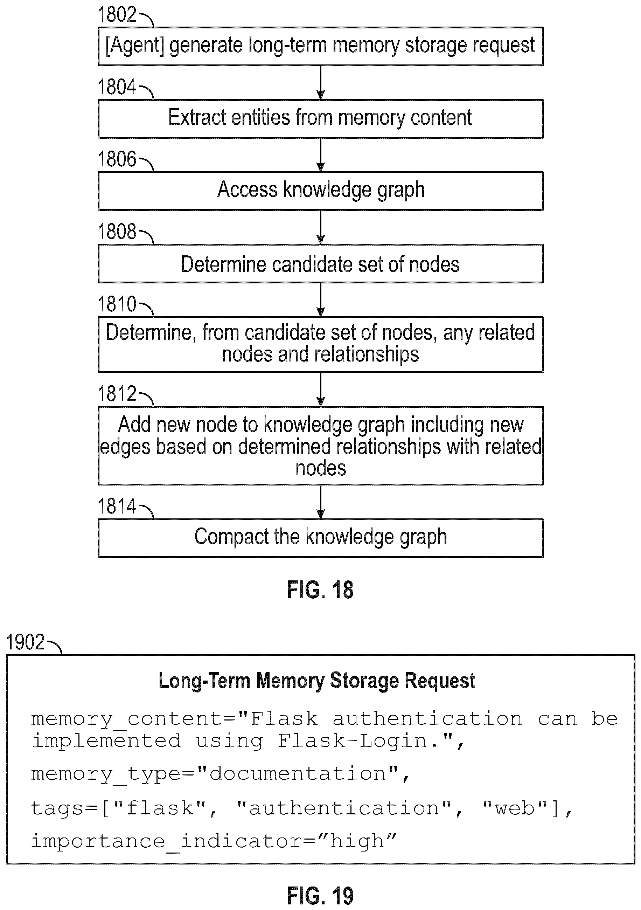

FIG. 18 is a flowchart illustrating example operations of the agent system related to long-term memory storage, according to various implementations of the present disclosure. Various of the blocks of FIG. 18 may include operations and/or methods that may be performed by various components of the agent system 102, including the agent service 106, the long-term memory store service 1502, and/or the long-term memory store 1504. The blocks of the flowchart illustrate example implementations, and in various other implementations various blocks may be rearranged, optional, and/or omitted, and/or additional block may be added.

At block 1802, the agent or agent service 106 generates a long-term memory storage request, which is provided to the long-term memory store service 1502. The long-term memory storage request can be an agent's request to store long-term memory when concluding a task, process, project, and/or the like (e.g., a computational task), and can be performed in a similar situation to that herein, including in reference to, for example, block 414 of FIG. 4A. For example, the system can determine to store short-term memory learnings and/or insights in long-term memory for use in future computational tasks and/or by other agents. Accordingly, the system can generate a long-term memory storage request and provide it to the long-term memory store service 1502. Contrasting with block 414 of FIGS. 4A and 4C, rather than generating updated long-term memory files with an LLM and directly replacing the long-term memory files in the long-term memory store with the updated long-term memory files (as described in reference to, for example, blocks 428-432), the system according to various implementations, and as described in reference to, for example, FIG. 18, may utilize the long-term memory store service 1502 to store long-term memory in the long-term memory store 1504 as part of the knowledge graph.

The long-term memory storage request may be determined by an agent, agent service 106, and/or the like. Determining and/or generating the long-term memory storage request may include one or more large language model ("LLM") requests. For example, generating the long-term memory storage request may include generating a prompt for an LLM including, for example, a portion of a short-term memory generated at least in part by performance of a computational task (e.g., by the agent or agent service), and a request to generate the long-term memory storage request. The request may include, for example, memory content which may be determined from, based on, or a portion of, one or more short-term memories and/or learnings of the agent and/or agent service 106. Such short-term memory may be determined by the agent during and/or as a result of performance of a computational task, similar to the description of, for example, block 312 of FIG. 3A, and/or block 410 of FIG. 4A. Generating long-term memory storage requests may be performed in response to, for example, a determination to store long-term memory (e.g., similar to the description in reference to, for example, block 412 of FIG. 4A). Generating long-term memory storage requests by the agent and/or agent service 106 advantageously enables the system to determine what to store into long-term memory from short term memory, which can enable storage of granular information, learnings, and/or insights. The request may further include indications of one or more memory types. These indications of memory types may include, for example, names of the different memory types used by the system, long-term memory store 1504, and/or in knowledge graph. The indications may further include descriptions of the one or more memory types (e.g., along the lines of the descriptions provided above). The request can further include examples of other long-term memory storage requests that may be used by the LLM as models or examples. Such information can enable the LLM to determine relevant memory types (and other information, as described herein) associated with memory content (e.g., to be stored), computational task, short-term memory, and/or the like.

The prompt can be provided to the LLM, and the LLM can respond to the prompt with a long-term memory storage request that is relevant to the present memory content (e.g., to be stored), computational task, short-term memory, and/or the like. The response can be received from the LLM responsive to the prompt, and can include the generated long-term memory storage request.

The long-term memory storage request may further include (and the prompt may include instructions to include), for example, one or more tags, which may be determined by the agent service 106, via the LLM prompt described above, and/or via one or more LLM prompts to determine tags associated with the memory content (e.g., to be stored), computational task, short-term memory, and/or the like.

The long-term memory storage request may further include (and the prompt may include instructions to include), for example, an importance indicator, which may be determined by the agent service 106, via the LLM prompt described above, and/or via one or more LLM prompts to determine an importance indicator associated with the memory content (e.g., to be stored), computational task, short-term memory, and/or the like. The importance indicator may indicate, for example, a relative importance or value of the associated memory content. The importance indicator may comprise, for example, a qualitative value (such as high, medium, or low), a quantitative value (such as 1, 5, or 10 (e.g., as on a scale of 1-10 for importance, where 10 may be high importance and 1 low importance)), and/or the like.

The long-term memory storage request may further include (and the prompt may include instructions to include), for example, one or more vectors and/or vector embeddings, which may be determined by the agent service 106, via the LLM prompt described above, and/or via one or more LLM prompts to determine vectors and/or vector embeddings associated with the memory content (e.g., to be stored), computational task, short-term memory, and/or the like.

The long-term memory storage request may further include (and the prompt may include instructions to include), for example, one or more keywords, which may be determined by the agent service 106, via the LLM prompt described above, and/or via one or more LLM prompts to determine keywords associated with the memory content (e.g., to be stored), computational task, short-term memory, and/or the like. The keywords may be words or phrases (groups of words) selected from the memory content (e.g., to be stored), computational task, short-term memory, and/or the like.

In various implementations, the long-term memory storage request may be generated without an LLM, e.g., by any other model, algorithm, or process, and/or by a user (and/or based in part on a user input).

FIG. 19 is a diagram illustrating an example long-term memory storage request 1902 of the agent system, according to various implementations of the present disclosure. As illustrated, the long-term memory storage request may include, for example, memory content, one or more memory types, one or more tags, an importance indicator, and/or the like.

Returning to FIG. 18, at blocks 1804, 1806, 1808, 1810, and 1812, the long-term memory store service 1502 may receive the long-term memory storage request (from the agent and/or agent service 106) and may perform operations to execute the long-term memory storage request. As noted above, the long-term memory storage request can include one or more of: the memory content (e.g., to be stored), indications of one or more memory types, indications of one or more tags, an importance indicator, indications of one or more vectors and/or vector embeddings, indications of one or more keywords, and/or the like. According to various implementations, executing, by the long-term memory store service 1502, the long-term memory storage request can include: extracting, from the memory content, one or more entities; accessing a knowledge graph, wherein the knowledge graph comprises nodes storing memory content, and wherein the knowledge graph further comprises edges connecting related nodes and storing relationships among the memory content associated with the related nodes; determining a candidate set of nodes from the knowledge graph based on the one or more memory types and the one or more entities; determining, from the candidate set of nodes: any related nodes having a relationship with the memory content; and relationships between the memory content and the respective related nodes; and adding, to the knowledge graph: a new node storing the memory content; and for any determined relationships, new edges connecting the new node with the respective related nodes, wherein the new edges store the respective determined relationships.

For example, at block 1804 the long-term memory store service 1502 may extract entities from the memory content provided in the long-term memory storage request. Extracting entities from the long-term memory storage request may include prompting an LLM with the memory content and requesting a listing of one or more entities that are associated with, indicated by, and/or contained within, the memory content. The entities can any include, for example, any objects and/or the like as described herein.

At block 1806, the long-term memory store service 1502 may access, communicate with, or be in communication with, the long-term memory store 1504. Access and/or communication with the long-term memory store 1504 enables the long-term memory store service 1502 to create, add, replace, modify, delete, and/or the like, nodes, edges, and/or the like in the knowledge graph of the long-term memory store 1504.

At block 1808, the long-term memory store service 1502 determines a candidate set of nodes from the knowledge graph of the long-term memory store 1504. Determining the candidate set of nodes comprises an initial filtering of the nodes of the knowledge graph to a more limited set of nodes that are more likely to have a relationship with the memory content to be stored. Initially determining a candidate set of nodes advantageously can improve computational performance and reduce computational complexity of storing new long-term memories to the knowledge graph as new nodes. Accordingly various implementations, determining the candidate set of nodes from the knowledge graph can include one or more operations similar to those described above in reference to blocks 1606, 1608, and 1610 of FIG. 16. For example, determining the candidate set of nodes can include determining a filtered set of nodes from the knowledge graph based on the one or more memory types (which may be performed similarly as described above in reference to block 1606 of FIG. 16), determining a selected set of nodes from the filtered set of nodes based on the memory content (which may be performed similarly as described above in reference to block 1608 of FIG. 16), determining a resulting set of nodes based on the selected set of nodes and relationships of nodes of the selected set of nodes with other nodes of the knowledge graph (which may be performed similarly as described above in reference to block 1610 of FIG. 16), and designating the resulting set of nodes as the candidate set of nodes. Accordingly, the candidate set of nodes may be determined based on one or more of the memory content, the memory types, the tags, the vectors and/or vector embeddings, the keywords, and/or the like, as described herein. In various implementations, the candidate set of nodes may be determined by a subset of, or none of, the operations as described above. For example, in various implementations, the candidate set of nodes may be determined only based on nodes having a matching memory type to the long-term memory storage request.

Similar to the operations described above in reference to block 1610 of FIG. 16, at block 1808 of FIG. 18, the candidate set of nodes may be based on 1 or more degrees of relationship to a selected set of nodes, and the candidate set of nodes may be limited to a particular quantity of nodes. For example, the candidate set of nodes may be limited to 10, 20, 30, 40, 50, and/or the like quantity of nodes. Limiting the quantity of nodes in the candidate set of nodes may advantageously prevent overly increasing complexity of the knowledge graph, which may diminish the effectiveness of long-term memory retrieval from the knowledge graph.

At block 1810, the long-term memory store service 1502 determines, from the candidate set of nodes, any nodes that are related to the memory content of the long-term memory storage request. The long-term memory store service 1502 further determines, for each of the determined related nodes, the relationships (e.g., similar to the relationship properties of the edges of the knowledge graph as described above) of those nodes with the memory content of the long-term memory storage request. Determining, from the candidate set of nodes, any related nodes and associated relationships can include, for example, prompting and LLM with the memory content and memory contents of the nodes of the candidate set of nodes, and requesting from the LLM a listing of the related nodes and the relationships between the memory content and the respective related nodes. In various implementations, determining the related nodes and/or relationships may be based on the tags associated with the long-term memory storage request and the candidate nodes.

At block 1812, the long-term memory store service 1502 adds a new node to the knowledge graph of the long-term memory store 1504 that includes the memory content of the long-term memory storage request. The new node can further include one or more properties that can include, for example, the memory type, the tags, the importance indicator, the vectors and/or vector embeddings, the keywords, and/or the like. At block 1812, the long-term memory store service 1502 further adds, for any of the determined relationships (e.g., as determined in block 1810), new edges to the knowledge graph connecting the new node with the respective related nodes. The new edges can include properties that store the respective determined relationships.

In various implementations, the long-term memory store service 1502 may further extract, from the memory content, one or more extracted tags. The long-term memory store service 1502 may utilize an LLM to extract the extracted tags. The extracted tags may be associated with the new node that is added to the knowledge graph. Determining the related nodes and/or relationships may be based on the extracted tags.

According to various implementations, the long-term memory store service 1502 may generate and/or send, and the agent or agent service 106 may receive, a response (to the long-term memory storage request). The response may indicate that the long-term memory storage request is complete.

At optional block 1814, the system (e.g., the long-term memory store service 1502 and/or the long-term memory store 1504) may compact the knowledge graph. Knowledge graph compaction may occur on demand, periodically, intermittently, and/or when some threshold or criteria are satisfied (e.g., when the knowledge graph reaches a certain size or quantity of nodes). According to various implementations, compacting the knowledge graph may include: clustering the nodes of the knowledge graph based on at least one of: memory content of the nodes, vectors or embeddings representative of memory content of the nodes, memory types of the nodes, tags of the nodes, or edge/relationships connects to the nodes; and replacing, in the knowledge graph, nodes associated with the clusters of the nodes, with respective new nodes representative of the respective clusters and storing memory content based on the memory content of the nodes of the respective clusters. Alternatively or additionally, according to various implementations, compacting the knowledge graph may include de-duplicating nodes of the knowledge graph based on prompting an LLM with memory content or other information associated with the nodes of the knowledge graph. Alternatively or additionally, according to various implementations, compacting the knowledge graph may include de-duplicating nodes of the knowledge graph based on user input or user feedback.

Accordingly to various implementations, the system (e.g., the long-term memory store 1504) initializes the long-term memory store 1504. Initializing the long-term memory store 1504 may include setting up a data store, where initial the knowledge graph is empty (e.g., does not include any nodes). Thereafter, storage of long-term memories in the knowledge graph may add in an initial set of nodes. The system may determine relationships among the initial set of nodes. The system may on demand, periodically, intermittently, and/or when some threshold or criteria are satisfied, prune the knowledge graph, and/or re-process nodes of the knowledge graph to update or re-determine memory content and/or properties (e.g., memory types, tags, vectors, keywords, importance indicators, and/or the like).

According to various implementations, the agent system that includes the long-term memory store service 1502 and/or the long-term memory store 1504 and the associated functionality (as described herein) may provide several technical advantages. These advantages can include maintaining context across AI assistant/agent sessions through knowledge graph storage instead of flat files, transforming from file-based to server-based architecture serving multiple agents simultaneously, hybrid retrieval combining semantic search and graph traversal, integrated with LLM/embedding services for advanced search operations, enabled cross-agent memory sharing, and/or the like. These advantages can further include an architecture that avoids or overcomes memory decay, which may result from writing/re-writing long-term memory files repeatedly by and LLM and/or where, as memory filed grow, the LLM's recency bias causes older information to be forgotten or less prioritized. These advantages can further include eliminating agent/LLM context window constraints (where, with compaction, memory files eventually exceed context windows as knowledge compounds), enabling flexible memory composition, allowing knowledge sharing across agents, and/or the like. Further, because the long-term memory is stored as a knowledge graph which may be traversed along relationships during memory retrieval, the system can advantageously provide both knowledge-based retrieval (e.g., finding relevant coding components, instructions, or documentation for new tasks) and reasoning-based retrieval (e.g., recalling not only content but prior reasoning steps explaining how multiple components can be combined), which can provide several further advantages such as: balance between broad knowledge activation and focused reasoning pathways, and/or implementing progressive retrieval that expands or narrows the search based on initial results. Various of the technical advantages described above and herein may be provided as compared to retrieval augmented generation ("RAG") techniques. For example, the system of the present disclosure, according to various implementations, may provide technical advantages over RAG techniques including, for example, avoiding memory decay (e.g., storing the long-term memory in the knowledge graph avoids ever increasing memory sizes and decay that can result from LLM limited attention and context windows sizes that can cause loss of information and/or memory decay over time as memory is written, read, and re-written), providing greater efficiency and effectiveness over typical sematic search (e.g., many types of data, such as code, do not have useful semantics, which can limit the effectiveness of RAG that may rely on semantic search; whereas the present long-term memory storage and retrieval approach that utilizes a knowledge graph can overcome these deficiencies because these approaches additionally use, for example, vectors, keyword searching, storage of relationships in the knowledge graph, and/or the like), avoiding isolated or fragmentary memory (e.g., memory stored in files can be fragmentary, while the knowledge graph approaches of the present disclosure can store relationships and thereby reasoning that can capture related memories and information).

Additional technical advantages that may be provided by the agent system, accordingly to various implementations, include, for example, program search and reinforcement learning (e.g., store partial code attempts or solutions as reusable components; discover "program flows" that solve entire categories of problems; use reward signals from successful code execution to refine the component library; implement verification mechanisms to ensure consistent, reliable code reuse; and/or reduce hallucinations by binding the model to verified component patterns), process-based reward signals (e.g., each step in coding is directly verifiable (did this introduce an error?), provides 10x more signal than outcome-based rewards, captures detailed reasoning traces that explain not just what works but why, and/or code-based tasks provide strong, binary feedback at each compilation or test), and/or interpretable memory (memory files are written in natural language, humans can directly inspect and understand the agent's knowledge, makes debugging and improvement transparent, and/or creates accountability through visible reasoning).

### Additional Example Implementations and Details

In various implementations, the system (e.g., one or more aspects of the agent system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 14) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 14 shows a block diagram that illustrates a computer system 1400 upon which various implementations and/or aspects (e.g., one or more aspects of the computing environment 100, one or more aspects of the agent system 102, one or more aspects of the user 150, one or more aspects of the data processing service 120, one or more aspects of the LLM 130, and/or the like) may be implemented. Multiple such computer systems 1400 may be used in various implementations of the present disclosure. Computer system 1400 includes a bus 1402 or other communication mechanism for communicating information, and a hardware processor, or multiple processors, 1004 coupled with bus 1402 for processing information. Hardware processor(s) 1404 may be, for example, one or more general purpose microprocessors.

Computer system 1400 also includes a main memory 1406, such as a random-access memory (RAM), cache and/or other dynamic storage devices, coupled to bus 1402 for storing information and instructions to be executed by processor 1404. Main memory 1406 also may be used for storing temporary variables or other intermediate information during execution of instructions to be executed by processor 1404. Such instructions, when stored in storage media accessible to processor 1404, render computer system 1400 into a special-purpose machine that is customized to perform the operations specified in the instructions. The main memory 1406 may, for example, include instructions to implement server instances, queuing modules, memory queues, storage queues, user interfaces, and/or other aspects of functionality of the present disclosure, according to various implementations.

Computer system 1400 further includes a read only memory (ROM) 1408 or other static storage device coupled to bus 1402 for storing static information and instructions for processor 1404. A storage device 1410, such as a magnetic disk, optical disk, or USB thumb drive (Flash drive), and/or the like, is provided and coupled to bus 1402 for storing information and instructions.

Computer system 1400 may be coupled via bus 1402 to a display 1412, such as a cathode ray tube (CRT) or LCD display (or touch screen), for displaying information to a computer user. An input device 1414, including alphanumeric and other keys, is coupled to bus 1402 for communicating information and command selections to processor 1404. Another type of user input device is cursor control 1416, such as a mouse, a trackball, or cursor direction keys for communicating direction information and command selections to processor 1404 and for controlling cursor movement on display 1412. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1400 may include a user interface module to implement a GUI that may be stored in a mass storage device as computer executable program instructions that are executed by the computing device(s). Computer system 1400 may further, as described below, implement the techniques described herein using customized hard-wired logic, one or more ASICs or FPGAs, firmware and/or program logic which in combination with the computer system causes or programs computer system 1400 to be a special-purpose machine. According to one implementation, the techniques herein are performed by computer system 1400 in response to processor(s) 1404 executing one or more sequences of one or more computer-readable program instructions contained in main memory 1406. Such instructions may be read into main memory 1406 from another storage medium, such as storage device 1410. Execution of the sequences of instructions contained in main memory 1406 causes processor(s) 1404 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1404 for execution. For example, the instructions may initially be carried on a magnetic disk or solid-state drive of a remote computer. The remote computer can load the instructions into its dynamic memory and send the instructions over a telephone line using a modem. A modem local to computer system 1400 can receive the data on the telephone line and use an infra-red transmitter to convert the data to an infra-red signal. An infra-red detector can receive the data carried in the infra-red signal and appropriate circuitry can place the data on bus 1402. Bus 1402 carries the data to main memory 1406, from which processor 1404 retrieves and executes the instructions. The instructions received by main memory 1406 may optionally be stored on storage device 1410 either before or after execution by processor 1404.

Computer system 1400 also includes a communication interface 1418 coupled to bus 1402. Communication interface 1418 provides a two-way data communication coupling to a network link 1420 that is connected to a local network 1422. For example, communication interface 1418 may be an integrated services digital network (ISDN) card, cable modem, satellite modem, or a modem to provide a data communication connection to a corresponding type of telephone line. As another example, communication interface 1418 may be a local area network (LAN) card to provide a data communication connection to a compatible LAN (or WAN component to communicate with a WAN). Wireless links may also be implemented. In any such implementation, communication interface 1418 sends and receives electrical, electromagnetic, or optical signals that carry digital data streams representing various types of information.

Network link 1420 typically provides data communication through one or more networks to other data devices. For example, network link 1420 may provide a connection through local network 1422 to a host computer 1424 or to data equipment operated by an Internet Service Provider (ISP) 1026. ISP 1426 in turn provides data communication services through the worldwide packet data communication network now commonly referred to as the "Internet" 1028. Local network 1422 and Internet 1428 both use electrical, electromagnetic, or optical signals that carry digital data streams. The signals through the various networks and the signals on network link 1420 and through communication interface 1418, which carry the digital data to and from computer system 1400, are example forms of transmission media.

Computer system 1400 can send messages and receive data, including program code, through the network(s), network link 1420 and communication interface 1418. In the Internet example, a server 1430 might transmit a requested code for an application program through Internet 1428, ISP 1426, local network 1422 and communication interface 1418.

The received code may be executed by processor 1404 as it is received, and/or stored in storage device 1410, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A method implemented by one or more processors executing program instructions, the method comprising: providing an agent service that utilizes a plurality of agents to process one or more computational tasks, wherein an agent of the plurality of agents is configured to: receive a request to perform a computational task; establish a memory bank of the agent, wherein establishing the memory bank includes: implementing a short-term memory of the memory bank of the agent; accessing a long-term memory store that is accessible to the plurality of agents; determining, based on the computational task and by a large language model ("LLM"), at least a portion of the long-term memory store to implement in the memory bank of the agent; and implementing a long-term memory of the memory bank of the agent, wherein the long-term memory includes the determined portion of the long-term memory store; determine a tool to perform a portion of the computational task based on the memory bank of the agent, wherein the tool includes information for performing the portion of the computational task; process the portion of the computational task using the tool; and update the short-term memory of the memory bank based on the processing of the portion of the computational task.

Clause 2. The method of Clause 1, wherein implementing the short-term memory comprises generating or accessing one or more short-term memory files.

Clause 3. The method of any of Clauses 1-2, wherein the long-term memory store is accessed via a long-term memory store service.

Clause 4. The method of any of Clauses 1-3, wherein the agent is further configured to: receive an indication of one or more memory settings of the memory bank, wherein determining at least the portion of the long-term memory store is further based on the one or more memory settings.

Clause 5. The method of Clause 3, wherein the one or more memory settings include at least one of: a memory mode of the memory bank, or one or more custom instructions.

Clause 6. The method of any of Clauses 1-5, wherein the agent is further configured to: receive an indication of a compaction mode of the memory bank, wherein implementing the short-term memory of the memory bank is based on the compaction mode.

Clause 7. The method of any of Clauses 1-6, wherein implementing the long-term memory comprises copying one or more long-term memory files, or portions of one or more long-term memory files, from the long-term memory store.

Clause 8. The method of any of Clauses 1-7, wherein the long-term memory store comprises a plurality of long-term memory files accessible to the plurality of agents.

Clause 9. The method of any of Clauses 1-8, wherein the portion of the long-term memory store comprises at least one of: a portion of a long-term memory file, a long-term memory file, a plurality of long-term memory files, or portions of a plurality of long-term memory files.

Clause 10. The method of any of Clauses 1-9, wherein the agent is further configured to: determine a second tool to perform a second portion of the computational task based on the memory bank including the updated short-term memory, wherein the second tool includes information for performing the second portion of the computational task; optionally, process the second portion of the computational task using the second tool; and further update the short-term memory of the memory bank based on the processing of the second portion of the computational task.

Clause 11. The method of Clause 10, wherein the agent is further configured to: generate a processing output associated with performance of the computational task in response to processing the second portion of the computational task.

Clause 12. The method of any of Clauses 1-11, wherein the tool to perform the portion of the computational task is based on a portion of the long-term memory associated with the computational task and the short-term memory.

Clause 13. The method of any of Clauses 1-12, wherein the agent is further configured to: generate a prompt for the LLM, the prompt including at least the computational task and information regarding the long-term memory store; provide the prompt to the LLM; receive a response from the LLM in response to the prompt; and determine the portion of the long-term memory store based on the response.

Clause 14. The method of any of Clauses 1-13, wherein establishing the memory bank further includes: transferring context associated with the computational task to a memory service, optionally via an application programming interface ("API") and/or model context protocol ("MCP"), the memory service associated with memory objects defined by memory object types in an ontology.

Clause 15. The method of Clause 14, wherein: determining at least the portion of the long-term memory store includes: receiving ontology documentation associated with the ontology and one or more long-term memory objects based on the context associated with the computational task, the long-term memory objects stored in the long-term memory store and defined by a long-term memory object type in the ontology; and implementing the long-term memory of the memory bank includes: generating one or more short-term memory objects based on the ontology documentation and the long-term memory objects, the short-term memory objects defined by a short-term memory object type in the ontology.

Clause 16. The method of any of Clauses 1-15, wherein the agent is further configured to: hand off tasks to one or more sub-agents, the agent and the one or more sub-agents configured to share files from the short-term memory, the agent configured hand off to the one or more sub-agents at least a portion of the task to either determine the tool to perform the portion of the computational task or process the portion of the computational task using the tool, the agent being configurable through a first set of settings and at least one of the plurality of sub-agents being configurable through a second set of settings different from the first set of settings.

Clause 17. The method of any of Clauses 1-16, wherein processing the portion of the computational task using the tool includes: using an application programming interfac" (""PI") to access one or more data objects associated with the one or more computational tasks.

Clause 18. The method of any of Clauses 1-17 further comprising: providing an interactive graphical user interface useable for: inputting a query associated with the computational task; outputting a result of processing the computational task; and outputting indications of the memory bank.

Clause 19. A system comprising: one or more computer-readable storage mediums configured to store program instructions; and one or more processors configured to execute the program instructions to cause the system to perform the computer-implemented method of any of Clauses 1-18.

Clause 20. One or more computer-readable storage mediums configured to store program instructions, the program instructions executable by one or more processors to cause the one or more processors to perform the computer-implemented method of any of Clauses 1-18.

Clause 21. A method implemented by one or more processors executing program instructions, the method comprising: providing an agent service that utilizes a plurality of agents to process one or more computational tasks; receiving, by an agent of the plurality of agents, a request to perform a computational task; establishing a memory bank the agent, wherein the memory bank includes a short-term memory and a long-term memory, wherein the establishing comprises implementing the long-term memory based on at least a portion of a long-term memory store, and wherein the long-term memory store is shared by the plurality of agents; performing, by the agent and based on the memory bank, the computational task; updating, by the agent and based on the processing of the computational task, the short-term memory of the memory bank; and updating the long-term memory store based on the updated short-term memory of the memory bank.

Clause 22. The method of Clause 21, wherein the long-term memory store is updated further based on the long-term memory of the memory bank.

Clause 23. The method of any of Clauses 21-22, wherein updating the long-term memory store comprises: determining updated long-term memory based at least in part on the updated short-term memory; and causing storing of the updated long-term memory in the long-term memory store.

Clause 24. The method of Clause 23, wherein determining updated long-term memory comprises: generating a prompt for a large language mode" (""LM"), the prompt including at least the updated short-term memory and the long-term memory; providing the prompt to the LLM; receiving a response from the LLM in response to the prompt, the response including the updated long-term memory.

Clause 25. The method of any of Clauses 23-24, wherein causing storing of the updated long-term memory in the long-term memory store comprises at least one of: adding the updated long-term memory to the long-term memory store, or replacing a long-term memory in the long-term memory store with the updated long-term memory. 2626. The method of any of Clauses 21-6 further comprising: receiving an indication of one or more memory settings of the memory bank, wherein updating the long-term memory store is further based on the one or more memory settings.

Clause 27. The method of Clause 26, wherein the one or more memory settings include at least one of: a memory mode of the memory bank, one or more custom instructions, or a compaction mode of the memory bank.

Clause 28. The method of any of Clauses 26-27, wherein the one or more memory settings includes a compaction mode of the memory bank, and wherein updating the long-term memory store comprises: determining updated long-term memory based at least in part on the updated short-term memory and the compaction mode.

Clause 29. The method of Clause 28, wherein the compaction mode comprises at least one of: a verbose compaction mode, a progressive summarization compaction mode, or a maximal compression compaction mode; wherein the one or more short-term memory files associated with the verbose compaction mode comprises at least a project brief file, a context file, an agent pattern file, and a progress file; wherein the one or more short-term memory files associated with the progressive summarization compaction mode comprises at least the project brief file, the context file, the agent pattern file, and the progress file, the one or more short-term memory files associated with the progressive summarization compaction mode not including diagrams; and wherein the one or more short-term memory files associated with the maximal compression compaction mode comprises at least the project brief file, the project brief associated with the maximal compression compaction mode comprising recent information, recent history, and a background context.

Clause 30. The method of any of Clauses 21-29, wherein updating the long-term memory store is based on learnings associated with performing the computational task that differ from prior learnings currently associated with the long-term memory store.

Clause 31. The method of any of Clauses 21-30, wherein updating the long-term memory store is in response to receiving a trigger to update.

Clause 32. The method of Clause 31, wherein the trigger comprises at least one of: determining a new project pattern, implementing a significant change, receiving a request for clarification, or receiving a user request for an update, wherein in response to receiving the user request for the update, each file in the memory bank is accessed prior to updating the long-term memory store.

Clause 33. The method of Clause 32, wherein performing the computational task includes implementing the significant change.

Clause 34. The method of any of Clauses 21-33, wherein in response to performing the computational task, the request for clarification is received from the agent.

Clause 35. The method of any one of Clauses 21-34 further comprising: storing a copy of a current state of the long-term memory store prior to updating the long-term memory store.

Clause 36. The method of any one of Clauses 21-35, wherein: updating the short-term memory comprises: updating one or more short-term memory objects based on the processing of the computational task, the one or more short-term memory objects generated based on ontology documentation and one or more long-term memory objects, the ontology documentation associated with the ontology and one or more long-term memory objects based on context associated with the computational task, and updating the long-term memory store based on the updated short-term memory comprises: transferring the one or more updated short-term memory objects to a memory service, optionally via an application programming interface ("API") and/or model context protocol ("MCP"); processing the one or more updated short-term memory objects to extract a learning; updating at least one of the one or more long-term memory objects using the learning; storing in the memory service the one or more updated long-term memory objects, which are defined by a long-term memory object type in an ontology; and storing in the long-term memory store a change between the one or more long-term memory objects and the one or more updated long-term memory objects as a checkpoint object, which is defined by a checkpoint object type in the ontology.

Clause 37. The method of any of Clauses 21-36, wherein the short-term memory comprises one or more short-term memory files, and wherein the long-term memory comprises one or more long-term memory files.

Clause 38. The method of any of Clauses 21-37 further comprising: providing an interactive graphical user interface useable for: inputting a query associated with the computational task; outputting a result of processing the computational task; and outputting indications of the memory bank.

Clause 39. A system comprising: one or more computer-readable storage mediums configured to store program instructions; and one or more processors configured to execute the program instructions to cause the system to perform the computer-implemented method of any of Clauses 21-38.

Clause 40. One or more computer-readable storage mediums configured to store program instructions, the program instructions executable by one or more processors to cause the one or more processors to perform the computer-implemented method of any of Clauses 21-38.

Clause 41. A method implemented by one or more processors executing program instructions, the method comprising: providing an agent service that utilizes a plurality of agents to process one or more computational tasks; receiving, by an agent of the plurality of agents, a request to perform a computational task; receiving, by the agent, an indication of a memory mode of a plurality of memory modes; establishing a memory bank of the agent, wherein establishing the memory bank includes: implementing a short-term memory of the memory bank of the agent; accessing a long-term memory store that is accessible to the plurality of agents; determining, based on the memory mode, at least a portion of the long-term memory store to implement in the memory bank of the agent; and implementing a long-term memory of the memory bank of the agent, wherein the long-term memory includes the determined portion of the long-term memory store; determining, by the agent and based on the short-term memory and the long-term memory of the memory bank, operations to perform at least a portion of the computational task.

Clause 42. The method of Clause 41, wherein implementing the short-term memory comprises generating or accessing one or more short-term memory files.

Clause 43. The method of any of Clauses 41-42, wherein the long-term memory store is accessed via a long-term memory store service.

Clause 44. The method of any of Clauses 41-43, wherein the memory mode is associated with the computational task.

Clause 45. The method of any of Clauses 41-44 further comprising: performing the operations, including using a large language model ("LLM").

Clause 46. The method of any of Clauses 41-45 further comprising: receiving an indication of a compaction mode of the memory bank, wherein implementing the short-term memory of the memory bank is based on the compaction mode.

Clause 47. The method of any of Clauses 41-46, wherein implementing the long-term memory comprises copying one or more long-term memory files, or portions of one or more long-term memory files, from the long-term memory store.

Clause 48. The method of any of Clauses 41-47, wherein the long-term memory store comprises a plurality of long-term memory files accessible to the plurality of agents.

Clause 49. The method of any of Clauses 41-48, wherein the portion of the long-term memory store comprises at least one of: a portion of a long-term memory file, a long-term memory file, a plurality of long-term memory files, or portions of a plurality of long-term memory files.

Clause 50. The method of any of Clauses 41-49, wherein the memory modes include at least one of: a transform mode, a function mode, or an OSDK mode.

Clause 51. The method of any of Clauses 41-50, wherein the memory mode comprises a transform mode, and wherein the long-term memory includes at least a transform documentation file.

Clause 52. The method of any of Clauses 41-50, wherein the memory mode comprises an OSDK mode, and wherein the long-term memory includes at least an ontology documentation file associated with data objects defined by data object types in an ontology, the data object types associated with the computational tasks.

Clause 53. The method of Clause 52 further comprising: in response to receiving the indication of the memory mode being the OSDK mode, implementing the short-term memory by using a large language model ("LLM") to access a pattern file, the pattern file associated with an application programming interface ("API") used to access data objects defined by an ontology and associated with the computational task, the OSDK mode being associated with the data object types.

Clause 54. The method of any one of Clauses 41-53 further comprising: receiving a memory hierarchy, wherein determining the operations further is based on accessing the short-term memory and the long-term memory based on the memory hierarchy.

Clause 55. The method of Clause 54, wherein the short-term memory comprises at least one or more project brief file, one or more agent pattern file, one or more context file, and one or more progress file, and wherein accessing the short-term memory and the long-term memory based on the memory hierarchy comprises weighing the first memory files more than the project brief files, weighing the project brief files over the agent pattern files, weighing the agent patterns files over the context files, and weighing the context files over the progress files.

Clause 56. The method of any of Clauses 41-55 further comprising: providing an interactive graphical user interface useable for: inputting a query associated with the computational task; and inputting the indication of the memory mode.

Clause 57. The method of Clause 56, wherein the interactive graphical user interface is useable for outputting an indication of the operations.

Clause 58. A system comprising: one or more computer-readable storage mediums configured to store program instructions; and one or more processors configured to execute the program instructions to cause the system to perform the computer-implemented method of any of Clauses 41-57.

Clause 59. One or more computer-readable storage mediums configured to store program instructions, the program instructions executable by one or more processors to cause the one or more processors to perform the computer-implemented method of any of Clauses 41-57.

Clause 60. A computer-implemented method, performed by one or more hardware computer processors executing program instructions, comprising: receiving, by a long-term memory store service, and from an agent, a long-term memory retrieval request, wherein the long-term memory retrieval request includes at least: a query, and indications of one or more memory types; executing, by the long-term memory store service, the long-term memory retrieval request, wherein executing the long-term memory retrieval request includes: accessing a knowledge graph, wherein the knowledge graph comprises nodes storing memory content, and wherein the knowledge graph further comprises edges connecting related nodes and storing relationships among the memory content associated with the related nodes; determining a filtered set of nodes from the knowledge graph based on the one or more memory types; determining a selected set of nodes from the filtered set of nodes based on the query; determining a resulting set of nodes based on the selected set of nodes and relationships of nodes of the selected set of nodes with other nodes of the knowledge graph; and aggregating memory content of the resulting set of nodes to generate a long-term memory response; and providing, by the long-term memory store service, and to the agent, the long-term memory response in response to the long-term memory retrieval request.

Clause 61. The computer-implemented method of Clause 60, wherein: the nodes of the knowledge graph are associated with respective memory types; and determining the filtered set of nodes includes: determining matches or similarities between the one or more memory types of the long-term memory retrieval request and one or more memory types associated with the nodes of the knowledge graph; and selecting the filtered set of nodes based on the determined matches or similarities.

Clause 62. The computer-implemented method of any of Clauses 60-61, wherein the memory types include at least one of: code patterns, documentation, reasoning traces, or system architecture.

Clause 63. The computer-implemented method of any of Clauses 61-62, wherein: the nodes of the knowledge graph are associated with respective sets of tags; executing the long-term memory retrieval request further includes: determining one or more tags associated with the query; and determining the filtered set of nodes further includes: determining matches or similarities between one or more tags associated with the query and one or more tags associated with the nodes of the knowledge graph; and selecting the filtered set of nodes based on the determined matches or similarities.

Clause 64. The computer-implemented method of Clause 63, wherein determining the one or more tags associated with the query includes: prompting a large language model ("LLM") with the query and requesting a listing of proposed tags.

Clause 65. The computer-implemented method of any of Clauses 60-64, wherein: the nodes of the knowledge graph are associated with respective vectors representative of the respective memory content; executing the long-term memory retrieval request further includes: determining a vector associated with the query; and determining the selected set of nodes includes: performing a semantic search or vector search based on the vector associated with the query and the vectors associated with the nodes of the knowledge graph to select the selected set of nodes that have vectors similar to the vector associated with the query.

Clause 66. The computer-implemented method of any of Clauses 60-65, wherein: executing the long-term memory retrieval request further includes: determining keywords associated with the query; and determining the selected set of nodes includes: performing a keyword search based on the keywords associated with the query and the memory content stored by the nodes of the knowledge graph to select the selected set of nodes that have keyword similarity with the query.

Clause 67. The computer-implemented method of Clause 66 when dependent on Clause 6, wherein determining the selected set of nodes further includes: selecting the selected set of nodes based on an intersection between nodes identified by the keyword search and nodes identified by the semantic search or vector search.

Clause 68. The computer-implemented method of any of Clauses 60-67, wherein determining the resulting set of nodes includes: for each of the nodes of the selected set of nodes: identifying related nodes in the knowledge graph by traversing any edges from the node to any connected nodes; and designating the selected set of nodes and the related nodes as the resulting set of nodes.

Clause 69. The computer-implemented method of Clause 68, wherein determining the resulting set of nodes further includes: for each of the nodes of the related nodes: identifying further related nodes in the knowledge graph by traversing any edges from the node to any further connected nodes; and designating the selected set of nodes, the related nodes, and the further related nodes as the resulting set of nodes.

Clause 70. The computer-implemented method of any of Clauses 68-69, wherein identifying related nodes includes: analyzing relationships associated with the traversed edges so as to traverse only edges, and thereby identify only nodes, that satisfy relationship criteria.

Clause 71. The computer-implemented method of Clause 70, wherein the relationship criteria is determined based on at least one of: the query, tags associated with the query, keywords associated with the query, or the one or more memory types.

Clause 72. The computer-implemented method of any of Clauses 60-71, wherein: the long-term memory retrieval request further includes: a results limit; and determining the resulting set of nodes further includes: ranking the nodes of the resulting set of nodes based on ranking criteria and/or importance indicators associated with the nodes of the resulting set of nodes; and limiting the resulting set of nodes to a quantity of highest ranking nodes that is less than or equal to the results limit.

Clause 73. The computer-implemented method of Clause 72, wherein the ranking criteria is at least one of: a similarity of, or a confidence of similarity of, the nodes to the query as indicated by a keyword search and/or a semantic search or vector search, or the importance indicators.

Clause 74. The computer-implemented method of any of Clauses 60-73 further comprising: generating, by the agent, the long-term memory retrieval request, wherein generating the long-term memory retrieval request includes: generating a prompt for a large language model ("LLM") including at least: an indication of a computational task to be performed, and a request to generate the long-term memory retrieval request including at least the query and the indications of one or more memory types; providing the prompt to the LLM; and receiving a response from the LLM that is responsive to the prompt, wherein the response includes the long-term memory retrieval request.

Clause 75. The computer-implemented method of any of Clauses 60-74 further comprising: receiving, by the agent, the long-term memory response; and incorporating, by the agent, the long-term memory response into a context associated with a computational task to be performed.

Clause 76. The computer-implemented method of any of Clauses 60-75, wherein the long-term memory store service provides long-term memory storage and retrieval services for a plurality of agents and enables cross-agent sharing of long-term memory.

Clause 77. A system comprising: one or more computer-readable storage mediums configured to store program instructions; and one or more processors configured to execute the program instructions to cause the system to perform the computer-implemented method of any of Clauses 60-76.

Clause 78. One or more computer-readable storage mediums configured to store program instructions, the program instructions executable by one or more processors to cause the one or more processors to perform the computer-implemented method of any of Clauses 60-76.

Clause 79. A computer-implemented method, performed by one or more hardware computer processors executing program instructions, comprising: receiving, by a long-term memory store service, and from an agent, a long-term memory storage request, wherein the long-term memory storage request includes at least: memory content, and indications of one or more memory types; and executing, by the long-term memory store service, the long-term memory storage request, wherein executing the long-term memory storage request includes: extracting, from the memory content, one or more entities; accessing a knowledge graph, wherein the knowledge graph comprises nodes storing memory content, and wherein the knowledge graph further comprises edges connecting related nodes and storing relationships among the memory content associated with the related nodes; determining a candidate set of nodes from the knowledge graph based on the one or more memory types and the one or more entities; determining, from the candidate set of nodes: any related nodes having a relationship with the memory content; and relationships between the memory content and the respective related nodes; and adding, to the knowledge graph: a new node storing the memory content; and for any determined relationships, new edges connecting the new node with the respective related nodes, wherein the new edges store the respective determined relationships.

Clause 80. The computer-implemented method of Clause 79, wherein extracting the one or more entities includes: prompting a large language model ("LLM") with the memory content and requesting a listing of the one or more entities.

Clause 81. The computer-implemented method of any of Clauses 79-80, wherein: the long-term memory storage request further includes: one or more tags; and executing the long-term memory storage request includes: adding, to the knowledge graph: the one or more tags associated with the new node.

Clause 82. The computer-implemented method of Clause 81, wherein determining the candidate set of nodes is further based on the one or more tags.

Clause 83. The computer-implemented method of any of Clauses 81-82, wherein determining related nodes is based at least in part on the one or more tags.

Clause 84. The computer-implemented method of any of Clauses 79-83, wherein executing the long-term memory storage request includes: extracting, from the memory content, one or more extracted tags; and adding, to the knowledge graph: the one or more extracted tags associated with the new node.

Clause 85. The computer-implemented method of Clause 84, wherein determining the candidate set of nodes is further based on the one or more extracted tags.

Clause 86. The computer-implemented method of any of Clauses 84-85, wherein determining related nodes is based at least in part on the one or more extracted tags.

Clause 87. The computer-implemented method of any of Clauses 79-86, wherein: the long-term memory storage request further includes: an importance indicator; and executing the long-term memory storage request includes: adding, to the knowledge graph: the importance indicator associated with the new node.

Clause 88. The computer-implemented method of any of Clauses 79-87, wherein a relationship of the relationships includes at least one of: implements, extends, requires, or defines.

Clause 89. The computer-implemented method of any of Clauses 79-88, wherein determining any related nodes and relationships includes: prompting a large language model ("LLM") with the memory content and memory contents of the nodes of the candidate set of nodes, and requesting a listing of the related nodes and the relationships between the memory content and the respective related nodes.

Clause 90. The computer-implemented method of any of Clauses 79-89, wherein determining the candidate set of nodes from the knowledge graph includes: determining a filtered set of nodes from the knowledge graph based on the one or more memory types; determining a selected set of nodes from the filtered set of nodes based on the memory content; determining a resulting set of nodes based on the selected set of nodes and relationships of nodes of the selected set of nodes with other nodes of the knowledge graph; and designating the resulting set of nodes as the candidate set of nodes.

Clause 91. The computer-implemented method of any of Clauses 79-90, wherein the candidate set of nodes is limited to a particular quantity of nodes.

Clause 92. The computer-implemented method of any of Clauses 79-91 further comprising: compacting the knowledge graph.

Clause 93. The computer-implemented method of Clause 92, wherein compacting the knowledge graph includes: clustering the nodes of the knowledge graph based on at least one of: memory content of the nodes, vectors or embeddings representative of memory content of the nodes, memory types of the nodes, tags of the nodes, or edge/relationships connects to the nodes; and replacing the clusters of the nodes with respective new nodes representative of the respective clusters and storing memory content based on the memory content of the nodes of the respective clusters.

Clause 94. The computer-implemented method of any of Clauses 92-93, wherein compacting the knowledge graph includes: de-duplicating based on prompting a large language model ("LLM") with memory content or other information associated with the nodes of the knowledge graph.

Clause 95. The computer-implemented method of any of Clauses 92-94, wherein compacting the knowledge graph includes: de-duplicating based on user input or user feedback.

Clause 96. The computer-implemented method of any of Clauses 79-95 further comprising: generating, by the agent, the long-term memory storage request, wherein generating the long-term memory storage request includes: generating a prompt for a large language model ("LLM") including at least: a portion of a short-term memory generated at least in part by performance of a computational task by the agent, and a request to generate the long-term memory storage request including at least the memory content and the indications of one or more memory types; providing the prompt to the LLM; and receiving a response from the LLM that is responsive to the prompt, wherein the response includes the long-term memory storage request.

Clause 97. The computer-implemented method of any of Clauses 79-96 further comprising: providing, by the long-term memory store service, an indication that the long-term memory storage request is complete; and receiving, by the agent, the indication that the long-term memory storage request is complete.

Clause 98. The computer-implemented method of any of Clauses 79-97, wherein the long-term memory store service provides long-term memory storage and retrieval services for a plurality of agents and enables cross-agent sharing of long-term memory.

Clause 99. A system comprising: one or more computer-readable storage mediums configured to store program instructions; and one or more processors configured to execute the program instructions to cause the system to perform the computer-implemented method of any of Clauses 79-98.

Clause 100. One or more computer-readable storage mediums configured to store program instructions, the program instructions executable by one or more processors to cause the one or more processors to perform the computer-implemented method of any of Clauses 79-98.

## Claims

1. A computer-implemented method, performed by one or more hardware computer processors executing program instructions, comprising:
receiving, by a long-term memory store service, and from an agent, a long-term memory retrieval request, wherein the long-term memory retrieval request includes at least: a query, and indications of one or more memory types;
executing, by the long-term memory store service, the long-term memory retrieval request, wherein executing the long-term memory retrieval request includes:
accessing a knowledge graph, wherein the knowledge graph comprises nodes storing memory content, and wherein the knowledge graph further comprises edges connecting related nodes and storing relationships among the memory content associated with the related nodes;
determining a filtered set of nodes from the knowledge graph based on the one or more memory types;
determining a selected set of nodes from the filtered set of nodes based on the query;
determining a resulting set of nodes based on the selected set of nodes and relationships of nodes of the selected set of nodes with other nodes of the knowledge graph; and
aggregating memory content of the resulting set of nodes to generate a long-term memory response; and
providing, by the long-term memory store service, and to the agent, the long-term memory response in response to the long-term memory retrieval request.

2. The computer-implemented method of Claim 1, wherein:
the nodes of the knowledge graph are associated with respective memory types; and
determining the filtered set of nodes includes:
determining matches or similarities between the one or more memory types of the long-term memory retrieval request and one or more memory types associated with the nodes of the knowledge graph; and
selecting the filtered set of nodes based on the determined matches or similarities.

3. The computer-implemented method of Claim 1 or Claim 2, wherein the memory types include at least one of: code patterns, documentation, reasoning traces, or system architecture.

4. The computer-implemented method of Claim 2 or any claim dependent thereon, wherein:
the nodes of the knowledge graph are associated with respective sets of tags;
executing the long-term memory retrieval request further includes:
determining one or more tags associated with the query; and determining the filtered set of nodes further includes:
determining matches or similarities between one or more tags associated with the query and one or more tags associated with the nodes of the knowledge graph; and
selecting the filtered set of nodes based on the determined matches or similarities, wherein optionally determining the one or more tags associated with the query includes:
prompting a large language model ("LLM") with the query and requesting a listing of proposed tags.

5. The computer-implemented method of any preceding Claim, wherein:
the nodes of the knowledge graph are associated with respective vectors representative of the respective memory content;
executing the long-term memory retrieval request further includes:
determining a vector associated with the query; and
determining the selected set of nodes includes:
performing a semantic search or vector search based on the vector associated with the query and the vectors associated with the nodes of the knowledge graph to select the selected set of nodes that have vectors similar to the vector associated with the query.

6. The computer-implemented method of any preceding Claim, wherein:
executing the long-term memory retrieval request further includes:
determining keywords associated with the query; and
determining the selected set of nodes includes:
performing a keyword search based on the keywords associated with the query and the memory content stored by the nodes of the knowledge graph to select the selected set of nodes that have keyword similarity with the query.

7. The computer-implemented method of Claim 6 when dependent on Claim 5, wherein determining the selected set of nodes further includes:
selecting the selected set of nodes based on an intersection between nodes identified by the keyword search and nodes identified by the semantic search or vector search.

8. The computer-implemented method of any preceding Claim, wherein determining the resulting set of nodes includes:
for each of the nodes of the selected set of nodes:
identifying related nodes in the knowledge graph by traversing any edges from the node to any connected nodes; and
designating the selected set of nodes and the related nodes as the resulting set of nodes, wherein optionally determining the resulting set of nodes further includes:
for each of the nodes of the related nodes:
identifying further related nodes in the knowledge graph by traversing any edges from the node to any further connected nodes; and
designating the selected set of nodes, the related nodes, and the further related nodes as the resulting set of nodes.

9. The computer-implemented method of Claim 8, wherein identifying related nodes includes:
analyzing relationships associated with the traversed edges so as to traverse only edges, and thereby identify only nodes, that satisfy relationship criteria, wherein optionally the relationship criteria is determined based on at least one of: the query, tags associated with the query, keywords associated with the query, or the one or more memory types.

10. The computer-implemented method of any of any preceding Claim, wherein:
the long-term memory retrieval request further includes: a results limit; and
determining the resulting set of nodes further includes:
ranking the nodes of the resulting set of nodes based on ranking criteria and/or importance indicators associated with the nodes of the resulting set of nodes; and
limiting the resulting set of nodes to a quantity of highest ranking nodes
that is less than or equal to the results limit,
wherein optionally the ranking criteria is at least one of: a similarity of, or a confidence of similarity of, the nodes to the query as indicated by a keyword search and/or a semantic search or vector search, or the importance indicators.

11. The computer-implemented method of any preceding Claim further comprising:
generating, by the agent, the long-term memory retrieval request, wherein generating the long-term memory retrieval request includes:
generating a prompt for a large language model ("LLM") including at least: an indication of a computational task to be performed, and a request to generate the long-term memory retrieval request including at least the query and the indications of one or more memory types;
providing the prompt to the LLM; and
receiving a response from the LLM that is responsive to the prompt, wherein the response includes the long-term memory retrieval request.

12. The computer-implemented method of any preceding Claim, wherein the long-term memory store service provides long-term memory storage and retrieval services for a plurality of agents and enables cross-agent sharing of long-term memory.

13. A computer-implemented method, performed by one or more hardware computer processors executing program instructions, comprising:
receiving, by a long-term memory store service, and from an agent, a long-term memory storage request, wherein the long-term memory storage request includes at least: memory content, and indications of one or more memory types; and
executing, by the long-term memory store service, the long-term memory storage request, wherein executing the long-term memory storage request includes:
extracting, from the memory content, one or more entities;
accessing a knowledge graph, wherein the knowledge graph comprises nodes storing memory content, and wherein the knowledge graph further comprises edges connecting related nodes and storing relationships among the memory content associated with the related nodes;
determining a candidate set of nodes from the knowledge graph based on the one or more memory types and the one or more entities;
determining, from the candidate set of nodes:
any related nodes having a relationship with the memory content; and
relationships between the memory content and the respective related nodes; and
adding, to the knowledge graph:
a new node storing the memory content; and
for any determined relationships, new edges connecting the new node with the respective related nodes, wherein the new edges store the respective determined relationships.

14. A system comprising:
one or more computer-readable storage mediums configured to store program instructions; and
one or more processors configured to execute the program instructions to cause the system to perform the computer-implemented method of any of preceding Claim.

15. One or more computer-readable storage mediums configured to store program instructions, the program instructions executable by one or more processors to cause the one or more processors to perform the computer-implemented method of any of Claims 1-13.
